# EUROPÄISCHE PATENTSCHRIFT

(11) **EP 4 135 992 B1**
(45) Veröffentlichungstag und Bekanntmachung des Hinweises auf die Patenterteilung: **20.03.2024**
(21) Anmeldenummer: 21762327.1
(22) Anmeldetag: 06.09.2021
(51) Int. Cl.: B60K 1/02, B60K 17/04, B60K 7/00

(54) **KOMPAKTER ANTRIEBSBLOCK EINES ELEKTROMOTORISCHEN KFZ-ANTRIEBS, INSBESONDERE MIT INVERTERBLOCK BZW. MIT PARKSPERRENVORRICHTUNG**
COMPACT DRIVE BLOCK OF AN ELECTRIC MOTOR-DRIVEN MOTOR VEHICLE DRIVE, IN PARTICULAR WITH AN INVERTER BLOCK OR A PARKING BRAKE DEVICE
BLOC D'ENTRAÎNEMENT COMPACT D'UN ENTRAÎNEMENT DE VÉHICULE À MOTEUR ÉLECTRIQUE, NOTAMMENT DOTÉ D'UN BLOC INVERSEUR OU D'UN DISPOSITIF DE FREIN DE STATIONNEMENT

(30) Priorität: 04.09.2020 DE 202020105111 U; 04.09.2020 DE 202020105114 U; 12.08.2021 DE 202021104326 U
(43) Veröffentlichungstag der Anmeldung: 22.02.2023
(73) Patentinhaber: hofer powertrain innovation GmbH, 72622 Nürtingen (DE)
(72) Erfinder: SCHNEIDER, Severin, 78144 Tennenbronn (DE)
(74) Vertreter: Cremer & Cremer
(86) Internationale Anmeldenummer: PCT/EP2021/074496
(87) Internationale Veröffentlichungsnummer: WO 2022/049285

(56) Entgegenhaltungen:
- EP-A1- 3 463 958
- EP-B1- 3 463 958
- EP-B1- 3 587 157
- WO-A1-2017/211793
- DE-A1-102012 112 377
- DE-U1-202018 103 672
- US-A1- 2007 213 160
- US-A1- 2016 039 277

## Beschreibung

Die vorliegende Erfindung behandelt einen Antriebsblock eines elektromotorischen Kfz-Antriebs mit zwei Elektromaschinen und jeweils einem Getriebe, die zumindest teilweise in einer Längsfahrzeugrichtung deckend zueinander angeordnet sind, wobei die Positionen der beiden Rotationswellen der beiden Elektromaschinen und ein Getriebeabtrieb eine zueinander versetzte Anordnung bilden, die längs einer Wellenrichtung betrachtet als eine V-Anordnung erscheint.

Mit anderen Worten, die vorliegende Erfindung behandelt einen Antriebsblock nach dem Oberbegriff von Anspruch 1.

### Technisches Gebiet

Besonders interessant sind Antriebsstränge, durch die elektrische Radantriebe für die beiden Straßenräder einer Fahrzeugachse mithilfe von zwei Elektromaschinen realisierbar sind. Sogenannte Einzelradelektroantriebe als ein Beispiel für derartige Antriebe bieten die Möglichkeit des elektrischen "torque vectoring". Bezüglich der Anordnung ihrer Komponenten und ihrer Wirkweisen können gepaarte Einzelradelektroantriebe auf verschiedene Arten und Weisen realisiert werden.

Manche Einzelradantriebe werden, so wie u. a. in der DE 10 2014 214 821 A1 (Anmelderin: Schaeffler Technologies GmbH & Co. KG; Offenlegungstag: 12.02.2015) beschrieben, durch Radnabenmotoren aufgebaut. Bei Antriebskonzepten mit Radnabenmotoren benötigen die Entwickler solcher Antriebskonzepte Bauraum an jedem anzutreibenden Rad, weil, so wie auch aus den beiden Figuren der DE 10 2014 214 821 A1 ersichtlich, Motor, Getriebe und ggf. weitere Komponenten des Antriebs unmittelbar neben dem anzutreibenden Rad in einem Kraftfahrzeug einzubauen sind.

Daher ist es für die Substitution von Verbrennungskraftmaschinen in fertig entwickelten Kraftfahrzeugen durch Elektroantriebe in vielen Fällen einfacher, blockartige bzw. zentralisiert angeordnete Antriebseinheiten für die vormalige Position der Verbrennungskraftmaschine und ihrer Komponenten und Anbauteile vorzusehen.

Auf der einen Seite sind zu Blöcken zusammengeschlossene Einzelradantriebe bekannt, bei denen jeweils einer von zwei Motoren über ein gemeinsames Twin-Getriebe, das das verbindende, den Block bildende Zwischenbauteil ist, eines der beiden Räder einer Achse eines Kraftfahrzeugs antreiben kann, so wie z. B. in den deutschen Gebrauchsmustern DE 20 2019 103 770 U1 (Inhaberin: hofer powertrain innovation GmbH), DE 20 2019 103 771 U1 (Inhaberin: hofer powertrain innovation GmbH), DE 20 2019 103 778 U1 (Inhaberin: hofer powertrain innovation GmbH), DE 20 2019 103 779 U1 (Inhaberin: hofer powertrain innovation GmbH) und DE 20 2019 103 781 U1 (Inhaberin: hofer powertrain innovation GmbH) beschrieben.

Auf der anderen Seite gibt es das Konzept, zwei voneinander getrennte Motoren in Fahrzeuglängsachse zumindest teilweise überdeckend anzuordnen und an ihren Stirnseiten jeweils ein eigenes, von dem anderen Getriebe abgesetztes Getriebe für die Drehzahlreduktion der Motordrehzahl auf eine Raddrehzahl oder auf eine Drehzahl, die zumindest der Raddrehzahl angenähert ist, vorzusehen, wie z. B. in der WO 2017/211 793 A1 (Anmelderin: Punch Powertrain N.V.; Veröffentlichungstag: 14.12.2017), in der DE 10 2010 010 438 A1 (Anmelderin: Dr. Ing. h.c. F. Porsche AG; Offenlegungstag: 01.09.2011) oder auch in der EP 3 587 157 B1 (Patentinhaberin: hofer powertrain innovation GmbH; Offenlegungstag: 01.01.2020) vorgestellt.

Während die WO 2017/211 793 A1 und die DE 10 2010 010 438 A1 noch davon ausgehen, dass ein Motor an einer Kraftfahrzeugachse nur dafür verwendet werden kann, jeweils ein Rad anzutreiben, zeigt die EP 3 587 157 B1 auf, dass die axial hintereinander, von Getrieben seitlich eingefassten beiden Motoren auch so arrangiert werden können, dass wahlweise ein Motor zwei Räder an einer gleichen Achse antreibt, jedoch auch ein Einzelradantrieb bei einem solchen Arrangement möglich ist.

Für solche, auch mit dem Schlagwort "Sandwich-Bauweise" aufgrund der seitlichen Einfassung durch die Getriebe bezeichneten Anordnungen von Einzelradantrieben zu einem Antriebsblock ergibt sich häufig, insbesondere bei kompakteren Fahrzeugen oder bei Sportwagen, ein Bauraumproblem.

### Stand der Technik

In der DE 10 2014 214 821 A1 (Anmelderin: Schaeffler Technologies GmbH & Co. KG; Offenlegungstag: 12.02.2015) wird ein Radnabenantrieb mit zwei Elektromotoren an einer Hinterachse beschrieben. Die Offenlegungsschrift macht sich am Ende ihrer Beschreibung darüber Gedanken, wie eine entsprechende Einzelradantriebseinrichtung zusätzlich auszustatten ist, um die Radantriebseinrichtung zu bremsen. Hierbei werden eine Scheibenbremse, eine Trommelbremse und eine Parksperre als Möglichkeiten zum Abbremsen eines mit entsprechenden Einzelradantriebseinrichtungen ausgestatteten Fahrzeugs angesprochen.

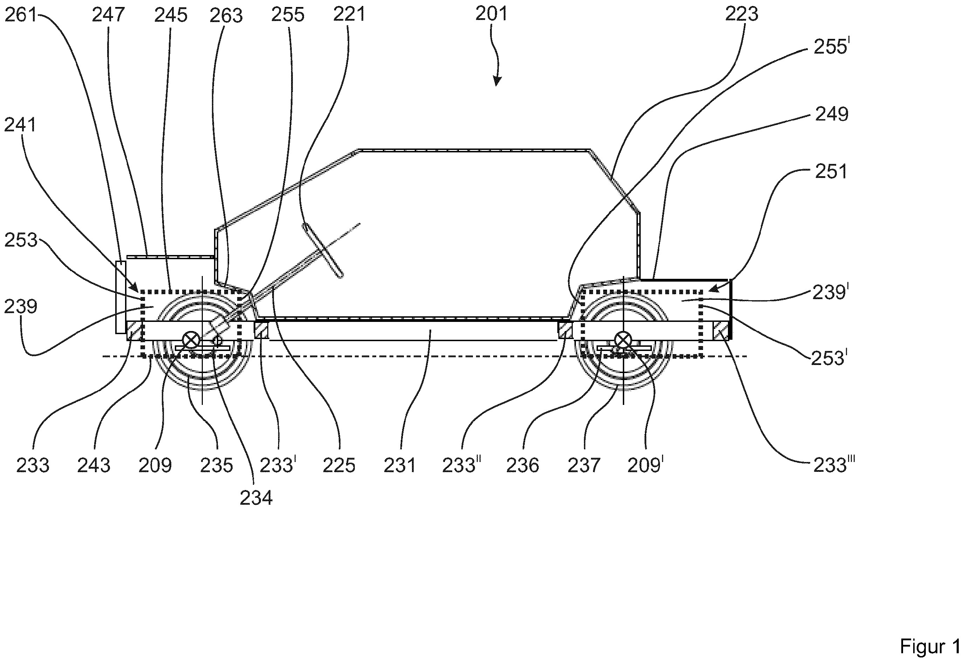

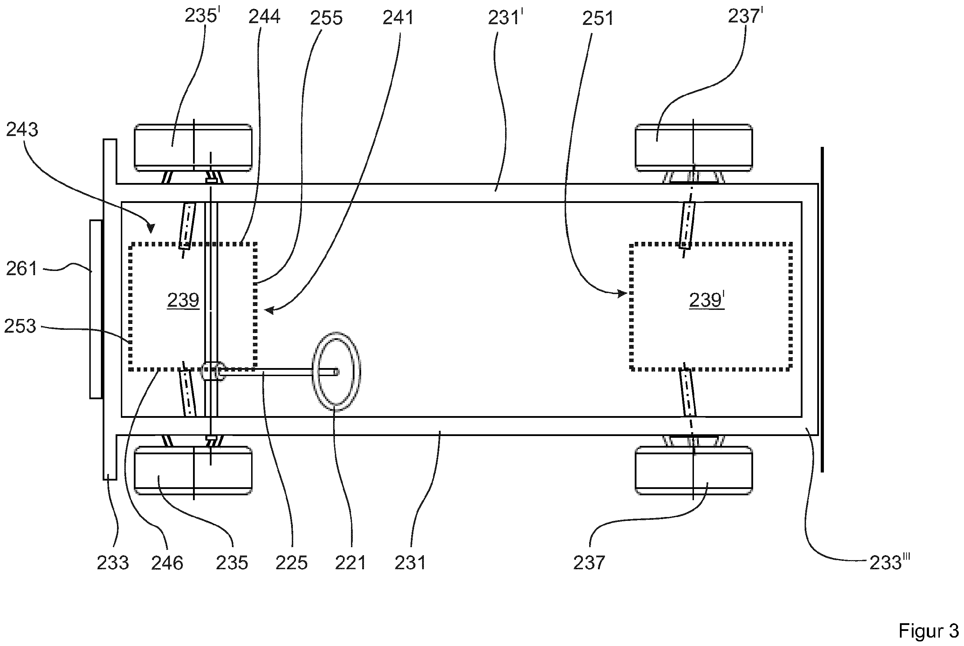

Ein Einzelradantrieb mit einer Bremse wird in der DE 10 2010 007 066 A1 (Anmelderin: Rheinmetall Landsysteme GmbH; Veröffentlichungstag: 11.08.2011) behandelt, die u. a. einen Achsbaustein für ein aus mehreren Fahrzeugmodulen zusammensetzbares, gepanzertes Radfahrzeug näher beschreibt. Wie in Figur 1 gezeigt wird, beherbergt eine durch ein Lagergestell in zwei Bauräume aufgeteilte Wanne zwei Achsgetriebe, die von zwei separat ausgeführten, oben angeordneten Elektromotoren angetrieben werden. In einem Querschacht soll sich eine nur in Figur 3 schematisch angedeutete Feststellbremse mit entsprechenden Bremsscheiben befinden.

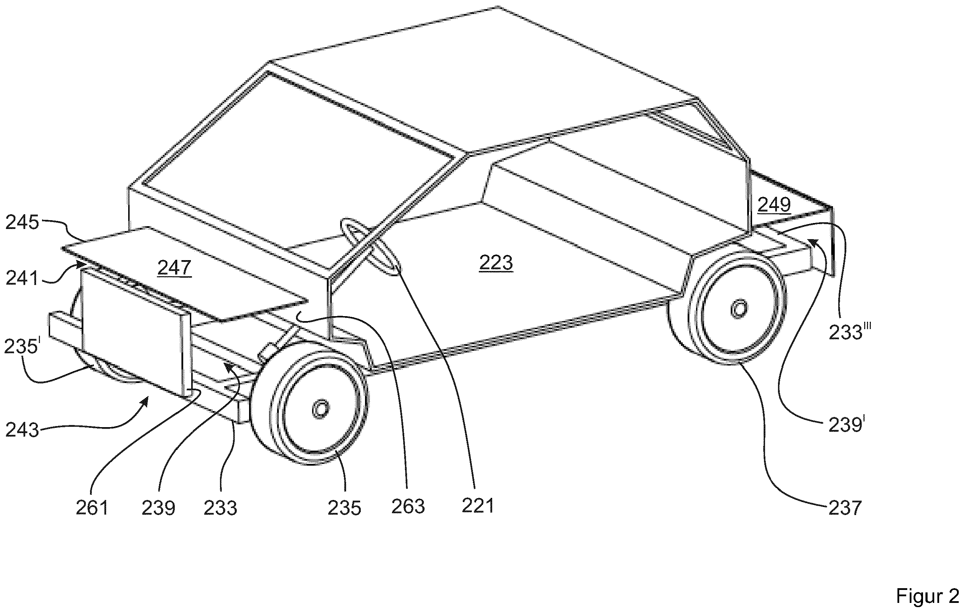

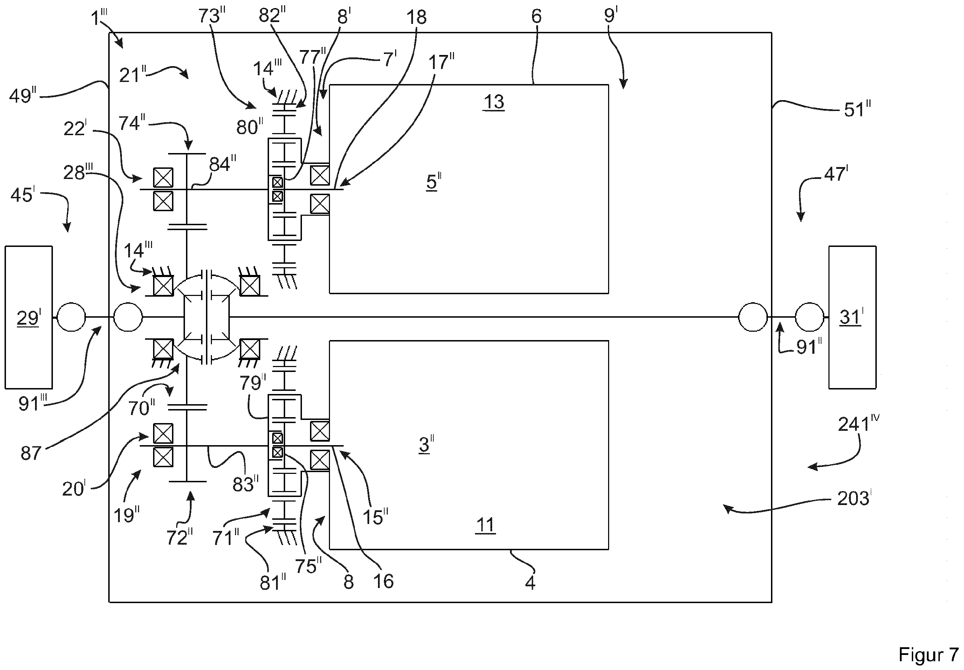

In Figur 1 und Figur 2 der US 2019/061 504 A1 (Anmelderin: NIO USA, Inc.; Veröffentlichungstag: 28.02.2019) werden Kraftfahrzeuge gezeigt, die mit Einzelradantrieben ausgestattet sind. Ein Beispiel für einen räumlichen Aufbau solcher Antriebe geht aus Figur 7A hervor, deren Elektromotoren voreinander angeordnet sind. Ein Inverter soll zwischen den mit den Elektromotoren verbundenen Getrieben montiert sein. Das Getriebe soll ein epizyklisches Reduktionsgetriebe aufweisen, bei dem der Abtrieb über den Planetenträger erfolgt. Die Anordnung soll sich für sog. "torque vectoring" eignen. Außerdem beschäftigen sich die Autoren der US 2019/061 504 A1 mit der Integration dieser Komponenten in einem sog. "Seite-an-Seite-Gehäuse".

Die Patentanmeldung DE 10 2018 103 483 A1 (Anmelderin: Toyoto Jidosha Kabushiki Kaisha; Offenlegungstag: 23.08.2018) beschäftigt sich mit der Bereitstellung eines Antriebskraftregelungssystems für eine Antriebsanordnung mit zwei Elektromotoren, die jeweils ein Rad antreiben sollen. Eine Regelung soll den Schlupf der Räder möglichst gering halten. Außerdem soll in die Regelung eine Antriebskraftübertragungskapazität einer Kupplung einbezogen werden können, die dazu dient, den ersten Motor und den zweiten Motor als eine verbundene Einheit zu betreiben. Die Regelung soll mithilfe von situationsbezogenen Kennfeldern für bestimmte Antriebssituationen, wie z. B. im Falle einer Kurvenfahrt, und mithilfe von einem Drehmomentensensor und mithilfe von einem Gierratensensor durch ein Steuergerät erfolgen. Es sollen eine Parksperre an einer Vorderachse und eine Parksperre an einer Hinterachse vorhanden sein, die geeignet sein sollen, entweder eine Drehung einer zweiten Abtriebswelle oder eine Drehung einer ersten Vorgelegewelle anzuhalten.

In dem Patent EP 2 406 111 B1 (Inhaberin: Nissan Motor Co. Ltd.; Veröffentlichungstag: 01.01.2014) wird eine Parksperrenvorrichtung beschrieben, mit der sichergestellt werden soll, dass diese nicht während einer Fahrt des die Vorrichtung aufweisenden Fahrzeugs aktiviert werden kann. Dies soll durch eine Kraftbegrenzung für ihren Aktuator erreicht werden, der eine Klinke gegen ein Parksperrenrad drückt. Außerdem sollen zum Schutz einer rechten Parksperre und zum Schutz einer linken Parksperre eine Rotation eines rechten Rads und eine Rotation eines linken Rads separat sensorisch überwacht werden.

Die EP 2 719 591 A1 (Anmelderin: Nissan Motor Co., Ltd.; Veröffentlichungstag: 16.04.2014) beschäftigt sich überwiegend mit der Steuerung von Parksperren. Für den Fall, dass sich ein Fahrzeug noch bewegt, d. h., nicht absolut still steht, ist vorgesehen, dass zusätzlich zu einem ersten Parksperrenmechanismus noch ein zweiter Parksperrenmechanismus, der sich an einem anderen Rad befinden soll, aktiviert wird. Hingegen wird bei einem vollständig stehenden Fahrzeug die Aktivierung eines einzigen Parksperrenmechanismus als ausreichend erachtet, wodurch Energie für die Betätigung des zweiten Parksperrenmechanismus eingespart werden kann. Wie in Figur 1 gezeigt ist, soll der Fahrzeugantrieb über Radnabenmotoren an Hinterrädern des Fahrzeugs erfolgen. Die Parksperrenmechanismen sollen die Rotationsachsen der Radantriebsmotoren bezüglich dem Fahrzeugkörper festsetzen. Ein Steuergerät der Parksperre soll eine Straßenneigung bei der Aktivierung der Parksperre berücksichtigen.

Die DE 10 2011 080 236 A1 (Anmelderin: ZF Friedrichshafen AG; Offenlegungstag: 07.02.2013) beschäftigt sich mit einem Elektromotoreinzelradantrieb für ein Kraftfahrzeug, der als radnah bezeichnet wird. Anhand von acht Zeichnungen, die von 1 bis 7 durchnummeriert sind, werden sechs verschiedene Platzierungen einer Parksperre an einem Einzelradantrieb mittels Strichzeichnungen vorgeschlagen. Figur 2 zeigt in Darstellung "a)" eine Klinke in einer geöffneten Parksperrenposition und in Darstellung "b)" eine Klinke in einer geschlossenen Parksperrenposition. Eine solche klassische Parksperre ist mit einer Klinke und einem Parksperrenrad realisiert. Die Figuren 1 und 3 bis 7 zeigen einen Ausschnitt aus einer Verbundlenkerachse, bei dem unter einem Torsionsprofil eine E-Motor-Getriebe-Einheit mit einem E-Motor und zwei Getriebestufen, nämlich einem Planetengetriebe und einer Ritzel-Stirnrad-Anordnung, in einer Schnittansicht dargestellt sind. In diesen Figuren ist die Parksperre schematisch an verschiedenen Positionen der Antriebsanordnung eingezeichnet, und zwar an einer Antriebswelle des Motors, einem Steg, einer Verbindungswelle, im Bereich einer Ritzel-Stirnrad-Anordnung oder an einer Ausgangswelle.

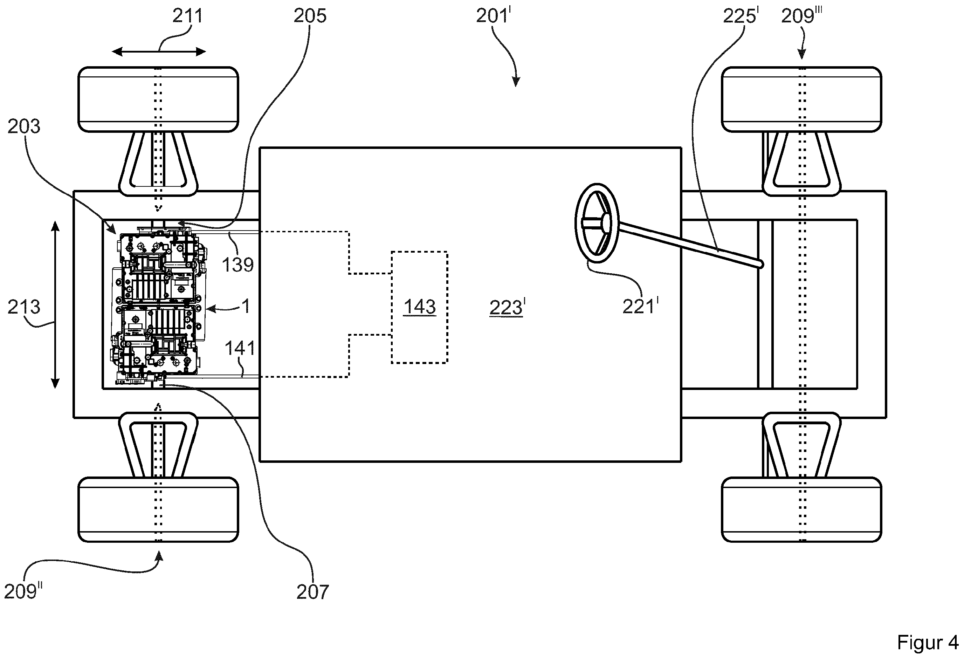

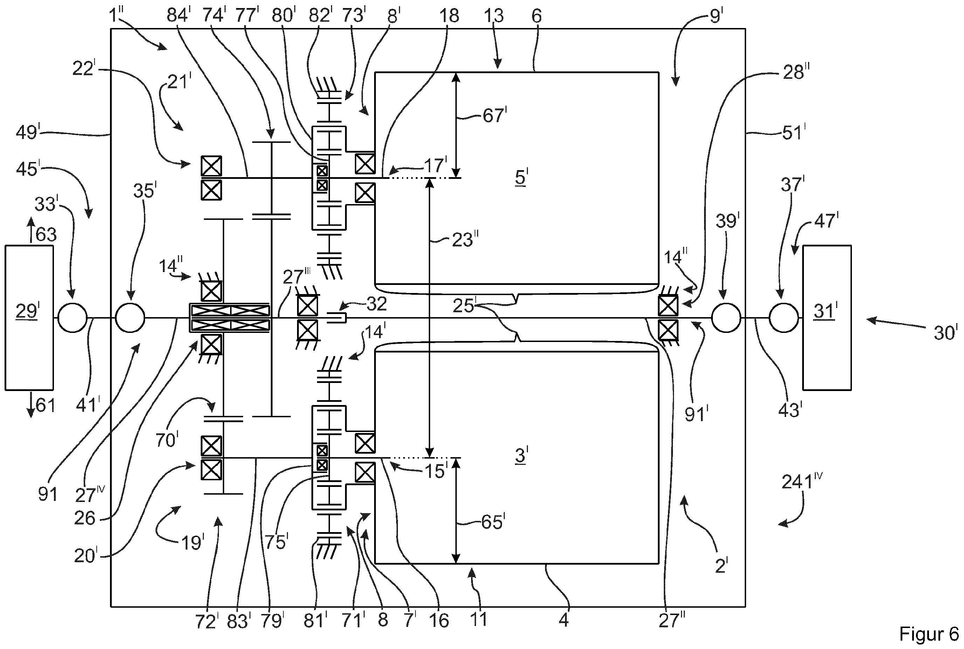

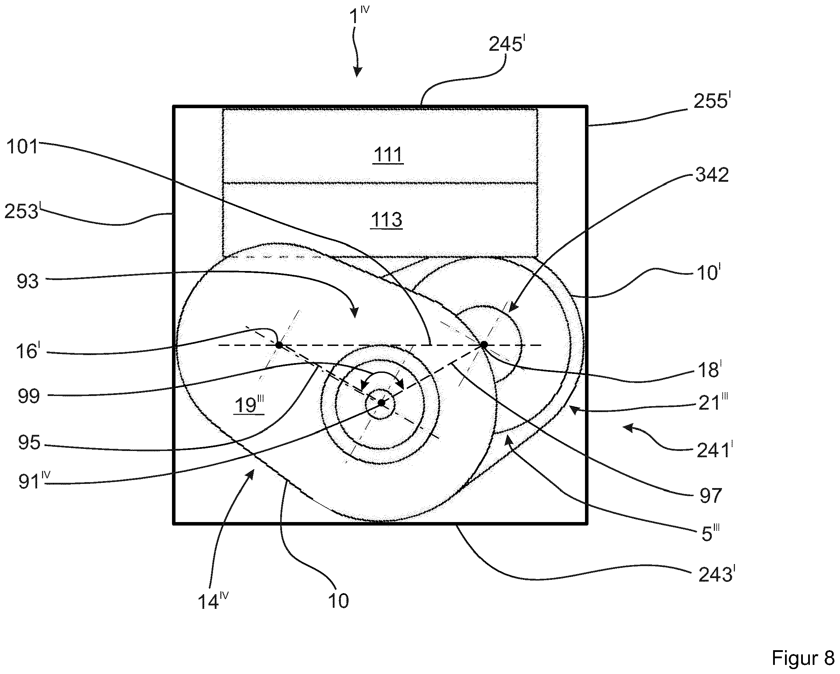

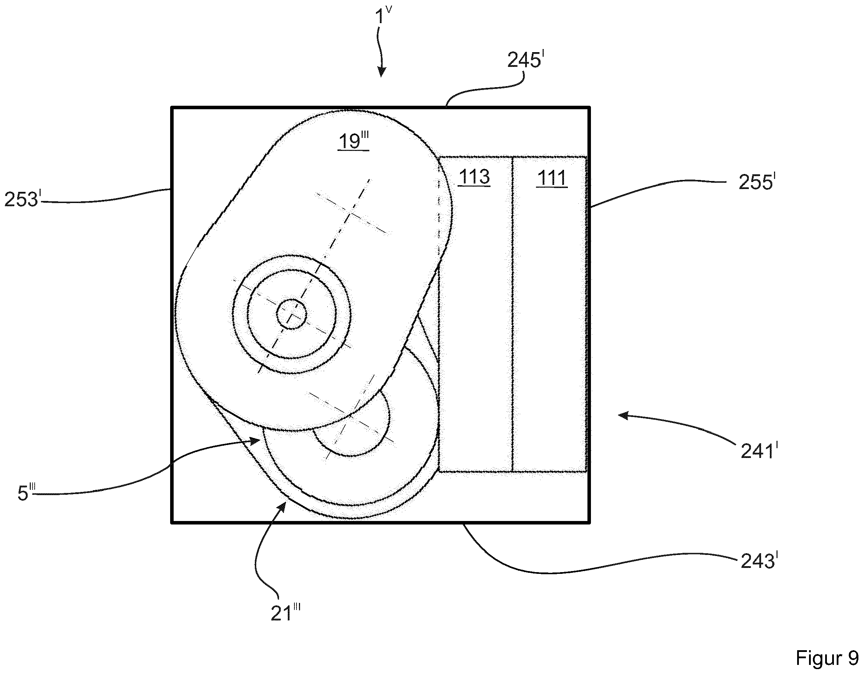

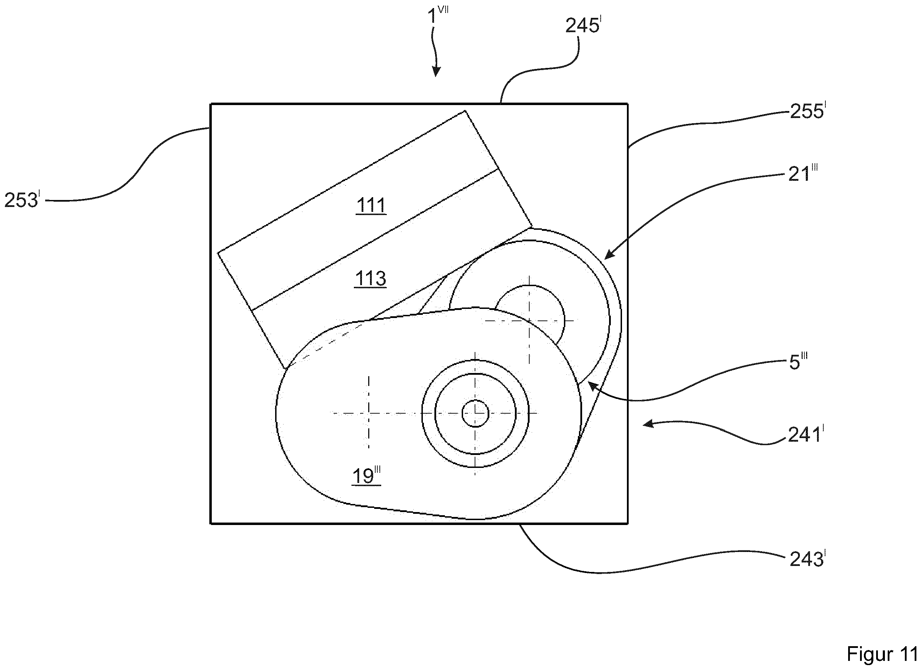

Die Patentanmeldung JP 2009-120 126 A (Anmelderin: Mazda Motor Corp.; Veröffentlichungstag: 04.06.2009) zeigt in den Figuren 4, 5, 7 und 14 einen blockartig ausgebildeten Doppel-Motor, wobei zu jedem Motor ein Getriebe gehört. Die beiden Motorblöcke dürften koaxial nebeneinander angeordnet sein und jeweils von einem Inverter versorgt werden. In Figur 8 ist eine Parksperreneinheit dargestellt. Ein eine Klinke aufweisender Sperrhebel soll in ein Zahnrad eines Planetengetriebes (vgl. Figur 6(b)) eingreifen können. Gemäß Figur 9 sollen die Parksperren beider Getriebe mit einem Pantograph synchronisiert betätigt werden können. Als Alternative wird anhand von Figur 11 vorgeschlagen, ein Fahrzeugsteuergerät in Verbindung mit einem Aktuator zur Betätigung einer einzelnen Parksperre vorzusehen. Ein besonderes Gestaltungsmerkmal der Motorenanordnung besteht darin, dass zwischen den beiden Motoren ein Abgasrohr durchgeführt sein soll.

### Aufgabenstellung

Wie gesagt, führt die Entwicklung von einem Elektroantriebsstrang mit zwei (Einzel-)Radantrieben durch zwei eigenständige Motoren bzw. Elektromaschinen zu erhöhten Anforderungen an den benötigten Bauraum. Zugleich darf aber der Wunsch nach zuverlässigen, sicheren Antrieben, die idealerweise schon konstruktiv realisierte Sicherheiten eingebaut haben, nicht vernachlässigt werden.

Es stellt sich also die Frage, wie es möglich ist, die Attraktivität von elektromotorischen (Einzel-)Radantrieben in beengten Bauräumen zu realisieren und trotzdem Rücksicht auf besondere Sicherheitsanforderungen nehmen zu können.

### Erfindungsbeschreibung

Die erfindungsgemäße Aufgabe wird durch einen Antriebsblock nach Anspruch 1 gelöst. Vorteilhafte Weiterbildungen lassen sich den abhängigen Ansprüchen entnehmen.

Kraftfahrzeuge, die elektromotorisch angetrieben werden sollen, benötigen wenigstens eine Elektromaschine, wie z. B. eine Synchronmaschine oder z. B. eine Asynchronmaschine bzw. von diesen grundlegenden Elektromaschinentypen abgeleitete Weiterentwicklungen (Reluktanzmotor, Radnabenmotor, Spaltrohrmotor, Widerstandsläufer, Ferrarismotor usw.). In der Regel wird ein mit einer im Vergleich zu einer Radgeschwindigkeit höheren Drehzahl drehender Motor als Antriebsmotor in einem Personenkraftwagen verwendet, dessen Drehzahl durch ein an der Ausgangswelle des Motors angesiedeltes Getriebe auf eine (angemessene) Raddrehzahl reduziert wird, z. B. in einem Drehzahlbereich zwischen 0 U/min bis weniger als 2.000 U/min, in einer alternativen Ausgestaltung bis zu einer maximalen Drehzahl von ca. 2.600 U/min.

Lässt sich jedes Rad einer Achse eines Kraftfahrzeugs durch einen eigenen Motor antreiben, so kann von einem Einzelradantrieb gesprochen werden, wobei es - bekanntermaßen bzw. siehe oben - auch Getriebeanordnungen gibt, durch die (wahlweise bzw. in Abhängigkeit einer Schaltstellung) einer der Motoren oder sogar beide Motoren als Achsantriebe anstelle von Einzelradantrieben geschaltet werden können. Vorteilhafterweise treibt ein solcher Antriebsblock mit zwei Elektromaschinen, d. h. mit einer ersten Elektromaschine und mit einer zweiten Elektromaschine, entweder eine komplette Achse eines Kraftfahrzeugs oder jeweils eine Elektromaschine treibt ein einzelnes Straßenrad an der anzutreibenden Achse des Kraftfahrzeugs. Wie gesagt, können auch umschaltbare Mischformen an einer Achse eines Kraftfahrzeugs vorhanden sein, die, je nach Schaltzustand, z. B. eines aufschaltbaren Differentials, entweder als Einzelradantrieb oder als Achsantrieb genutzt werden können. Treibt jeweils eine Elektromaschine ein Straßenrad des Kraftfahrzeugs an, kann über eine Ansteuerung der Elektromaschinen, z. B. über einen Inverter (bzw. Wechselrichter bzw. Umrichter), insbesondere durch eine Frequenzsteuerung, ein "torque vectoring" (eine Gier-Winkelsteuerung des Kraftfahrzeugs) betrieben werden.

Besonders vorteilhaft ist es, wenn die einzelnen Komponenten eines (Teil-)Antriebs mit den gleichartigen Komponenten eines zweiten (Teil-)Antriebs ineinander geschoben, d. h. aufeinander zubewegt angeordnet sind, was auch mit den Worten "verschachtelt angeordnet" bezeichnet werden kann. Hierbei ist die Möglichkeit gegeben, jeden (Teil-)Antrieb eigenständig mit sämtlichen Komponenten für das Antreiben eines Einzelrades oder sogar für das Antreiben einer Kfz-Achse auszustatten.

Lassen sich die einzelnen Komponenten des Antriebsblocks in einem kompakten Block arrangieren, so steht die (theoretische) Möglichkeit zur Verfügung, den Antriebsblock in seinen Abmessungen an den Abmessungen und an der Form einer Verbrennungskraftmaschine mit den an ihr angeordneten Aggregaten auszurichten. Der Formfaktor entspricht (im Wesentlichen) einem Verbrennungsmotor mit seinen Anbauaggregaten und gegebenenfalls seiner Kapselung.

Solche Motoren lassen sich in einer Längsfahrzeugrichtung einbauen, z. B. in einem Motorraum unterhalb einer Motorhaube. Hierbei kann der Antriebsblock für einen Quereinbau in einem Kraftfahrzeug vorgesehen sein. Als Quereinbau des Antriebsblocks kann eine Orientierung bezeichnet werden, bei der die Radantriebswellen, die aus dem Block herausstehen, auf die anzutreibenden Räder gerichtet sind; es gibt keine Umlenkung um 90°, um von den Radantriebswellen zu den Rädern der Achse zu gelangen.

Entspricht der Antriebsblock in seinen maximalen Abmessungen den Breiten, Höhen und/oder Längen einer Verbrennungskraftmaschine, die für den Antrieb eines Kraftfahrzeugs konzipiert ist, so bietet sich die Möglichkeit, eine fertig entwickelte Karosserie weiterhin zu verwenden und den Antriebsblock als Substituent für einen Antrieb mit einer Verbrennungskraftmaschine einzusetzen. Der für eine Verbrennungskraftmaschine vorgesehene Bauraum kann von dem Antriebsblock genutzt bzw. beansprucht werden. Weitere Komponenten, die sonst noch im Motorraum verbaut sein können, wie eine Hilfslenkung bzw. eine Lenkunterstützung können weiterhin im Motorraum unverändert beibehalten werden.

Treibt die erste Elektromaschine ein erstes Einzelrad an, bedarf es, aufgrund der erhöhten Drehzahl der Elektromaschine bzw. der für einen Radantrieb zu hohen Winkelgeschwindigkeit, eines ersten (Untersetzungs-)Getriebes. Treibt eine zweite Elektromaschine ein zweites Einzelrad an, so bedarf es, aufgrund der im Vergleich zum Straßenrad höheren Drehzahl der Elektromaschine, eines zweiten Getriebes (in das Langsame). Werden die Getriebe jeweils stirnseitig auf der ersten Elektromaschine bzw. auf der zweiten Elektromaschine befestigt, so ergibt sich ein (Teil-)Block aus einer Elektromaschine und einem dazugehörigen Getriebe. Werden die beiden Elektromaschinen bezüglich ihrer Längserstreckung, z. B. bezüglich ihrer Rotorachsen bzw. ihrer rotierenden Achsen, parallel und bezüglich ihrer Gehäuse hintereinander angeordnet, ergibt sich ein Block aus zwei L-förmigen Motor-Getriebe-Einheiten.

Die Getriebe, also das erste Getriebe und das zweite Getriebe, können durch mehrere Stirnradstufen oder auch durch ein Planetengetriebe realisiert sein. Natürlich ist es auch möglich, eine Stufe als Planetengetriebe zu realisieren und eine andere Stufe als Stirnradstufe zu realisieren. Zwei Ausgangswellen, je eine Welle pro Getriebe, können auf ein summierendes Getriebe bzw. auf ein Summiergetriebe (z. B. auf ein schaltbares Planetengetriebe oder ein schaltbares Differentialgetriebe) geführt sein, sodass das, idealerweise schaltbare, summierende Getriebe die elektromotorischen Einzelantriebe zu einem Achsantrieb verschaltet.

Die Anbindung an die Straßenräder erfolgt, wie weiter oben schon angesprochen, über Radantriebswellen, die auch hinlänglich als Antriebswellen bezeichnet werden können. Die (Rad-)Antriebswellen können über Gelenke an den oder die Abtriebe der Getriebe angebunden sein. Je nach Position der Abtriebe ist es aber auch möglich, die Antriebswelle für eines der Räder als unmittelbaren Teil des Getriebes auszuführen. Es hängt nicht zuletzt von der relativen Position der Abtriebszahnradkonstanten (des "final drive") ab, wie weit das Getriebe (entweder das Einzelradgetriebe oder das Summiergetriebe) in Richtung auf die (Straßen-)Räder zu führen ist. Wird als Radantriebswelle eine Welle mit an seinen Enden mit einer Wellenverzahnung versehenes Wellenstummel genutzt, so kann das Getriebe mit einem innenverzahnten Hohlrad enden. Ist die Radposition fluchtend zu dem Ausgang des Getriebes, so können die Radantriebswelle und die Abtriebszahnradkonstante einstückig ausgeführt sein.

Handelt es sich bei den Elektromaschinen um Motoren, die mit einer Wechselspannung, entweder einphasig oder mehrphasig, wie z. B. dreiphasig, betrieben werden, so bedarf es als weitere Komponente des Antriebsblocks wenigstens eines Inverters; vorzugsweise werden jedoch zwei Inverter eingesetzt, je ein Inverter pro Antrieb, gebildet aus Elektromaschine und Getriebe. Die beiden Inverter werden vorteilhafterweise auf dem doppelt gestalteten L-förmigen Block aus zwei Elektromaschinen und aus zwei an den zylinderförmigen Enden des Gehäuses der Elektromaschinen angesiedelten Getrieben platziert. Hierbei ist der Antriebsblock für einen Einbau vorgesehen, bei dem idealerweise in einem unteren Bereich die Elektromaschinen und die Getriebe platziert sind, während die Inverter oberhalb der Antriebswellen der Elektromaschinen, d. h. bodenabgewandt angeordnet sind. Die schwereren Elektromaschinen bilden - in der Einbaulage (wenn der Antriebsblock für die Montage in einem Kraftfahrzeug ausgerichtet worden ist (der Hochzeit mit dem Chassis)) - die Basis des Antriebsblocks. Die leichteren, häufig thermisch empfindlicheren, zum Teil auch mechanisch fragileren, Inverter befinden sich - in einer Ausgestaltung - in einem Bereich, der im Vergleich zu den Elektromaschinen bodenferner angesiedelt ist. Die beiden Elektromaschinen schaffen eine konstruktive Ebene. Der oder die Inverter können in einem relativen Bezug zur konstruktiven Ebene platziert sein.

Jede Antriebskombination, die sich aus einem Inverter, einer Elektromaschine und einem Getriebe zusammensetzt, stellt einen eigenen Antrieb dar. Vorteilhafterweise hat ein solcher Antrieb eine Parksperre. Die Parksperre ist - in diesem Fall - nur für diesen einen Antrieb zuständig. D. h., jeder Antrieb (bzw. Teilantrieb) ist jeweils mit einer eigenen Parksperre zum Blockieren einer Abtriebswelle, die aus dem Antrieb auf einen Radantrieb herausführt, ausgestattet.

Mit anderen Worten, der Antriebsblock ist dafür bestimmt, in einem Kraftfahrzeug eingebaut zu werden. Ein solches Kraftfahrzeug hat eine Längsfahrzeugrichtung. Ein solches Kraftfahrzeug hat eine Querfahrzeugrichtung. Soll der Antriebsblock in dem Kraftfahrzeug eingebaut sein, so kann eine Einbaulage des Antriebsblocks auch in Bezug auf die Längsfahrzeugrichtung und in Bezug auf die Querfahrzeugrichtung angegeben werden. Die Längsfahrzeugrichtung ist die Richtung an dem Fahrzeug, in die das Fahrzeug bewegt werden kann (Vorwärtsfahrt bzw. Rückwärtsfahrt). Die Querfahrzeugrichtung ist die Richtung an dem Fahrzeug, die quer zur Längsfahrzeugrichtung ausgerichtet ist.

Der Antriebsblock, der sowohl eine erste Elektromaschine als auch eine zweite Elektromaschine aufweist, hat beide Elektromaschinen - insbesondere bei einer Betrachtung entlang der Längsfahrzeugrichtung - hintereinander angeordnet. In dem Fall sind die Elektromaschinen deckend zueinander angeordnet. D. h., je nach Blickrichtung, überdeckt die erste Elektromaschine die zweite Elektromaschine (bei einer seitlichen Blickrichtung) oder die zweite Elektromaschine deckt (zumindest teilweise) die erste Elektromaschine ab.

Idealerweise ist der Antriebsblock so gestaltet, dass er als Komponente für einen Kraftfahrzeugquereinbau genutzt werden kann. Hierfür sind z. B. entsprechende Lager- und Fixierungspunkte an dem Antriebsblock vorzusehen.

Jede Elektromaschine hat eine Rotationswelle. Die Rotationswelle der einen Elektromaschine kann zusammen mit einer Rotationswelle der anderen Elektromaschine dazu verwendet werden, eine konstruktive Ebene durch die beiden Rotationszentren der Elektromaschinen zu legen.

Versetzt zu den Elektromaschinen kann dann das Getriebe angeordnet sein. Ein Getriebeabtrieb erfolgt also räumlich versetzt zu der Anordnung der Elektromaschinen. Aus dem Getriebe erfolgt der Abtrieb an einer anderen Stelle im Vergleich zu einer Eintrittsstelle einer Antriebsleistung in das Getriebe. In einer möglichen Ausgestaltung gibt es zwei getrennte Getriebe. In einer alternativen Ausgestaltung werden die zwei Einzelgetriebe durch ein weiteres Summiergetriebe zu einem Gesamtgetriebe zusammengekoppelt.

Jede der beiden Elektromaschinen hat ihr eigenes Rotationszentrum. Durch das Rotationszentrum der Elektromaschine läuft die jeweilige Rotationswelle dieser Elektromaschine. Die beiden Rotationswellen verlaufen derart, dass eine gedachte bzw. konstruktive Ebene durch die beiden Rotationswellen bestimmbar ist. Die Rotationswellen sind also - im idealen Fall - parallel verlaufend. Somit kann durch zwei parallel angeordnete konstruktive Linien (Wellen bzw. Achsen) hindurch eine konstruktive Ebene gelegt werden. Vorteilhafterweise ist der Getriebeabtrieb aber nicht an einer Position auf dieser konstruktiven Ebene zu finden, sondern der Getriebeabtrieb ist seitlich versetzt zu der konstruktiven Ebene zu finden.

Es kann auch gesagt werden, die konstruktive Ebene ergibt sich aus den beiden Rotationswellen, wozu eine von der konstruktiven Ebene abgehobene Position existiert, die durch ein Zentrum im Getriebeabtrieb bestimmt wird.

In dem zur Verfügung stehenden Bauraum lässt sich eine weitere Ebene legen, die in einer Ausgestaltung im 90 Grad Winkel zur ersten konstruktiven Ebene gestaltet ist. Diese zweite Ebene bestimmt sich aus dem zuvor definierten Punkt des Getriebeabtriebs (bzw. Position des Getriebeabtriebs) und durch Punkte auf den Rotationswellen. Diese Ebene verläuft parallel zu einem der Getriebe.

Durch die beiden Schnittpunkte zwischen den Rotationswellen und der Ebene parallel zu den Getrieben sowie durch die Position, die sich aus dem Getriebeabtrieb ergibt, kann eine konstruktive Anordnung geschaffen werden, die den Buchstaben "V" (ein aufgeklapptes, zweiflügeliges, unten zusammengefügtes Zeichen) ergibt. Zwischen den beiden Strichen des "Vs", den Armen, kann ein Winkel dazwischen gelegt werden, der kleiner als 180 Grad ist.

Ein Inverterblock, der sich aus bis zu zwei in Gehäusen eingefassten Invertern bildet, wobei jeder Inverter für einen eigenen Teilantrieb zuständig ist, kann auf einer Seite der konstruktiven Ebene platziert sein.

Eine weitere Komponente für den Antriebsblock ist eine Parksperrenvorrichtung.

Die beiden Elektromaschinen können als zentral platzierte Elemente betrachtet werden. Neben den Elektromaschinen ist zum einen, sofern einer oder mehrere Inverter für die Elektromaschinen benötigt werden, der Inverterblock zu platzieren. Sofern der Antriebsblock eine Parksperrenvorrichtung hat, ist die Parksperrenvorrichtung - seitlich zu den Elektromaschinen platziert - Teil des Antriebsblocks. Inverter bzw. der Inverterblock werden/wird benötigt, wenn z. B. aus einer im Kraftfahrzeug zur Verfügung stehenden Gleichspannung eine oder mehrere für den Antrieb der Elektromaschinen bestimmte Wechselspannung(en) werden soll(en).

Der Inverterblock kann eine ausladende Gestaltung haben. Zumindest ein Teil des Inverterblocks jedoch liegt vorteilhafterweise zwischen den beiden Getrieben, z. B. mit seinem gesamten Gehäuse. Sollten die Elektromaschinen aber so kurz sein, dass eine Inverterplatine (Platine mit elektronischen Bauteilen) länger ist als die deckend zueinander angeordneten Elektromaschinen, so kann ein Teil zumindest eines der Inverter über die Elektromaschinen hinausstehen, z. B. sich oberhalb eines Getriebegehäuses erstrecken.

Vorteilhaft ist es, wenn als Grenze für die Erstreckung des Inverterblocks zumindest die Außengehäusewände als (gedachte Grenze) eingehalten werden können.

Durch eine kompakte Anordnung mit den äußeren Begrenzungen "Getriebe", genauer Außengehäusewände des Getriebes, ergibt sich insgesamt eine kompakte Einheit, deren Quererstreckung sich auf diejenige Breite, die von Getriebe bis Getriebe, insbesondere von Reduktionsgetriebe bis Reduktionsgetriebe, reicht, beschränkt.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Vorteilhafterweise ist zumindest das Gehäuse eines der Getriebe (und damit der eingehauste Teil des Getriebes) auf einer Stirnseite der Elektromaschinen platziert. Wird ein Getriebe motorstirnseitig platziert, kann die Motorwelle unmittelbar in das Getriebe einwirken.

Das Gehäuse eines (Reduktions-)Getriebes kann in einer Draufsicht mit dem Wort "Ellipse" beschrieben werden. Das Gehäuse eines Getriebes ist einer Ellipse ähnlich bzw. mit einer Ellipsensilhouette gestaltet ausgeführt. Ein besonders vorteilhaftes Gehäuse ist in einer Draufsicht wie die Verbindung aus zwei Ellipsenausschnitten, die an Übergangsstellen miteinander verbunden sind.

Generell sei rekapituliert, dass sich eine Ellipse durch das Vorhandensein von zwei Brennpunkten (als Konstruktionspunkte) auszeichnet. Um die Brennpunkte herum werden die kreisbogenartigen Grenzen des Gehäuses "konstruiert". Das Gehäuse hat somit zwei Brennpunkte. Das Gehäuse ist vorteilhafterweise ein flaches Gehäuse, das folglich in Richtung "Höhe" nur eine kürzere Erstreckung (im Vergleich zu dem Abstand Brennpunkt zu Brennpunkt) hat. Das Gehäuse hat eine längste Erstreckung durch seine ellipsenartige Gestalt. Das Gehäuse lässt sich auch als ovales Gehäuse mit geringer Höhe beschreiben. An einer oberen Seite gibt es einen kreisbogenartigen Endbereich. An einer unteren Seite gibt es einen zweiten kreisbogenartigen Endbereich. Zwischen den beiden kreisbogenartigen Endbereichen, die jeweils zueinander einen voneinander abweichenden Durchmesser haben (können), kann das Gehäuse entlang eines zur Achse Brennpunkt - Brennpunkt (Exzentrizität) beabstandet vorhandenen Gehäuseteils gerade verlaufen bzw. gestaltet sein.

In einem der Brennpunkte eines Gehäuses läuft vorteilhafterweise eine Rotationswelle aus, auf der z. B. ein Antriebszahnrad platziert ist. Die Rotationswelle fällt mit dem einen Brennpunkt zusammen.

Weiterhin ist es vorteilhaft, wenn sich der Getriebeabtrieb in dem anderen Brennpunkt befindet.

Werden Linien zur Bestimmung von Durchmessern durch die Brennpunkte gezogen (bzw. Geraden gezogen), so weist eine Gerade durch den einen Brennpunkt einen breiteren Durchmesser des Gehäuses auf als eine Gerade, die durch den anderen Brennpunkt des gleichen Gehäuses hindurchgeht.

Vorteilhafterweise ist das Getriebe ein zwei Zahnradstufen umfassendes Getriebe. Durch mehr als eine Zahnradstufe ist es möglich, eine größere Spreizung im Getriebe zu realisieren. So können Teilungsverhältnisse von mehr als sechs geschaffen werden. Auf diese Weise ist es möglich, dass Elektromaschinen verwendet werden, die mehr als sechs Mal so schnell drehen (im Vergleich zu der gewünschten Raddrehzahl). Das Getriebe hat also eine erste Stufe und eine zweite Stufe. Jede der Stufen kann auch als Zahnradstufe bezeichnet werden. Der Abtrieb der ersten Zahnradstufe ist dann auf den Antrieb der zweiten Zahnradstufe geführt.

Hierbei ist es möglich, unterschiedliche Getriebearten miteinander zu kombinieren, z. B. zuerst eine Planetengetriebestufe ausgangsseitig der Rotationswelle zu platzieren, deren Abtrieb auf eine Stirnradgetriebestufe geführt wird. Zunächst wird die Drehzahl durch eine Planetengetriebestufe reduziert. Diese reduzierte Getriebe(-zwischen-)drehzahl wird dann in das Antriebsrad einer Stirnradgetriebestufe eingeleitet.

Der Antriebsblock ist so kompakt gestaltet, dass der gesamte Antriebsblock in einen Bauraum eingebracht werden kann, der quaderförmig ist. Der Antriebsblock ist für einen Einbau in einen quaderförmigen Kraftfahrzugbauraum gestaltet. Ein solcher quaderförmige Kraftfahrzeugbauraum kann durch Grenzflächen beschrieben werden. Die Grenzflächen stehen bei einem quaderförmigen Kraftfahrzeugbauraum in einem rechten Winkel zueinander. Die zentrale Platzierung der Elektromaschinen und die dazu seitliche Platzierung der übrigen Komponenten füllen den Bauraum auf und ergeben eine in einem rechteckigen Bauraum angeordnete Komponente der beiden Antriebe.

Gibt es rechtwinklig zueinander ausgerichtete Grenzflächen für den zu nutzenden Kraftfahrzeugbauraum, so kann die Positionierung bzw. die Orientierung des Inverterblocks in Bezug zu einer der Grenzflächen ausgerichtet sein. Der Inverterblock kann mit seiner Oberflächenerstreckung parallel zu einer Grenzfläche verlaufen.

Die Platzierung der konstruktiven Ebene durch die beiden Rotationswellen der beiden Elektromaschinen sorgt dafür, dass ein Bereich des Antriebsblocks in einen Bereich oberhalb der konstruktiven Ebene und in einen Bereich unterhalb der konstruktiven Ebene aufgeteilt werden kann, wobei der Inverterblock vorteilhafterweise oberhalb der konstruktiven Ebene angesiedelt ist. Somit ist der Inverterblock ferner des Bodens angesiedelt. Der Inverterblock oberhalb der konstruktiven Ebene ist der von dem Boden (von der Straße) abgewandte Teil des Antriebsblocks.

Der Inverterblock ist auf einer Seite, die als erste Seite bezeichnet werden kann, der konstruktiven Ebene angesiedelt.

Wie bereits weiter oben angesprochen, hat der Antriebsblock vorteilhafterweise eine Parksperre. Die Parksperre ist für die Herstellung einer Rotationshemmung zuständig. Die Parksperre soll, wenn sie eingelegt ist, eine Rotationshemmung der Radantriebswelle bewirken. Die Parksperre kann dabei - im Vergleich zur ersten Seite der konstruktiven Ebene für die Platzierung des Inverterblocks - an einer zweiten Seite der konstruktiven Ebene platziert sein.

Wird die Parksperre auf der zweiten Seite in Bezug zur konstruktiven Ebene angesiedelt, so kann einer der Inverter auf einer bodenfernen Seite der konstruktiven Ebene platziert werden.

Die erste Elektromaschine hat eine gewisse Breite, die auch als erste Elektromaschinenbreite bezeichnet werden kann. Häufig werden Elektromaschinen überwiegend rund gebaut, sodass die Elektromaschinenbreite einem doppelten Elektromaschinenradius entspricht. Die zweite Elektromaschine hat eine zweite Breite, die zweite Elektromaschinenbreite, die ebenfalls einem doppelten Elektromaschinenradius entsprechen kann, wenn die Elektromaschine im Wesentlichen ein rundes Gehäuse besitzt.

Die Gehäuse für die Getriebe können größer sein als eine Schnittfläche, die durch die beiden Radien bzw. Durchmesser der beiden hintereinander angeordneten Elektromaschinen gebildet ist. Jedes der Gehäuse ragt vorteilhafterweise seitlich über diese doppelte Schnittfläche hinaus.

Mindestens einer der Inverter kann in ein kapselndes Gehäuse eingebaut sein. Das kapselnde Gehäuse des Inverters kann sich blockartig von den Elektromaschinen absetzen (wobei das Gehäuse des Inverters eine einstückige Fortsetzung des Elektromaschinengehäuses sein kann).

Das, insbesondere blockartige, Gehäuse des Inverters ist (ähnlich zu den Getriebegehäusen) in der Höhe deutlich geringer erstreckend (bzw. bauend) als in seiner Breite und in seiner Länge. Der Inverter ist ein flaches, schmales, sich erstreckendes Kästchen. Der Inverter hat eine Schmalseite, die quer zu einer der Rotationswellen angesiedelt werden kann.

Der Inverter hat eine Schmalseite, die als Stirnseite des Antriebsblocks bzw. als Teil der Stirnseite des Antriebsblocks angesiedelt werden kann. Die Stirnseite kann quer zur Kraftfahrzeugquerrichtung ausgerichtet sein.

Mindestens eine der vorhandenen Parksperren kann seitlich des Antriebsblocks angesiedelt sein. Die Parksperre kann den Antriebsblock seitlich als abschließendes Element begrenzen.

Die beiden Elektromaschinen können zueinander etwas versetzt angeordnet sein. Die eine Elektromaschine kann in Bezug auf den Fahrzeugboden oder in Bezug auf eine Straße höher anzusiedeln sein als die andere Elektromaschine. Die Elektromaschinen sitzen in dem Antriebsblock zueinander versetzt. Anhand der Befestigungspunkte des Antriebsblocks kann bestimmt werden, dass die eine Elektromaschine für eine höhere Position in einem Fahrzeug vorgesehen ist als die andere Elektromaschine (wenn der Antriebsblock in einem Fahrzeug eingebaut sein wird).

Die Rotationszentren der Elektromaschinen können in Bezug auf die Längsfahrzeugrichtung an unterschiedlichen Stellen angeordnet sein. Die Rotationszentren können in Bezug auf eine Bezugsebene des zur Aufnahme bestimmten Kraftfahrzeugs unterschiedliche Abstände aufweisen.

Nachfolgend werden weitergehende interessante Aspekte für einen zuvor umrissenen Antriebsblock vorgestellt.

Die Ausgestaltung des Antriebsblocks kann noch dadurch vorteilhaft gestaltet sein, dass zu dem Antriebsblock zwei Aktuatoren gehören, die dafür da sind, jeweils eine eigene Parksperre pro (Teil-)Antrieb zu betätigen.

Die Parksperrenaktuatoren sind vorzugsweise in einem bodennahen Bereich des Antriebsblocks platziert, insbesondere wenn sie durch entsprechende Gehäuse eingefasst sind. In einem solchen Fall bedeutet dies, dass innerhalb des Antriebsblocks die Parksperrenaktuatoren in einem dem Boden zugewandten Bereich angesiedelt sind. Mit anderen Worten, die Parksperrenaktuatoren können vorteilhafterweise in einem unteren Bereich des Antriebsblocks angesiedelt werden. Die Parksperren können zwischen den ausgangsseitig angeordneten Getrieben, insbesondere in einem bodennahen Bereich angesiedelt werden.

Die Parksperren sind dafür da, in einen Sperrzustand zu gelangen, wenn der Antrieb und somit das Fahrzeug an einem Wegrollen gehindert werden soll. Der Sperrzustand kann durch eine Rotationshemmung hervorgerufen werden. Die Rotationshemmung kann in dem Getriebe bewirkt werden. Jedes Getriebe hat seine eigene Parksperre.

In einer alternativen Ausgestaltung kann anstelle von zwei Parksperrenaktuatoren auch nur vorgesehen sein, dass ein Parksperrenaktuator beide Parksperren synchron bzw. simultan, d. h. zum gleichen Zeitpunkt betätigen kann.

Die Parksperrenaktuatorik, sowohl eine gemeinsame als auch mehrere eigenständige, kann zwischen den Getriebegehäusen sitzen.

Vorteilhafterweise ist jede der Parksperren so gestaltet, dass sie in einem Sperrzustand in einem Planetenträger eingreifend eine Planetengetriebestufe des Getriebes rotatorisch fixiert. Im Sperrzustand übt die jeweilige Parksperre eine Rotationshemmung aus.

Es ist möglich, dass die Parksperre an verschiedenen Stellen angreift.

In einer Ausgestaltung fixiert die Parksperre ein Ausgangszahnrad.

In einer Ausgestaltung fixiert die Parksperre eine Eingangswelle des Getriebes.

In einer Ausgestaltung blockiert die Parksperre das kleinere Ritzel von zwei eine Übertragungsstufe bildenden Ritzeln.

In einer Ausgestaltung fixiert die Parksperre ein Abtriebsrad der Zahnradgetriebestufe. Selbst an dieser Stelle reicht es, wenn ein Drehmoment von weniger als z. B. 3.000 Nm gesperrt werden kann, wie z. B. 2.200 Nm.

Die jeweilige Parksperre kann durch ihren Aktuator als hydraulisch zu betätigende Parksperre realisiert sein. Auch ist es möglich, dass die Parksperre durch ihren Aktuator als eine elektromotorisch betätigte Parksperre arbeitet.

Eine günstige Ausgestaltung ist eine Klinkensperre, d. h. eine Parksperre, die durch eine Klinke in ihren fixierten bzw. in ihren gesperrten Zustand versetzbar ist.

Außerdem ist es vorteilhaft, wenn für das Lösen der Parksperre die Parksperre einen Energiespeicher, z. B. in Gestalt einer starken Ringfeder, aufweist. Alternative Möglichkeiten bieten sich durch Druckfedern, Kegelfedern oder Tonnenfedern.

Vorteilhafterweise greift eine Klinke der Klinkensperre in ein Ringrad eines Planetengetriebes ein. Das Planetengetriebe kann an seiner abtreibenden Seite, z. B. an dem Planetenträger, ein Ringrad angeschlossen haben (per Steckverbindung, geschweißt, genietet oder dergleichen), das die Aufgabe eines Sperrrads übernimmt. Durch die eingreifende Klinke kann eine Fixierung des Getriebes bewirkt werden. Hierfür kann an dem Ringrad eine Außenverzahnung vorhanden sein, z. B. in Gestalt eines Außenzahnkranzes. Das Ringrad ist ein weiteres Bauteil neben dem Planetengetriebe.

Das Getriebe hat unterschiedlich große Ritzel. Vorteilhafterweise wird ein kleineres der zur Verfügung stehenden Ritzel des Getriebes gewählt, um in dem kleineren Ritzel die Bewegungshemmung bei einer eingelegten Parksperre zu verwirklichen.

Das Getriebe kann sich, wie bereits weiter oben angesprochen, in einer Weiterbildung aus einer Planetengetriebestufe und aus einer Zahnradgetriebestufe zusammensetzen, bei denen die eine Stufe der anderen Stufe folgt. Die beiden Getriebestufen sind nacheinander gereiht.

Beide Getriebestufen haben Übersetzungen, um die Drehzahl zu reduzieren.

Der Antriebsblock kann durch Klinken gesperrt werden, die passstiftgelagert sind. Die Klinken liegen auf Passstiften, z. B. auf Stiften, die weniger als 15 mm dick sind, z. B. nur 10 mm dick sind. Ein solcher Passstift kann sehr kurz sein, z. B. weniger als 70 mm. So ist es möglich, die gesamte Parksperre mit ihrem Aktuator in den knappen Bauraum einzupassen.

Die Parksperren können stangengesteuert sein. Durch eine Stangensteuerung kann der Parksperrenaktuator an einer anderen Stelle angeordnet werden als die Parksperre (selbst).

Eines der Getriebe kann mehrere Getriebestufen umfassen (aber auch beide Getriebe können je mehrere Getriebestufen umfassen), z. B. zwei Getriebestufen, von denen eine Getriebestufe ein Planetengetriebe ist und eine Getriebestufe ein Zahnradgetriebe ist. Beide Getriebestufen reduzieren die Drehgeschwindigkeit bzw. die Drehzahl, es sind drehzahlreduzierende Getriebe, die Übersetzungen mit einer Übersetzungszahl im Bereich von 50 bis 100 umsetzen.

Die zuvor dargestellten Kombinationen und Ausführungsbeispiele lassen sich auch in zahlreichen weiteren Verbindungen und Kombinationen betrachten.

So ist es u. a. möglich, das Getriebegehäuse und das Elektromaschinengehäuse als Gesamtgehäuse auszugestalten. Eine erste Komponente ist in diesem Fall der elektromotorische Antrieb aus Elektromaschine und Getriebe. Eine zweite bzw. weitere Komponente ist der dazugehörige Inverter.

Die Klinkensperre kann mit und auch ohne Federn arbeiten. Eine Feder kann zur leichteren Auslösung der Klinkensperre Teil des Hebelmechanismus sein.

Es hat sich als günstig herausgestellt, wenn wenigstens einer der Inverter ein flacher Kasten ist, ganz bevorzugt beide Inverter, insbesondere bei einem mit zwei Elektromaschinen aufgebauten Antriebsblock, flache Kästen sind, die z. B. quadratisch ausgebildet sein können. Jeder Kasten kann eine solche Abmessung haben, dass er ungefähr die Hälfte einer Oberseite des Antriebsblocks ausbildet. Der erste Kasten, also der erste Inverter, bedeckt z. B. die rechte Seite der beiden hintereinander angeordneten Elektromaschinen als überspannende flache Einheit. Der zweite Inverter kann neben dem ersten Inverter angeordnet sein. Der zweite Inverter kann genauso beide Elektromaschinen von oben abdecken. Der zweite Inverter ist idealerweise mit den gleichen Abmessungen ausgestattet wie der erste Inverter. Die beiden Inverter bilden die nach oben hin begrenzende Abdeckung durch ihre oberen Gehäuseschalen.

Die Unterseite eines Inverters kann dafür gestaltet sein, auf einer Trägerplatte angeordnet zu werden. Die Trägerplatte kann eine flache Abdeckplatte sein, die das Brückenelement über die beiden Elektromaschinen darstellt. Die Trägerplatte ruht als flache Abdeckplatte auf beiden Elektromaschinen. Vibrationen der Elektromaschinen oder des Antriebsblocks werden, wenn die Trägerplatte ausreichend massiv gestaltet ist und zugleich günstig schwingungstechnisch gelagert ist, abgemildert, sodass die Elektronik des Inverters bzw. die beiden Elektroniken der beiden Inverter nur verringerte (idealerweise gar keine) Schwingungen und Vibrationen erleiden.

Für jeden Inverter kann es - in einer vorteilhaften Ausgestaltung - einen Kabelsteckadapter geben. Die beiden Kabelsteckadapter, von denen jeweils ein Kabelsteckadapter für den Anschluss zu einem Inverter gestaltet ist, sind in einer vorteilhaften Weiterbildung voneinander abweichend. Ein Kabelsteckadapter führt auf einen Elektroanschluss des Inverters, an dem der Kabelsteckadapter angebracht ist.

Am Rande bemerkt, die zuvor aufgeführten Komponenten, wie erste Elektromaschine, wie zweite Elektromaschine, wie erstes Getriebe, wie zweites Getriebe, wie erster Inverter, wie zweiter Inverter, können jeweils als identische Teile ausgeführt werden. Es kann auch gesagt werden, die Elektromaschinen sind als Gleichteile ausgeführt. Gleichartig kann auch gesagt werden, die Getriebe sind als Gleichteile ausgeführt. Genauso kann gesagt werden, dass die Inverter Gleichteile sind. Hiervon unterscheiden sich, in einer günstigen Weiterbildung, die Kabelsteckadapter, durch die unterschieden wird, ob der erste (Teil-)Antriebsblock ein linker oder ein rechter (Teil-)Antriebsblock ist und ob der zweite (Teil-)Antriebsblock ein rechter oder ein linker (Teil-)Antriebsblock ist.

Ein solcher Kabelsteckadapter kann für die seitliche Platzierung am Inverter gestaltet sein. Durch den Kabelsteckadapter wird bestimmt, wo ein Stecker seitlich zu dem Inverter positioniert wird. Der Inverter hat eine, wie oben angesprochen, flache, aber eine (gewisse) Länge und eine (gewisse) Breite abdeckende Form. Somit hat der Inverter eine Längserstreckung bzw. eine Breite, die idealerweise (im Wesentlichen) der Breite der beiden nebeneinander bzw. versetzt zueinander angeordneten Elektromaschinen - im Sinne einer Gesamtbreite - entspricht. Der Kabelsteckadapter hat also eine Breite, die der Breite der beiden Elektromaschinen bzw. bei zylindrischen Gehäusen der Elektromaschinen den Durchmessern der Elektromaschinen, wenn diese vollständig nebeneinander liegen, entspricht.

Vorteilhafterweise ist der Kabelsteckadapter dafür vorgesehen, ein Versorgungskabel, das von einem elektrischen Energiespeicher, z. B. von einem Lithium-Ionen-Akkumulator-Paket, eine elektrische Verbindung an den Inverter über den Kabelsteckadapter herstellt, durch einen Stecker anschließbar zu machen, damit der Inverter aus dem elektrischen Speicher elektrisch versorgt werden kann.

Ein Kabelsteckadapter kann auch als Elektroübergabe bezeichnet werden. Jeder Inverter hat einen eigenen Kabelsteckadapter, wobei - in ihren konkreten Ausführungen - der Kabelsteckadapter des ersten Inverters von dem Kabelsteckadapter des zweiten Inverters abweichen kann. Die Steckerpositionierung, die an einer Stelle an der Längserstreckung des Kabelsteckadapters vorhanden ist, ist vorteilhafterweise für die Bildung einer Gesamtlänge zwischen dem Energiespeicher bzw. einer zentralen Energiequelle und dem Eingang des Inverters, einem Elektroanschluss des Inverters, platziert. Vorteilhafterweise hat das Kraftfahrzeug eine einzige zentrale Energiequelle als Energiespeicher.

Auf diese Weise kann eine Strompfadlänge bestimmt werden. Die Strompfadlänge ergibt sich aus der Länge eines Anschlusskabels zwischen Energiespeicher und der Steckerpositionierung des Kabelsteckadapters sowie einer Leitungsführung innerhalb des Kabelsteckadapters. Ist aufgrund von Leitungsführungen innerhalb des Kraftfahrzeugs die eine Länge eines Versorgungskabels an einen der Kabelsteckadapter kürzer als die Länge eines Kabels an den anderen Kabelsteckadaptern, so kann durch eine Leitungsführung innerhalb des Kabelsteckadapters ein Ausgleich bezüglich der (Gesamt-)Länge, bezüglich der Induktivität, bezüglich des Widerstandes und/oder der Signallaufzeiten auf den elektrischen Verbindungen zwischen Energiespeicher und Antriebsblock bewirkt werden. Somit lässt sich ein Ausgleich zwischen unterschiedlichen Längen der unterschiedlichen Anschlusskabel herstellen.

Vorteilhaft ist es, wenn ein Kabelsteckadapter nicht nur eine Position oder einen Stecker aufweist, in den ein Gegenstecker eines Versorgungskabels einsteckbar ist, sondern ein Kabelsteckadapter eine verschiebliche Steckerposition oder mehrere Stecker anbietet. Je nach Leitungsführung oder Länge des Versorgungskabels kann dann einer der mehreren Stecker ausgewählt werden. Bietet der Kabelsteckadapter mehrere Steckerpositionen, kann ein Anschlusskabel an irgendeiner der zur Verfügung stehenden Steckerpositionen angeschlossen werden. Die Stecker oder Steckerpositionen können so ausgeführt sein, dass ein Anschlusskabel wechselweise an die eine oder andere Position oder an den einen oder anderen Stecker angeschlossen werden kann.

Das Getriebegehäuse ist vorteilhafterweise ein elliptisches bzw. einer elliptischen Form nachgebildetes, flaches, längliches Gehäuse, das zudem schräg (in Bezug auf einen Boden bzw. eine Straße) angesiedelt ist. Werden die beiden Elektromaschinen zueinander (leicht) versetzt (in Bezug auf eine Bodenhöhe) angesiedelt, kann zusätzlich benötigte Bauraumlänge für die Getriebe durch Schrägplatzierung der Getriebegehäuse geschaffen werden. Bei einem elliptischen Getriebegehäuse kann einer der Brennpunkte der Ellipse, die durch einen Schraubkranz des Gehäuses geformt ist, eine Stelle für einen Austritt einer Radabtriebswelle sein. Im Bereich des Brennpunktes tritt eine Radabtriebswelle aus dem Getriebegehäuse aus. In diesem Sinne wird als Brennpunkt ein konstruktives Hilfsmittel bei der Bildung der Ellipse verstanden (gem. üblicher Ellipsengeometrie). Eine Ellipse hat (üblicherweise) zwei Brennpunkte und einen Mittelpunkt sowie dazugehörige Halbachsen. Einer der Brennpunkte wird als Austrittsstelle aus dem Gehäuse benutzt. Einer der Brennpunkte kann als Eintrittsstelle für eine Antriebswelle der Elektromaschine genutzt werden. In einem Brennpunkt wird Antriebsleistung in das Getriebe eingebracht, in dem anderen Brennpunkt wird Antriebsleistung aus dem Getriebe ausgebracht.

Jedes Getriebe hat vorteilhafterweise ein eigenes Gehäuse, das dem Getriebe zugehörige Getriebegehäuse. Jedes Getriebe umfasst ein Getriebegehäuse. Ein Getriebe ist mit einem Getriebegehäuse ausgestattet.

Die Getriebegehäuse reichen weiter nach unten als die Elektromaschinen. Im Bereich einer tiefsten Stelle des Antriebsblocks ist ein Getriebe, genauer ein Getriebegehäuse zu finden. Das Getriebegehäuse reicht weiter in einen bodennahen Bereich als jede der Elektromaschinen. Die Elektromaschinen haben ebenfalls eine tiefste Stelle. Diese tiefste Stelle ist aber weiter von dem Boden bzw. der Straße entfernt als die tiefste Stelle eines der Getriebegehäuse.

Vorteilhafterweise flankieren die Getriebe mit ihren unteren Enden einen Bauraum, der sich parallel zu den Elektromaschinen zwischen den Getrieben erstreckt. Die Elektromaschinen können von der Unterseite durch weitere Komponenten eingefasst werden. Die Elektromaschinen liegen in einem mittleren Bereich. Der von den Getriebegehäusen seitlich eingefasste Bauraum wird von den Elektromaschinen nach oben begrenzt.

Die oberste Seite des Antriebsblocks kann mit Kühlrippen ausgestattet sein. Die Kühlrippen befinden sich, sofern die Inverter die höchsten Bauteile des Antriebsblocks sind, an den Invertern. Während Elektromaschinen nicht nur mechanisch häufig robuster als Inverter sind, sondern für höhere Betriebstemperaturen auch deutlich unproblematischer gestaltet werden können, sind viele elektronische Bauteile, die in einem durch ein Gehäuse gekapselten Inverter einzubauen sind, thermisch empfindlicher; bzw. die Bauteile besitzen nur eine geringere maximale Betriebstemperatur. Werden die Kühlrippen an der Oberseite des Antriebblocks angesiedelt, so kann mithilfe der Luftkonvektion, z. B. durch einen Kraftfahrzeugventilator (z. B. einem Viskolüfter oder einem anderen Kupplungslüfter), eine Temperaturabsenkung der Inverter bewirkt werden.

Die Komponentenkombination aus Elektromaschine und Getriebe erinnert in einer günstigen, besonders kompakten Ausgestaltung an den Großbuchstaben "L"; die Anordnung der beiden Komponenten "Elektromaschine" und "Getriebe" zueinander kann auch als L-förmig bezeichnet werden. Der Inverter erinnert an einen Block. Es können identisch gestaltete Inverter als erster Inverter und als zweiter Inverter Teil des Antriebsblocks werden, wenn einer der beiden Inverter im Vergleich zu dem anderen Inverter an seiner Gehäusehochachse gedreht worden ist und somit beide Inverter spiegelbildlich (insbesondere in Bezug auf eine Spiegelsymmetriestelle) zueinander angesiedelt werden. Idealerweise sind beide Gehäuse der Inverter ein wenig voneinander beabstandet angeordnet, sodass sich eine Trennfuge zwischen den Gehäusen der Inverter ausbildet. Der Punkt für die punktsymmetrische Spiegelung des einen Inverters auf den anderen Inverter kann in der Mitte dieser Trennfuge platziert sein.

Besonders vorteilhaft ist eine Platzierung der Inverter auf dämpfenden Befestigungspunkten, z. B. auf dämpfenden Lagern. Die Inverter können Teil des Antriebsblocks sein und trotzdem vibrationsmäßig von den rotierenden Elektromaschinen entkoppelt sein. Eine dämpfende Aufhängung sichert die ruhige Ortslage jedes Inverters.

Werden die einzelnen (Teil-)Antriebsblöcke miteinander verglichen, so hat jeder (Teil-)Antriebsblock einen eigenen Elektroanschluss, idealerweise einen eigenen Kühlkreislaufeingang, idealerweise einen eigenen Kühlkreislaufausgang und idealerweise Befestigungspunkte, die spiegelbildlich an dem anderen (Teil-)Antriebsblock wiederzufinden sind. Somit sind die Komponenten des Antriebsblocks miteinander verbunden. Beide (Teil-)Antriebsblöcke sind so gestaltet, dass sie aufeinander zugeschoben einen Gesamtblock bilden, der in seinen Abmessungen einer (üblichen) Verbrennungskraftmaschine eines, insbesondere Klein-Kraftfahrzeuges, entspricht.

Die zuvor behandelten Antriebseinheiten, die blockartig aus zwei Einzelradantrieben zusammengesetzt sind, können auch mit den folgenden Worten beschrieben werden.

Der Antriebsblock ist vorteilhafterweise dafür ausgelegt, dass jedem angetriebenen Straßenrad ein Drehmoment von einer eigenen Elektromaschine zuführbar ist. Von einem eigenen Antrieb, insbesondere eines einzelnen Straßenrads, kann gesprochen werden, wenn, entweder unter Verwendung eines Inverters oder ohne Inverter, die zum Bewegen des Fahrzeugs vorhandenen Elektromaschinen individuell mit einer vorzugsweise unterschiedlichen Antriebsleistung aus einem elektrischen Speicher versorgbar sind.

Eine Rotation der Elektromaschine wird zur Bereitstellung eines angeforderten Drehmoments für ein Straßenrad jeweils in einem im Drehmomentenfluss zwischen dem Elektromotor und dem Straßenrad angeordneten Getriebe untersetzt.

Der Antriebsblock ist für den Einbau in einem Kraftfahrzeug bauraumeffizient bzw. möglichst kompakt ausgestaltet.

Unter einem weiteren Blickwinkel kann auch gesagt werden, das Kraftfahrzeug hat eine Längsfahrzeugrichtung, die sich von einem Vorderrad des Fahrzeugs zu einem Hinterrad des Fahrzeugs erstreckt (und darüber hinaus verläuft). Die Längsfahrzeugrichtung kann sich - ohne Präferenz für die eine oder die andere Ausrichtung - von der Fahrzeugfront zum Fahrzeugheck oder von dem Fahrzeugheck zur Fahrzeugfront erstrecken, je nachdem, welche Fahrtrichtung zu betrachten ist. Entlang einer Längsfahrzeugrichtung, die auch als Fahrzeuglängsrichtung bezeichnet werden kann, und ausgerichtet an einer die Längsfahrzeugrichtung schneidenden Querfahrzeugrichtung, die auch als (Kraft-)Fahrzeugquerrichtung bezeichnet werden kann, können eine Fahrzeuglängsachse und/oder eine Fahrzeugquerachse zentral in das Fahrzeug "gelegt werden", um hierdurch Konstruktionshilfen zu bilden. Die Konstruktionshilfen bieten für die Anordnung der Komponenten des (Teil-)Antriebs Bezüge. Bei einem Fahrzeugquereinbau erstreckt sich z. B. eine Getriebewelle, wie die Getriebeeingangswelle und/oder die Getriebeausgangswelle, die auch als eine Abtriebswelle bezeichnet werden kann, entlang einer Fahrzeugquerachse. Idealerweise ist eine Fahrzeuglängsrichtung als eine Erstreckung rechtwinklig zu einer Fahrzeugquerrichtung zu verorten. Beispiele für Fahrzeugkomponenten, die üblicherweise in einer Kraftfahrzeugquerrichtung eingebaut sind, sind Kfz-Achsen, genauso auch Lenkgestänge. Mithilfe der Fahrzeuglängsachse und der Fahrzeugquerachse, die insbesondere einander schneiden, wird eine Ebene als eine (weitere) Konstruktionshilfe aufgespannt, die einen bodennahen Halbraum von einem bodenfernen Halbraum im Fahrzeug trennt. Sich senkrecht zu der Fläche erstreckend verläuft eine (gedachte) Fahrzeughochachse, die sowohl zum Boden hin als auch in den Himmel gerichtet ist. Ein Abschnitt auf der Achse (Fahrzeughochachse) kann als ein bodennaher Bereich bezeichnet werden, der unterhalb eines weniger bodennahen Bereichs bzw. unter einem bodenferneren Bereich angesiedelt ist. Mit diesen Ortsangaben "bodennaher Bereich", "bodenferner Bereich", "Fahrzeughochachse", "Fahrzeuglängsachse" und "Fahrzeugquerachse" kann eine geometrische Platzierung einer kleineren Komponente, wie eine Parksperre und/oder wie eine Parksperrenaktuatorik, in einem größeren Körper, wie dem Antriebsblock oder dem Fahrzeug, angegeben werden. Hierbei dienen die Achsen, Flächen und Bereiche zur Konstruktionshilfe.

Eine Parksperrenaktuatorik dient der Betätigung zumindest einer der Parksperren. Diese Aktuatorik kann - in einer Ausgestaltung - äußerst energieeffizient manuell über einen Wählhebel als ein erstes Bauteil der Aktuatorik betätigbar sein. Der Parksperrenaktuator als Kraftquelle der Aktuatorik kann aber auch einen Gleichstrommotor oder eine hydraulische oder eine pneumatisch in sich verschiebbare Zylinder-Kolben-Anordnung umfassen. Gibt es eine Kraftquelle so kann der Wählhebel als reiner Auslöseknopf realisiert sein. Der Wählhebel kann aber einen Teil der Betätigungsenergie einleiten, während die Kraftquelle einen weiteren Teil der Betätigungsenergie für den Parksperrenaktuator liefert. Ein Gleichspannungsmotor (DC-Motor) ist in einem rein elektrisch angetriebenen Fahrzeug mit wenigen weiteren Komponenten integrierbar. Ein Inverter nach dem Stromspeicher ist nicht notwendig. Besonders vorteilhaft ist ein DC-Motor, der seine Energie wenigstens zum Teil aus einer zusätzlichen elektrischen Kapazität oder aus einem zusätzlichen Stromspeicher beziehen kann.

Nach einem Stromausfall bei der Versorgung des Antriebssystems kann unterhalb einer geeigneten Grenzgeschwindigkeit bei der Rotation des DC-Motors die Parksperre selbsttätig in eine Sperrstellung verfahren, insbesondere in den Fällen, in denen ein ausreichender Energiespeicher zur Verfügung steht.

Die Parksperrenaktuatorik umfasst mindestens einen, vorzugsweise genau zwei, Parksperrenaktuatoren. Ein Bauteil einer Parksperrenaktuatorik kann eine Parksperrenklinke bzw. eine Sperrklinke, ein Sperrhebel, ein Sperrstift oder eine Rastierung sein.

Im Fall einer vorhandenen Klinke als Sperrelement hat diese Klinke einen Eingriffsbereich, der an einem zum Eingriffsbereich gegengeformten Aufnahmebereich, wie an einem Zahn, an einer Zahnlücke, an einer Klaue oder an einer Lücke in der Klaue, eine Rotationsbewegung in einer ersten Drehrichtung und in einer der ersten Drehrichtung entgegengesetzten zweiten Drehrichtung blockieren kann. Diese Richtungen entsprechen einer Vorwärts- bzw. Rückwärts-Rollrichtung eines Fahrzeugs.

Der Eingriffsbereich und der Aufnahmebereich sind mit mindestens zwei, vorzugsweise zueinander komplementär geformten, Sperrflanken ausgestattet. Ein Sperrzustand der Parksperre liegt vor, wenn sich die Klinke in einer Eingriffsstellung befindet. Über die Klinke ist somit eine Verbindung zwischen einer drehbaren Getriebekomponente und einer drehfesten Getriebekomponente so herstellbar, dass der in der entsperrten Stellung gegebene Rotationsfreiheitsgrad durch Sperrung verloren geht. Der Aufnahmebereich kann z. B. an einer Rastenplatte oder einem Parksperrenrad ausgebildet sein.

Ein Einrasten der Parksperre erfolgt - in einer Ausgestaltung - im Wege einer Drehung der drehbaren Getriebekomponente, wobei z. B. ein Andruckmechanismus, der insbesondere ein elastisch ausstreckendes Bauteil der Parksperrenaktuatorik umfasst.

Ist eine Klinke vorhanden, so fährt die Klinke in eine Rastierstellung ein.

Ein Beispiel für einen Andruckmechanismus ist eine drehbar gegenüber dem Getriebegehäuse gelagerte Rolle an einer Biegefeder, die auch als Andruckfeder bezeichnet werden kann. Die

Rolle ist mithilfe eines Wählhebels und/oder eines Betätigungsgestänges der Aktuatorik in eine Auflage an einem Rücken des Sperrelements, z. B. der Klinke, verbringbar. Die Parksperrenaktuatorik kann somit mehrere Bauteile aufweisen, die jeweils für sich und/oder auch in einem Zusammenspiel eine Verbesserung der Parksperre in funktionaler Hinsicht ergeben.

Ein Bauteil einer Parksperrenaktuatorik kann ein Passstift sein, um den das Sperrelement, z. B. die Klinke, schwenkbar gelagert ist. Durch eine Relativbewegung wie eine Klinkendrehung kann der Eingriffsbereich der Klinke in einer Radialrichtung auf den Aufnahmebereich zu bewegt werden, wodurch der Sperrzustand ausbildbar ist. Kräfte, die in dem Aufnahmebereich auf die Sperrflanken wirken, können über den Passstift auf das Getriebegehäuse abgeleitet werden, insbesondere ohne dass die Klinke dabei ihre Position ändert.

Ein Lösen der Parksperre, z. B. veranlasst über den Wählhebel, wird durch ein Schwenken, z. B. der Klinke, in einer Relativbewegung herbeigeführt, wodurch ein Abstand zwischen dem Eingriffsbereich und dem Aufnahmebereich, insbesondere in eine Radialrichtung, herbeigeführt wird. In einer vorteilhaften Weiterbildung ist ein Zurückschwenken der Klinke bis zu einem Anschlag, wobei eine Getriebedrehbarkeit beibehalten bleibt. Der Anschlag stellt sicher, dass die Klinke nur einen kurzen Weg bis zum Einrasten zurücklegen muss.

Ein Betätigungsgestänge kann als Komponente bzw. Baugruppe der Parksperrenaktuatorik mehrere Bauteile umfassen, wie wenigstens eines der nachfolgend benannten Bauteile:
- mindestens eine Schubstange,
- mindestens ein Gelenk,
- mindestens einen Umlenkhebel,
- mindestens eine Drehscheibe,
- mindestens einen Anschlag,
- mindestens eine Führung oder
- mindestens eine Feder, wie eine Rückholfeder, eine Andruckfeder oder eine Ausgleichsfeder.

Vorzugsweise gehören mindestens zwei solcher Bauteile, insbesondere paarweise, zum Betätigungsgestänge. Das Betätigungsgestänge stellt eine, vorzugsweise formschlüssige, Verbindung zwischen wenigstens einer Sperrflanke (oder auch zwei Sperrflanken) und dem Wählhebel bzw. dem Parksperrenaktuator her.

Eine Flankenschräge im Bereich einer Sperrflanke kann z. B. im Zusammenwirken mit einer Ausgleichsfeder einen Eingriff der Parksperre verhindern, wenn eine Geschwindigkeit eines Fahrzeugs größer ist als eine Grenzgeschwindigkeit. Die Grenzgeschwindigkeit kann z. B. zwischen 1 km/h und 10 km/h liegen. Die Rückholfeder unterstützt ein Ausrasten, im Falle, dass das Rastelement eine Klinke ist, der Klinke, wenn der Fahrbetrieb wieder aufgenommen werden soll.

Wenn die Parksperrenaktuatorik mindestens einen Positionssensor, wie einen Klinkensensor, oder einen Drehsensor, wie einen Parksperrenradsensor, umfasst, kann ein Motorsteuergerät permanent den vorliegenden Zustand der Parksperre erfassen. Eine Betätigung der Klinke zum Einrasten ist auf die Drehstellung des Parksperrenrads synchronisierbar.

Die durch den Antriebsblock zur Verfügung gestellten Antriebe können, auch in einer Ausgestaltung des Antriebs als verzweigungsfreie Antriebe bezeichnet werden.

Nach einem weiteren Aspekt bei der Auslegung und der Zuordnung der Antriebskombination zum jeweiligen Straßenrad kann, insbesondere bei einem haftungsarmen Bodenkontakt, eines der antreibbaren Straßenräder an einer Achse über das andere antreibbare Straßenrad der gleichen Achse mit dem zu diesem anderen Straßenrad gehörenden, eigenen Elektromotor und mit der dazugehörenden Parksperre das Fahrzeug vollständig im Stand gehalten werden. Der Stillstand des Fahrzeugs ist sichergestellt, weil mit der Aktivierung der ersten Parksperre des einen Straßenrads (jenes ohne Bodenhaftung) zeitgleich das andere Straßenrad (mit Bodenhaftung) durch Aktivierung der zweiten Parksperre des anderen Straßenrads jenes andere Straßenrad gegen eine Verdrehung gesperrt ist. Ein einziger Parksperrenaktuator ist bei einer Verzweigung des Kraftflusses aus dem Parksperrenaktuator in der Lage, zwei Parksperren gleichzeitig einzulegen.

Unter einem idealisierten Blickwinkel sieht ein Betrachter eines schematischen Fahrzeugaufbaus, der den Blick auf den Antriebsblock entlang der Längsfahrzeugrichtung gerichtet hat, eine flächige Projektion der Komponenten des Antriebsblocks innerhalb der Umrisse des Fahrzeugs, wobei durch die Abfolge der Komponenten entlang der Fahrzeuglängsrichtung die näher zu dem Betrachter angeordneten Komponenten diese anderen Komponenten zumindest teilweise überdecken können, also jene Komponenten, die ferner zu dem Betrachter angeordnet sind. Die beiden Elektromaschinen des Antriebsblocks sind aufeinander folgend entlang der Längsfahrzeugrichtung so angeordnet, dass in einer Projektion von Umrissen der Elektromaschinen nur ein Teil der Umrisse zu sehen ist, weil sie sich überschneiden, sodass die durch die Umrisse eingeschlossenen Flächenbereiche (in jener Projektion) zumindest teilweise deckend sind. Wird bei der Bildung einer gedanklichen Abstraktion nicht nur flächig, sondern räumlich gedacht, wird also die räumliche Dimension entlang der Längsfahrzeugrichtung hinzugenommen, so kann von einer teilweise fluchtenden Anordnung der Elektromaschinen entlang der Längsfahrzeugrichtung, insbesondere in einem solchen Fall, gesprochen werden. Die Überdeckung macht in einer Ausführungsform zumindest 30 %, vorzugsweise zumindest 50 %, der Querschnittsfläche jeder der beiden Elektromaschinen aus. Entlang der Längsfahrzeugrichtung können die Elektromaschinen einen Mindestabstand zueinander haben. Ein Mindestabstand von z. B. zwei Zentimetern ermöglicht eine verbesserte Kühlung der Elektromaschinen durch eine Rundum-Luftzirkulation.

Mit anderen Worten, die vorliegende Erfindung stellt einen Antriebsblock eines elektromotorischen Kfz-Antriebs vor, der vorteilhafterweise zwei Radantriebe bietet. Jeder der beiden Radantriebe kann durch eine eigene, d. h. durch eine erste Elektromaschine und durch eine zweite Elektromaschine angetrieben werden. Zu dem Antriebsblock gehören weitere Komponenten, wie z. B. ein Inverterblock und wie z. B., sofern notwendig, eine Parksperrenvorrichtung. Die Vorrichtungen können an unterschiedlichen Seiten einer durch Rotationszentren der Elektromaschinen bestimmten konstruktiven Ebene angesiedelt sein.

Die vorgestellte Anordnung der einzelnen Komponenten eines Antriebsblocks hat zahlreiche Vorteile. Die empfindlicheren Bauteile, wie z. B. die Inverter, sind aus der größten Gefahrenzone herausgenommen. Steinschläge und andere mechanische Impulse können deutlich geringere Schäden an den Gehäusen der Elektromaschinen verursachen als an den, durch die gewählte erhöhte Position filigraner auslegbaren, Gehäusen der Inverter.

Ein ganz besonderer Vorteil ergibt sich daraus, dass aufwendig entwickelte Kraftfahrzeuge mit ihren langen Entwicklungszeiten für Karosserien weiterhin nutzbar sind. Solche Kraftfahrzeuge können wahlweise mit einer Verbrennungskraftmaschine oder mit einem der zuvor vorgestellten Antriebsblöcke ausgestattet werden.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 in schematischer Darstellung eine erste Ausführungsform eines Kraftfahrzeugs zur Aufnahme eines erfindungsgemäßen Antriebsblocks in einer Ansicht von einer Seite zeigt,
Figur 2 in schematischer 3D-Darstellung die erste Ausführungsform des Kraftfahrzeugs nach Figur 1 zeigt,
Figur 3 in schematischer Darstellung die erste Ausführungsform des Kraftfahrzeugs nach Figur 1 in einer Schnittansicht von oben zeigt,
Figur 4 in schematischer Darstellung ein weitere Ausführungsform eines Kraftfahrzeugs mit einem Antriebsblock zeigt,
Figur 5 ein erstes detailliertes Achsarrangement eines reinen Einzelradantriebs als Schemadarstellung zeigt,
Figur 6 ein zweites detailliertes Achsarrangement eines Einzelradantriebs an einer gemeinsamen Achse als Schemadarstellung zeigt,
Figur 7 ein drittes detailliertes Achsarrangement als Schemadarstellung zeigt, das als Achsantrieb genutzt werden kann,
Figur 8 in schematischer Darstellung eine vierte Ausführungsform eines Antriebsblocks zeigt,
Figur 9 in schematischer Darstellung eine fünfte Ausführungsform eines Antriebsblocks zeigt,
Figur 10 in schematischer Darstellung eine sechste Ausführungsform eines Antriebsblocks zeigt,
Figur 11 in schematischer Darstellung eine siebte Ausführungsform eines Antriebsblocks zeigt,
Figur 12 in schematischer Darstellung eine achte Ausführungsform eines Antriebsblocks zeigt,
Figur 13 in schematischer Darstellung eine neunte Ausführungsform eines Antriebsblocks zeigt,
Figur 14 in schematischer Darstellung eine zehnte Ausführungsform eines Antriebsblocks zeigt,
Figur 15 in schematischer Darstellung eine elfte Ausführungsform eines Antriebsblocks zeigt,
Figur 16 in schematischer Darstellung eine zwölfte Ausführungsform eines Antriebsblocks zeigt,
Figur 17 eine 3D-Darstellung eines Antriebsblocks, basierend auf der Ausführungsform gem. Figur 8, zeigt,
Figur 18 eine Ansichten von unten des Antriebsblocks gemäß Figur 17 zeigt,
Figur 19 drei Seitenansichten des Antriebsblocks gemäß Figur 17 zeigt,
Figur 20 eine 3D-Darstellung eines Antriebsblocks, anlehnend an die Ausführungsform gem. Figur 13, zeigt,
Figur 21 drei Seitenansichten des Antriebsblocks gemäß Figur 20 zeigt,
Figur 22 die Motoren, Parksperrenaktuatoren und weitere Komponenten eines Antriebsblocks zeigt,
Figur 23 eine Seitenansicht einer Ausführungsform eines als Einbaugruppe bereitgestellten, erfindungsgemäßen Antriebsblocks zeigt,
Figur 24 eine perspektivische Darstellung eines weiteren Ausführungsbeispiels eines als Einbaugruppe bereitgestellten, erfindungsgemäßen Antriebsblocks zeigt.

### Figurenbeschreibung

Figur 1 zeigt schematisch ein Kraftfahrzeug 201. Das Kraftfahrzeug 201 wird in den Figuren Figur 2 und Figur 3 anhand der ausgewählten Komponenten aus zwei weiteren Blickwinkeln dargestellt. Zur besseren Übersichtlichkeit ist bei den dargestellten Komponenten eine Auswahl getroffen worden, um nicht die Figuren zu überfrachten.

Das Kraftfahrzeug 201 hat, so wie aus Figur 1 zu entnehmen ist, eine Fahrgastzelle 223, in der sich ein Fahrer des Kraftfahrzeugs 201 aufhalten kann und über das Lenkrad 221 auf das Lenkgestänge 225 einwirken kann, um eine Richtungsänderung des Kraftfahrzeugs 201 zu bewirken.

In abstrahierender Weise sind zwei Bauräume 239, 239^{I} dargestellt. Der eine Bauraum 239 erstreckt sich vor der Fahrgastzelle 223, somit im Frontbereich des Kraftfahrzeugs 201, wobei der Bauraum 239 sich zum Teil auch unter einem vorderen Bereich der Fahrgastzelle 223 erstreckt. Der andere Bauraum 239^{I} erstreckt sich hinter der Fahrgastzelle 223, somit im Heckbereich des Kraftfahrzeugs 201, wobei der Bauraum 239^{I} schon unterhalb der Fahrgastzelle 223 anfängt.

Die Bauräume 239 bzw. 239^{I} befinden sich unterhalb einer Motorhaube 247, die auch als Frontklappe bezeichnet werden kann, bzw. unterhalb eines Kofferraumdeckels 249, der auch als Heckklappe bezeichnet werden kann.

Der Bauraum 239, 239^{I} fällt mit den Achsen 209, 209^{I} zusammen. Mit anderen Worten, der Bauraum 239, 239^{I} ist dort, wo auch die Achse 209, 209^{I} in Kraftfahrzeugquerrichtung 213 durch das Kraftfahrzeug 201 hindurchgeht (für die Kraftfahrzeugquerrichtung 213 siehe insbesondere Figur 4). Der jeweils zur Verfügung stehende Bauraum 239, 239^{I} wird durch die Längsträger, wie den Längsträger 231, und durch die Querträger, wie die Querträger 233, 233', 233", 233^{III} begrenzt. Ein Bauraum 239, 239^{I} liegt zwischen den Vorderrädern 235 bzw. den Hinterrädern 237.

Die Fahrgastzelle 223 befindet sich somit oberhalb der Längsträger, wie dem Längsträger 231, und den Querträgern, wie den Querträger 233, 233', 233", 233^{III}. Der vordere Bauraum 239 wird durch seine Bauraumgrenze 241 bestimmt und begrenzt. Der hintere Bauraum 239^{I} wird durch seine Bauraumgrenze 251 ebenfalls begrenzt.

Der vordere Bauraum 239 erstreckt sich somit in einem Bereich unterhalb der Motorhaube 247.

Der hintere Bauraum erstreckt sich somit in einen Bereich unterhalb des Kofferraumdeckels 249.

Die durch vier seitliche Begrenzungen sich ergebende schlauchförmige Bauraumgrenze 241 setzt sich aus einer unteren Bauraumgrenze 243, einer oberen Bauraumgrenze 245, einer vorderen Bauraumgrenze 253 und einer hinteren Bauraumgrenze 255 zusammen. Zwischen den gegenüberliegenden Bauraumgrenzen 243, 245 bzw. 253, 255 erstreckt sich der maximal bereitstehende Bereich, das maximal mögliche Volumen für einen Antriebsblock (siehe z. B. den Antriebsblock 1 in Figur 4).

Die vordere Bauraumgrenze 253 ergibt sich durch einen Kühler 261 und durch einen ersten Querträger 233. Die hintere Bauraumgrenze 255 wird durch eine Trennwand 263 der Fahrgastzelle 223 gebildet.

Der hintere Bauraum 239^{I} hat verglichen mit dem vorderen Bauraum 239 spiegelbildlich angeordnete Grenzflächen 253^{I}, 255^{I}, die Teil der Bauraumgrenze 251 sind, weil dessen vorderer Bereich sich hinter bzw. teilweise unter der Fahrgastzelle 223 befindet und dessen hinterer Bereich sich nahe bei dem hintersten Querträger 233^{III} befindet.

Wie sich ein Bauraum 239, 239^{I} zwischen den Rädern 235, 235^{I} bzw. 237, 237^{I} und zwischen den Längsträgern 231, 231^{I} erstreckt, lässt sich besonders gut durch eine Hinzunahme der Figuren 2 und 3 zu der Figur 1 nachvollziehen. Im Folgenden wird also Figur 1 zusammen mit den Figuren 2 und 3 behandelt.

Die Bauraumgrenzen 241, 251 der Bauräume 239, 239^{I} liegen außerhalb der Fahrgastzelle 223 bzw. zwischen den Rädern 235, 235^{I} bzw. 237, 237^{I} der jeweiligen Achse 209, 209^{I}. Eine Bauraumbegrenzung nach oben hin ergibt sich durch die Fahrgastzelle 223, die so groß gestaltet sein muss, dass ein Fahrer am Lenkrad 221 in sitzender Stellung drehen kann und somit über das Lenkgestänge 225 den Winkel der zu steuernden Straßenräder 235, 235^{I} einstellen kann. Von oben betrachtet befindet sich zumindest ein Teil der Bauräume 239, 239^{I} unter einer Klappe 247, 249, wodurch ein Zugriff für Wartungsarbeiten erleichtert wird. Eine weitere Begrenzung für die Bauräume 239, 239^{I} ergibt sich durch die Querträger 233, 233^{III} und die Längsträger 231, 231'. Die Bauraumgrenze 241 setzt sich, wie bereits gesagt wurde, aus einer unteren Bauraumgrenze 243, einer oberen Bauraumgrenze 245 und vier seitlichen Bauraumgrenzen 244, 246, 253, 255 zusammen, die zu ebenen Grenzflächen abstrahiert werden können. Diese Grenzflächen bilden, wenn sie alle zusammen genommen werden, die quaderartige Bauraumgrenze 241. Zwei seitliche Bauraumgrenzen 244, 246 sind den Rädern 235, 235^{I} zugewandt. Die seitlichen Bauraumgrenzen 244, 246 sind durch Dreiecks-Querlenker, wie der Dreiecks-Querlenker 234 (vorne) für die Bauraumgrenze 241 des vorderen Bauraums 239 bzw. Dreiecks-Querlenker 236 (hinten) für die Bauraumgrenze 251 des hinteren Bauraums 239^{I} (siehe Figur 1) vorgegeben. Entsprechende Querlenkeranordnungen sind in dem Kraftfahrzeug 201 nicht nur linksseitig, sondern auch rechtsseitig (nicht in den gewählten Ansichten zu sehen) vorhanden. Eine vordere Bauraumgrenze 253 verläuft auf einer Innenseite des Kühlers 261 bzw. eines Rahmens zur Unfallenergieaufnahme. Eine hintere Bauraumgrenze 255 befindet sich vor der Trennwand 263 zur Fahrgastzelle 223. Somit wird die Bauraumgrenze 241, 251 insbesondere durch die umliegend vorhandenen Komponenten des Kraftfahrzeugs 201 bestimmt. Die untere Bauraumgrenze 243, die obere Bauraumgrenze 245 und die vier seitlichen Bauraumgrenzen 244, 246, 253, 255 können als Grenzflächen in beliebiger Reihenfolge (als erste, zweite etc.) durchnummeriert werden. Wie sich aus den weiteren Ausführungen ergibt, hängt es von der Einbaurichtung des Kfz-Antriebs 203, 203^{I} ab (siehe Figuren 4 und 7), welche Baumraumgrenze 243, 244, 245, 246, 253 ,255 zur ersten Bauraumgrenze wird.

Die Bauraumgrenze 251 im Heckbereich des Kraftfahrzeugs 201 setzt sich spiegelbildlich aus den Grenzflächen zusammen wie die Bauraumgrenze 241 im Frontbereich des Fahrzeugs 201, durch die größeren Grenzflächen ergibt sich aber ein größeres Volumen, das für ein Antriebsaggregat wie für den Antriebsblock 1 zur Verfügung steht.

Die Grenzflächen 244, 246, 253, 255 des Bauraums können, wie sich aus der Figur 1 ergibt, auch mindestens eine Abstufung aufweisen. Auf diese Weise können sonstige Toträume im Kraftfahrzeug, wie z. B. in dem Kraftfahrzeug 201 nach Figur 1, genutzt werden. Die Nutzung des möglichen Bauraums ist besonders bauraumeffizient und wird durch einen geeigneten Antriebsblock wie dem Antriebsblock 1 nach Figur 1 ausgefüllt.

Die Bauraumgrenzen 241, 251 legen jeweils ein maximales Aufnahmevolumen für einen Einbau eines Antriebsblocks (vgl. Antriebsblock 1 nach Figur 4) fest. Anders gesagt, verschiedenartig konfigurierte Antriebsblöcke (vgl. Figur 8 bis Figur 24) eignen sich für einen Einbau in ein Kraftfahrzeug (vgl. die Kraftfahrzeuge 201 nach Figur 1 und 201^{I} nach Figur 4) besonders gut in Abhängigkeit von den konstruktiven sowie sicherheitstechnisch bedingten Bauraumgrenzen 241, 251. So ergeben sich je nach Bauraumgrenzen 241, 251 Vorteile für die eine oder die andere Konfiguration in Übereinstimmung mit den Figuren 8 bis 24.

Figur 4 zeigt in schematischer Darstellung ein Kraftfahrzeug 201^{I} mit einem erfindungsgemäßen Antriebsblock 1. Zu dem Kfz-Antrieb 203 gehört der Antriebsblock 1. Teil des Kfz-Antriebs 203 ist der elektrische Energiespeicher 143, der über Kabel, wie das Versorgungskabel 139 und das Versorgungskabel 141, mit dem Antriebsblock 1 verbunden ist.

Der Antriebsblock 1 ist ein Einzelradantrieb 205^{I}, 207^{I}, der zwei einzelne (Straßen-)Räder über seine beiden unabhängig arbeitenden Einzelradantriebe 205, 207, d. h., erster Einzelradantrieb 205 und zweiter Einzelradantrieb 207, antreiben kann. Die beiden Einzelradantriebe 205, 207 befinden sich an der gleichen Achse 209^{II}, die in dem Ausführungsbeispiel nach Figur 4 die Hinterachse des Kraftfahrzeugs 201^{I} ist (z. B. von einem typischen, an der Hinterachse angetriebenen Sportwagen).

In einer weiteren, graphisch nicht dargestellten Ausführungsform können sich die Einzelradantriebe an der Vorderachse, siehe beispielsweise die Achse 209 in Figur 1, befinden. Weitere mögliche Ausgestaltungen weisen Einzelradantriebe an der Hinterachse als eine erste gleiche Achse und an der Vorderachse als eine zweite gleiche Achse auf. Somit sind auch solche Achsenanordnungen erfindungsgemäß ausführbar, bei denen z. B. im hinteren Fahrzeugbereich mehrere einzeln angetriebene Achsen vorhanden sind. Jede Achse ist für sich betrachtet eine als gleiche Achse zu bezeichnende Achse, die mit zwei Einzelradantrieben ausgestattet sein kann.

Anhand der Fahrgastzelle 223^{I} und der Anordnung des Lenkrads 221^{I} an dem Lenkgestänge 225^{I} ist in Figur 4 zu erkennen, dass es sich in dem Ausführungsbeispiel nach Figur 4 um einen Hinterachsantrieb bei dem Einzelradantrieb 205^{I}, 207^{I} handelt. Der Antriebsblock 1^{I} ist quer eingebaut, was an der Kraftfahrzeugquerrichtung 213 zu erkennen ist. Der Antriebsblock 1^{I} ist in Längsrichtung schmaler als in Querrichtung, wie durch einen Vergleich der Erstreckung des Antriebsblocks 1^{I} in Längsfahrzeugrichtung 211 im Vergleich mit der Erstreckung in Kraftfahrzeugquerrichtung 213 zu erkennen ist.

Die Achsen 209^{II}, 209^{III} sind in Figur 4 strichliert eingetragen. Bei den Achsen 209^{II}, 209^{III} handelt es sich um Konstruktionshilfen bzw. Gedankenstützen, durch die die Anordnung der Straßenräder des Kraftfahrzeugs 201^{I} verdeutlicht wird.

In dem in Figur 4 gezeigten Konstruktionsbeispiel sind die Straßenräder mit jeweils einer Einzelradaufhängung befestigt, die eine bewegliche Verbindung zwischen einem Fahrzeugkörper (ohne Bezugszeichen), der die Fahrgastzelle 223^{I} umfasst, und dem jeweiligen Straßenrad bildet. Die Achsen 209", 209^{III} sind, mit anderen Worten, durch Führungselemente der Räder erkennbar, wie anhand von Einzelradaufhängungen, z. B. die zeichnerisch dargestellten Dreiecksaufhängungen, wie aber auch anhand der Achsschenkel, anhand einer Pendelachse, anhand einer Längslenkerachse, anhand einer Schräglenkerachse, anhand einer Mehrlenkerachse, anhand einer Portalachse, anhand einer Starrachse oder anhand von Verbundaufhängungen gemäß weiteren, nicht im Einzelnen graphisch dargestellten Ausführungsmöglichkeiten.

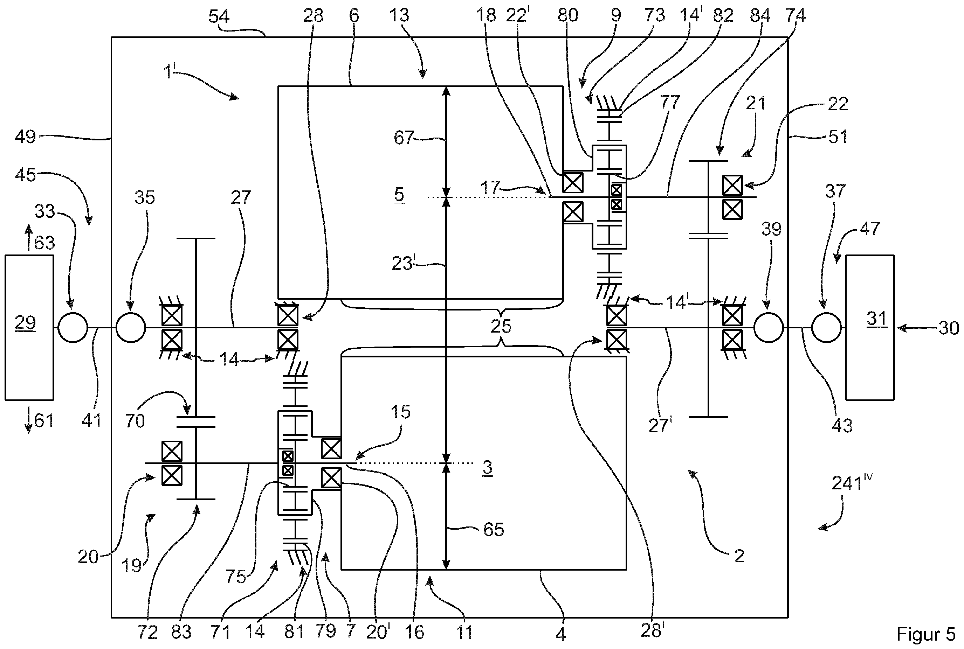

Die später noch eingehender beschriebene Figur 5 zeigt ein mögliches Getriebeschema für einen verblockten Einzelradantrieb eines Antriebsblocks 1^{I}, der innerhalb der Bauraumgrenzen 241, 243, 244, 245, 246, 251, 253, 253', 255, 255', die in den Figuren 1 bis 4 vorgestellt worden sind, ausführbar ist. Die aus dem Getriebeschema nach Figur 5 abgeleiteten Getriebeschemata, die zu den Antriebsblöcken 1^{II} und 1^{III} gem. den Figuren 6 und 7 führen, können ebenfalls innerhalb eines Bauraums arrangiert werden, der die Bauraumgrenzen 241, 243, 244, 245, 246, 251, 253, 253^{I}, 255, 255^{I} beachtet.

Das im Anschluss an Figur 5 erläuterte Getriebeschema nach Figur 6 erlaubt es, für einen Einzelradantrieb alle Getriebekomponenten möglichst kompakt beieinander anzuordnen, um einen äußerst kompakten Antriebsblock 1^{II} zu schaffen.

In einer weiteren (nicht detailliert dargestellten) Ausführungsform, basierend auf einer Anordnung nach Figur 6, kann der elektromotorische Antrieb von beiden Elektromaschinen 3^{I}, 5', mithilfe einer Schalteinheit zwischen den Getrieben 19^{I}, 21', auf die beiden Straßenräder 29^{I}, 31^{I} der gemeinsamen Achse 30^{I} gekoppelt und wieder voneinander getrennt werden. Das gemeinsame Koaxiallager 26 wird durch eine Schaltgruppe ersetzt, die die beiden Abtriebswellensegmente 27^{IV} und 27^{III} miteinander blocken können. Damit ist eine Antriebsleistungssteigerung für eines der Straßenräder bei schwierigen Bodenverhältnissen möglich. Außerdem bleibt ein entsprechendes Kraftfahrzeug fahrtauglich, obwohl einer der Elektromotoren ausgefallen sein könnte.

Gemäß der weiteren Ausführungsform eines Getriebeschemas nach Figur 7 werden die elektromotorischen Antriebsmomente von beiden Elektromaschinen 3", 5^{II} auf die beiden Straßenräder 29^{I}, 31^{I} über ein Differenzial 87 verteilt. Damit bleibt selbst bei Ausfall einer der Elektromaschinen 3^{II}, 5^{II} noch immer ein Antrieb erhalten.

Natürlich ist es auch möglich, Schalteinheiten in Anlehnung an Figur 6 und Differentiale gem. Figur 7 zu kombinieren, um aus einem Einzelradantrieb 2, so wie in Figur 5 dargestellt, einen als Achsantrieb schaltbaren Gesamtantrieb zu machen.

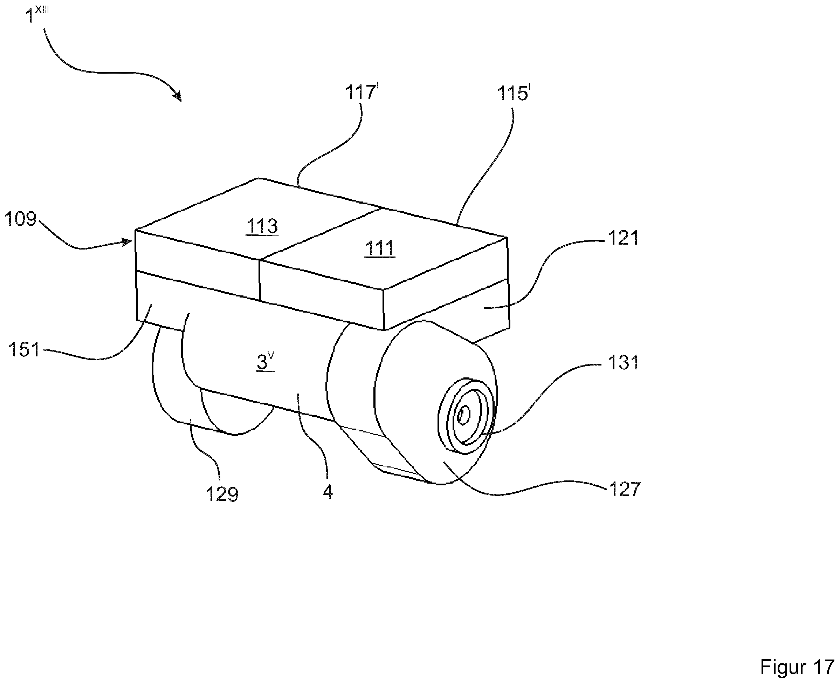

In den Figuren 5 bis 16 werden Bauraumgrenzen 241^{I}, 241^{II}, 241^{III}, 241^{IV} für die einzelnen Antriebe (vgl. Antrieb 203 in Figur 4, vgl. Einzelradantrieb 2 in Figur 5 bzw. Einzelradantrieb 2^{I} in Figur 6, vgl. Kfz-Antrieb 203^{I} in Figur 7) durch rechteckige Kästen verdeutlicht. Diese Anordnungen sind spiegelbildlich auf einen im Fahrzeug im hinteren Teil existierenden Bauraum, begrenzt durch eine hintere Bauraumgrenze 251 (siehe Figur 1), übertragbar. D. h., obwohl schwerpunktmäßig in den Figuren 1 bis 16 ein Einbau in einem vorderen Bauraum 241, 241', 241", 241^{III}, 241^{IV} eines Kraftfahrzeugs, wie dem Kraftfahrzeug 201 nach Figur 1, vorgestellt wird, können die vorgestellten Antriebe, wie der Antrieb 203 gem. Figur 4, auch in einem hinteren Bauraum, wie dem Bauraum 251 (nach Figur 1), eingebaut werden. Die überwiegend durch rechte Winkel abgesteckten Grenzen, die die Bauraumgrenzflächen 243, 243', 243^{II}, 243^{III}, 244, 244', 244", 244^{III}, 245, 245', 245", 245^{III}, 246, 246^{I}, 246", 246^{III} vorgeben, werden bei möglichst guter Ausnutzung des zur Verfügung stehenden Bauraums durch die Antriebsblöcke 1^{I}, 1", 1^{III}, 1^{IV}, 1^{V}, 1^{VI}, 1^{VII}, 1^{VIII}, 1^{IX}, 1^{X}, 1^{XI}, 1^{XII}, die schematisch in den Figuren Figur 5 bis Figur 16 dargestellt sind, bzw. durch die in den Figuren Figur 17 bis Figur 24 gezeigten Antriebsblöcke 1^{XIII}, 1^{XIV}, 1^{XV}, 1^{XVI}, 1^{XVII} eingehalten.

Im Folgenden werden die schematischen Darstellungen, die in den Figuren Figur 5, Figur 6 und Figur 7 abgebildet sind und Antriebe mit zwei Motoren 3, 5, 3^{I}, 5^{I}, 3", 5^{II} für Straßenräder einer Achse (Einzelradantriebe und Achsantriebe) wiedergeben, ausführlicher behandelt.

In Figur 5 ist eine gegenläufige Ausrichtung der Elektromaschinen 3, 5 gezeigt. Die Laufrichtung der Elektromaschinen 3, 5 ist durch eine Steuereinheit (nicht dargestellt) umkehrbar. In den Figuren Figur 5 und Figur 7 sind die Elektromaschinen 3', 5', 3", 5^{II} jeweils paarweise zu betreiben und sollten immer gleichläufig bzw. in die gleiche Drehrichtung drehend betrieben werden.

Der maximal zur Verfügung stehende Bauraum für den Antriebsblock 1^{I} gem. Figur 5 bzw. für den Antriebsblock 1^{II} gem. Figur 6 bzw. für den Antriebsblock 1^{III} gem. Figur 7 wird besonders anschaulich, wenn jede der Figuren Figur 5, Figur 6 und Figur 7 jeweils für sich zusammen mit den Figuren Figur 1 bis Figur 4 betrachtet wird. Der Bauraum ergibt sich aus einem Freiraum zwischen einer ersten randständigen Versteifung, insbesondere einem linken Holm 49, 49', 49^{II}, der insbesondere in Figur 5, Figur 6 und Figur 7 zu sehen ist, und einer zweiten randständigen Versteifung, insbesondere einem rechten Holm 51, 51', 51^{II}, der ebenfalls in Figur 5, Figur 6 und Figur 7 zu sehen ist.

Zur besseren Übersichtlichkeit der Darstellung wurden die Gehäuseteile des Gehäuses 14, 14^{I}, 14", 14^{III} des Antriebsblocks 1^{I}, 1^{II}, 1^{III} in den Darstellungen von Figur 5 bis Figur 7 nur symbolisch eingezeichnet. Außerdem wurde, in der Absicht, die Übersichtlichkeit zu steigern, die Steuerungen der Elektromaschinen 3, 3', 3", 5, 5', 5^{II} in den Darstellungen der Figuren Figur 5 bis Figur 7 weggelassen.

Seitlich des Antriebsblocks 1^{I}, 1", 1^{III} sind ein erstes Straßenrad, insbesondere in Gestalt eines Antriebsrads 29, 29', und ein zweites Straßenrad, insbesondere in Gestalt eines Antriebsrads 31, 31', vorhanden, aus deren Drehrichtung sich eine Fahrtrichtung 61, 63 eines das Antriebsaggregat 1^{I}, 1", 1^{III} tragenden Fahrzeugs (vgl. Kraftfahrzeug 1 nach Figur 1) ergibt. Quer zur Fahrtrichtung 61, 63 sind Elektromaschinen 3, 3', 3", 5, 5', 5" in dem Kraftfahrzeug, z. B. dem Kraftfahrzeug 1 nach Figur 1, eingebaut.

In den Figuren Figur 5 bis Figur ist eine erste Elektromaschine 3, 3', 3^{II} mit einem ersten elektrischen Bereich 11 vorhanden. Die erste Elektromaschine 3, 3', 3^{II} besitzt eine erste Antriebsachse 15, 15', 15". Eine zweite Elektromaschine 5, 5', 5^{II} hat einen zweiten elektrischen Bereich 13. Die zweite Elektromaschine 5, 5^{I}, 5^{II} ist mit einer zweiten Antriebsachse 17, 17', 17" wirkverbunden. Die Elektromaschinen 3, 3', 3", 5, 5', 5^{II} haben eine Rotoranordnung, die in einer am Fahrzeug bzw. am Getriebegehäuse befestigten Statoranordnung drehbar ist. Drehmoment wird also mittels durch Strom in Windungen erzeugten elektrischen Feldern generiert. Die erste Antriebsachse 15, 15^{I}, 15^{I} und die zweite Antriebsachse 17, 17^{I}, 17^{II} erstrecken sich insbesondere parallel zueinander und weisen, vorzugsweise rechtwinklig zu einer Achserstreckungsrichtung, einen Abstand 23', 23^{II} zueinander auf (siehe Figur 5 sowie Figur 6). Der Abstand 23', 23^{II} ist größer als ein Statordurchmesser, sofern dieser rechtwinklig zur Achserstreckungsrichtung gemessen ist. Anders gesagt, ist der Abstand 23', 23^{II} größer als eine Summe aus erstem Statorradius 65, 65^{I} der ersten Elektromaschine 3, 3^{I} und aus zweitem Statorradius 67, 67^{I} der zweiten Elektromaschine 5, 5', wobei die Radienmessung, wie anhand von Figur 5 gezeigt, vorzugsweise jeweils als äußere Abmessung, d. h. einschließlich den Gehäusen 4, 6 der Elektromaschinen 3, 5, bestimmt wird. Der Abstand 23', 23^{II} ist kleiner als eine quer zum Abstand 23', 23^{II} vorhandene Spurweite zwischen den zwei Antriebsrädern 29, 31 bzw. 29^{I}, 31^{I} (siehe Figuren 5 und 6). Von den Elektromaschinen 3, 3', 3", 5, 5', 5" wird jeweils ein auf den Antriebsachsen 15, 15^{I}, 15", 17, 17', 17" angeordnetes Antriebssonnenrad 75, 75', 75", 77, 77', 77^{II} angetrieben. Das erste Antriebssonnenrad 75, 75', 75^{II} ist Teil des ersten Getriebes 19, 19', 19". Das zweite Antriebssonnenrad 77, 77^{I}, 77" ist Teil des zweiten Getriebes 21, 21', 21^{II}. Das erste Getriebe 19, 19', 19" umfasst ein erstes Planetengetriebe 71, 71^{I}, 71" und eine erste Ausgangszahnradstufe 72, 72', 72", wobei die Ausgangszahnradstufe 72, 72', 72" sich auch durch ihre Zahnradpaarung auszeichnet. Das zweite Getriebe 21, 21', 21" umfasst ein zweites Planetengetriebe 73, 73', 73^{II} und eine zweite Ausgangszahnradstufe 74, 74^{I}, 74", wobei die zweite Ausgangszahnradstufe 74, 74^{I}, 74^{II} anhand ihrer Zahnradpaarung charakterisiert werden kann. Die beiden Planetengetriebe 71, 71', 71^{II}, 73, 73', 73^{II} weisen jeweils die Antriebssonnenräder 75, 75^{I}, 75", 77, 77', 77^{II}, einen ersten Steg 79, 79^{I}, 79^{II} bzw. zweiten Steg 80, 80^{I}, 80^{II} mit einer Mehrzahl von Planetenrädern und ein erstes Ringrad 81, 81', 81" bzw. zweites Ringrad 82, 82', 82^{II} auf. Diese Ringräder 81, 81^{I}, 81", 82, 82', 82^{II} sind am Getriebegehäuse 14, 14^{I}, 14", 14^{III} festgesetzt. Die Getriebe 19, 19', 19^{II}, 21, 21^{I}, 21^{II} weisen jeweils auf den Antriebsachsen 15, 15', 15^{II}, 15^{IV}, 17, 17', 17" eine Wälzlageranordnung 20, 22 mit drei Wälzlagern auf (siehe Figur 5). Ein erstes Wälzlager 20^{I}, 22^{I} stützt den ersten Steg 79, 79', 79^{II} bzw. zweiten Steg 80, 80', 80^{II} am ersten Elektromaschinengehäuse 4 bzw. am zweiten Elektromaschinengehäuse 6 ab. Eine rotorgetriebene Antriebswelle 16, 18 der jeweiligen elektrischen Maschine 3, 3', 3^{II}, 5, 5', 5^{II} dreht jeweils das Antriebssonnenrad 75, 75', 75", 77, 77', 77". Ein Drehmoment wird von dem Antriebssonnenrad 75, 75^{I}, 75", 77, 77', 77" über den Steg 79, 79^{I}, 79", 80, 80^{I}, 80" jeweils auf eine mit dem Steg 79, 79', 79", 80, 80', 80^{II} verbundene Zwischenwelle 83, 83', 83", 84, 84', 84" geführt. Die Zwischenwelle 83, 83', 83^{II} treibt über die Zahnradpaarung 70, 70', 70" der Ausgangszahnradstufe 72, 72', 72" (siehe die Figuren Figur 5, Figur 6 und Figur 7) die jeweilige Abtriebswelle 27, 91, 91", 91^{III} bzw. das Abtriebswellensegment 27^{IV} an. Gemäß Figur 7 werden die Abtriebswellen 91", 91^{III} über ein der Ausgangszahnradstufe 72^{II} nachgeordnetes Differenzial 87 angetrieben. Die Abtriebswellen 27, 27', 91, 91^{I}, 91" bzw. die Abtriebswellensegmente 27^{II}, 27^{III}, 27^{IV} werden in einer Abtriebswellenwälzlageranordnung 28, 28^{I}, 28^{II}, 28^{III} an dem Getriebegehäuse 14, 14^{I}, 14", 14^{III} geführt bzw. abgestützt. Die Abtriebswellenwälzlageranordnung 28, 28', 28" ist eine ko-lineare Anordnung um eine gemeinsame Achse herum, die auch als Abtriebsachse 30, 30^{I} bezeichnet werden kann. Die Abtriebswellenwälzlageranordnung 28, 28', 28" ist gegenüber der Wälzlageranordnung 20, 22 der Antriebsachsen 15, 15^{I}, 15", 17, 17^{I}, 17^{II} versetzt. Damit kann der vorhandene Bauraum besonders effizient genutzt werden.

Über die Abtriebswelle 27, 27', 91, 91^{I}, 91", 91^{III} bzw. die Abtriebswellensegmente 27^{II}, 27^{III}, 27^{IV} ist ein Drehmoment übertragbar. Das Drehmoment gelangt über ein erstes Gelenk 33, 33^{I} und ein zweites Gelenk 35, 35^{I} zu dem ersten Straßenrad 29, 29^{I}. Das erste Gelenk 33, 33^{I} und das zweite Gelenk 35, 35^{I} sind über eine erste Seitenwelle 41, 41^{I} (Gelenkwelle) miteinander verbunden und sind somit Teil einer ersten Einzelradaufhängung 45, 45^{I}. Ein drittes Gelenk 37, 37^{I} ist mit einem vierten Gelenk 39, 39^{I} über eine zweite Seitenwelle 43, 43^{I} verbunden und diese Teile 37, 37', 39, 39", 43, 43^{I} können somit als Komponenten einer zweiten Einzelradaufhängung 47, 47^{I} bezeichnet werden.

Zu im Zusammenhang mit Figur 7 lediglich zeichnerisch gezeigten Elementen, die in Figur 5 und Figur 6 mit Bezugszeichen ausgestattet sind, dürfen auf Figur 7 übertragen werden. Die Erläuterung von Figur 5 und Figur 6 ist gleichermaßen auch für die entsprechenden in Figur 7 gezeigten Elemente zu übertragen.

Die in den Figuren 5 und 6 gezeigte Abtriebswelle 27, 27', 91 ist zumindest zweiteilig ausgeführt. Teile der Abtriebswelle 91, 91^{I} werden auch als Abtriebswellensegmente 27^{II}, 27^{III}, 27^{IV} bezeichnet.

Wie in dem Beispiel von Figur 5 gezeigt ist, sind eine erste Abtriebswelle 27 und eine zweite Abtriebswelle 27^{I} voneinander getrennt ausgeführt. Beide Abtriebswellen 27, 27^{I} sind leistungsführende Wellen. Die erste Abtriebswelle 27 treibt das erste Straßenrad 29 an, weil sie ein Drehmoment aus der ersten elektrischen Maschine 3 überträgt. Die zweite Abtriebswelle 27^{I}, die im Wesentlichen ko-linear zur ersten Abtriebswelle 27 angeordnet ist, führt die Drehbewegung bzw. das Drehmoment aus einer zweiten elektrischen Maschine 5 über das dritte Gelenk 37 und das vierte Gelenk 39 dem zweiten Straßenrad 31 zu.

In dem Beispiel, das in Figur 6 gezeigt ist, weist die Abtriebswelle 91 drei Segmente 27^{II}, 27^{III}, 27^{IV} auf. Mittels einer Steckverbindung 32 sind zwei Abtriebswellensegmente 27^{II}, 27^{III} zu einer Momentenübertragungseinheit gekoppelt. Diese kann auch als leistungsführende Einheit bezeichnet werden. Neben der drehfesten Steckverbindung 32 befindet sich ein Koaxiallager 26, an dem eine entkoppelte Momenteneinleitung aus den Ausgangszahnradstufen 72^{I}, 74^{I} auf die Abtriebswellen 91, 91^{I} für einen Einzelradantrieb 2^{I} ermöglicht wird. Damit wird unter anderem der Zusammenbau erleichtert. Außerdem ist, wie auch in Figur 5 gezeigt ist, eine erste bzw. zweite Einzelradaufhängung 45, 47 vorhanden. Sowohl eine erste Abtriebsseite 7 als auch eine zweite Abtriebsseite 9 sind separat bzw. unabhängig voneinander antreibbar.

Während in Figur 5 die Abtriebsseiten 7, 9 auch als Motorstirnseiten bezeichnet werden können, liegt in Figur 6 und in Figur 7 nur eine der Abtriebsseiten, die Abtriebsseite 7^{I}, auf einer den Getrieben 19', 19", 21', 21" zugewandten Motorstirnseite. Die andere Abtriebsseite 9^{I} befindet sich auf einer den Stirnseiten 8, 8^{I} abgewandten Seite der Elektromaschinen 3^{I}, 5', 3^{II}, 5^{II}.

Figur 6 und Figur 7 zeigen Einzelradantriebe 2, 2^{I} (vgl. Antrieb 203 von Figur 4). Bei dem erfindungsgemäßen Antrieb 203^{I} von Figur 7 handelt es sich um einen Differenzialantrieb.

Das Antriebsaggregat 1^{III} gemäß Figur 7 weist eine ähnliche Anordnung, zu der auch die Elektromaschinen 3^{II}, 5^{II} gehören, wie das Antriebsaggregat 1^{II} mit den Elektromaschinen 3^{I}, 5^{I} in Figur 6 auf. Abweichend erfolgt aber bei dem Antriebsaggregat 1^{III} eine Zusammenführung des Drehmoments aus beiden Elektromaschinen 3^{II}, 5^{II} und eine Verteilung auf die ersten Abtriebswellen 91^{I}, 91" über ein Differential 87.

In einer weiteren vorteilhaften, nicht grafisch dargestellten Ausführungsform basierend auf Figur 7 ist ein Wellenschaltelement vorhanden, durch das die erste Zwischenwelle von einer Hohlwelle entkoppelbar oder im entkoppelten Zustand daran ankoppelbar ist. Durch das Wellenschaltelement kann eine der Elektromaschinen von der Zahnradpaarung abgekoppelt werden. Die Hohlwelle trägt ein erstes Zahnrad. Das erste Zahnrad bildet mit einem zweiten Zahnrad das mit dem Differential verbunden ist, eine Zahnradpaarung. Wenn das Antriebsaggregat nur mit der zweiten Elektromaschine betrieben wird, so erlaubt das Wellenschaltelement einen in Bezug auf die erste Elektromaschine und deren Planetengetriebe weitgehend schleppmomentfreien und somit energieeffizienteren Betrieb. Treibt die zweite Elektromaschine das Differential an, so kann durch Betätigen des Wellenschaltelements die erste Elektromaschine aufgeschaltet werden. In der anderen Schaltstellung des Wellenschaltelements kann die Elektromaschine weggeschaltet werden. So ist es möglich, nur eine Elektromaschine, nämlich die zweite Elektromaschine zu betreiben, während die erste Elektromaschine tot gesetzt ist. Gehören die Elektromaschinen zu unterschiedlichen Leistungsklassen, ist es möglich, aufgrund des Wellenschaltelements, von dem ein gleichartiges auch in dem Strang der zweiten Elektromaschine verbaut sein kann, nur eine der beiden Elektromaschinen zu betreiben und die Elektromaschine, die nicht in der richtigen Leistungsklasse ist, (vorrübergehend) tot zu setzen.

Durch die in den Figuren Figur 5 bis Figur 7 vorgestellte Bauanordnung ergibt sich ein längerer Bauraum für einen Deckungsbereich bzw. Überlappungsbereich 25, 25^{I} (siehe Figur 5 sowie Figur 6), insbesondere der Elektromaschinen 3, 3', 3^{II}, 5, 5', 5^{II}.

Wie sich zusätzlich aus Figur 5 entnehmen lässt, kann ein Spritzschutz 54, der durch eine Bodenplatte gebildet wird, unter die Elektromaschinen 3, 5 gelegt werden.

Die Figuren 8 bis 16 zeigen Ausführungsbeispiele von Antriebsblöcken 1^{IV}, 1^{V}, 1^{VI}, 1^{VII}, 1^{VIII}, 1^{IX}, 1^{X}, 1^{XI}, 1^{XII}, wobei die Blickrichtung zu den Darstellungen, mit dem Ziel eine bessere Vergleichbarkeit herzustellen, jeweils von der gleichen Seite entlang einer Abtriebswelle 91^{IV}, 91^{V}, 91^{VI} gewählt ist.

In den Figuren Figur 8 bis Figur 16 ist jeweils ein Antriebsblock 1^{IV}, 1^{V}, 1^{VI}, 1^{VII}, 1^{VIII}, 1^{IX}, 1^{X}, 1^{XI}, 1^{XII} gezeigt. Die gezeigten Antriebsblöcke 1^{IV}, 1^{V}, 1^{VI}, 1^{VII}, 1^{VIII}, 1^{IX}, 1^{X}, 1^{XI}, 1^{XII} sind volumenmäßig dahingehend arrangiert, dass die Antriebsblöcke 1^{IV}, 1^{V}, 1^{VI}, 1^{VII}, 1^{VIII}, 1^{IX}, 1^{X}, 1^{XI}, 1^{XII} in der vorgegebenen Bauraumgrenze 241^{I}, 241^{II}, 241^{III} ihre Komponenten, wie z. B. die Inverter 111, 113, platziert haben. In der jeweiligen Darstellungsebene der Figuren Figur 8 bis Figur 16 ist die Bauraumgrenze 241^{I}, 241", 241^{III} von jeweils einer unteren Bauraumgrenze 243', 243", 243^{III}, einer oberen Bauraumgrenze 245', 245", 245^{III}, einer vorderen Grenzfläche 253^{I}, 253", 253^{III} und einer hinteren Grenzfläche 255^{I}, 255", 255^{III} gebildet, wobei die Angabe nach "vorne" und nach "hinten" durch Bezugnahme auf ein Kraftfahrzeug, wie z. B. das Kraftfahrzeug 201 gem. Figur 1, bestimmt wird (somit könnte auch allgemeiner von einer ersten und einer zweiten Grenzfläche gesprochen werden). Zu den Antriebsblöcken 1^{IV}, 1^{V}, 1^{VI}, 1^{VII}, 1^{VIII}, 1^{IX}, 1^{X}, 1^{XI}, 1^{XII} gehören jeweils ein erster Inverter 111 und ein zweiter Inverter 113 sowie zwei Elektromaschinen, wie die zweite Elektromaschine 5^{III}, 5^{IV}, wobei in den in den Figuren Figur 8 bis Figur 16 gezeigten Darstellungen eine jeweils vorhandene erste Elektromaschine verdeckt und somit nicht zu sehen ist. Zu einem Antriebsblock 1^{IV}, 1^{V}, 1^{VI}, 1^{VII}, 1^{VIII}, 1^{IX}, 1^{X}, 1^{XI}, 1^{XII} gehören auch zwei Getriebe, wie ein erstes Getriebe 19^{III}, 19^{IV} und ein zweites Getriebe 21^{III}, 21^{IV}. Das erste Getriebe 19^{III}, 19^{IV} wird durch die erste Elektromaschine angetrieben und das zweite Getriebe 21^{III}, 21^{IV} wird durch die zweite Elektromaschine 5^{III}, 5^{IV} angetrieben. Die Getriebe 19^{III}, 21^{III}, 19^{IV}, 21^{IV} sind in Teilgehäusen, wie das Teilgehäuse 14^{IV}, untergebracht, die jeweils mit einer Außengehäusewand-Schale 10, 10' (vgl. Figur 8) abgeschlossen sind. Eine erste Rotationswelle, die eine Antriebswelle 16^{I}, 16^{II}, 16^{III} ist, und eine zweite Rotationswelle, die eine Antriebswelle 18^{I}, 18", 18^{III} ist, (von denen jeweils die Position markiert ist) bilden zusammen mit einer Abtriebswelle 91^{IV}, 91^{V}, 91^{VI} in der gezeigten Querschnittsebene eine Dreieckskonfiguration, wobei die Wellen 16^{I}, 16", 16^{III}, 18^{I}, 18^{III}, 18^{III}, 91^{IV}, 91^{V}, 91^{VI} die Lage der Ecken eines Dreiecks bestimmen. Ausgehend von der Abtriebswelle 91^{IV}, 91^{V}, 91^{VI} kann über eine Zuordnung eines ersten Schenkels bzw. ersten Arms 95, 95^{I}, 95^{II} zur ersten Rotationswelle (Antriebswelle 16', 16^{II}, 16^{III}) und Zuordnung eines zweiten Schenkels bzw. Arms 97, 97', 97^{II} zur zweiten Rotationswelle (Antriebswelle 18', 18^{II}, 18^{III}) kann auch von einer V-Anordnung 93, 93^{I}, 93^{II} gesprochen werden. Zwischen den beiden Armen 95, 95^{I}, 95", 97, 97', 97" ist ein Winkel 99, 99', 99^{II} vorhanden.

Wie in Figur 8 gezeigt ist, öffnet sich dieser Winkel 99 zu den Invertern 111, 113 hin. Diese Tatsache lässt sich genauso in den Figuren Figur 9, Figur 10, Figur 11 und Figur 12 finden. Durch die Rotationswellen 16^{I}, 18', die durch die Darstellungsebene der Figur 8 hindurch verlaufen, wird außerdem eine konstruktive Ebene 101 festgelegt, die sich parallel zu den aneinander gestapelten Invertern 111, 113 erstreckt. In alle Ausführungsbeispiele nach den Figuren 9, 10, 11, und 12 lässt sich auch die konstruktive Ebene 101, die in Figur 8 eingezeichnet ist, legen.

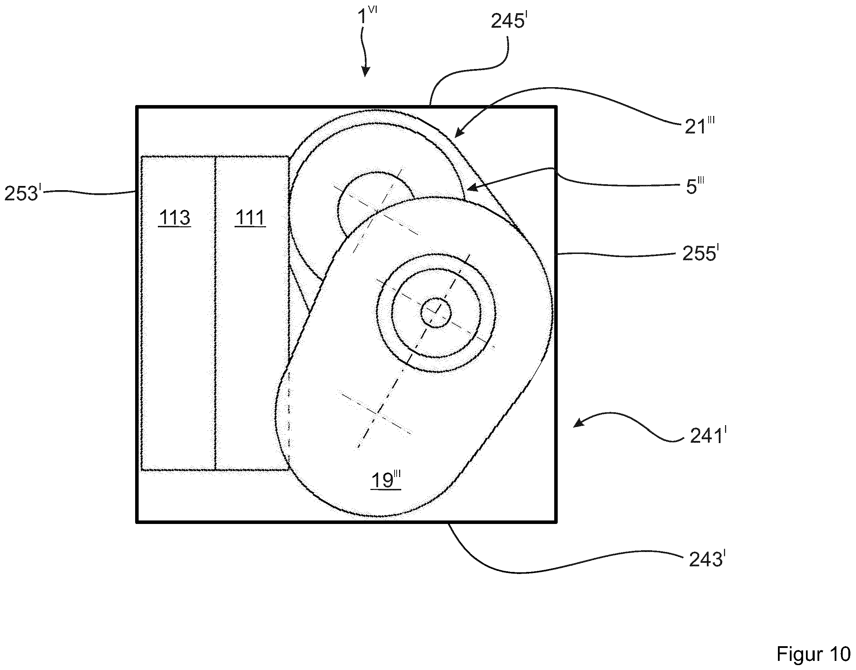

Werden die Figuren 8 und 9 miteinander verglichen, so ist in der in Figur 9 abgebildeten Darstellung der Antriebsblock 1^{V} um 90 Grad im Uhrzeigersinn innerhalb der Bauraumgrenze 241^{I} gedreht angeordnet. Figur 10 zeigt den Antriebsblock 1^{VI}, bei der innerhalb der Bauraumgrenze 241^{I} im Vergleich zur Darstellung von Figur 8 eine Drehung von 90 Grad entgegen dem Uhrzeigersinn vorgenommen wurde. Durch die Frontorientierung der Inverter 111, 113 können diese besonders effizient durch Zugluft bzw. durch Fahrtwind gekühlt werden. Bei der Anordnung gemäß Figur 9 wird im Falle eines Frontalaufpralls, der sich gegen die vordere Grenzfläche 253^{I} richtet, die Aufprallenergie zunächst gegen die Getriebe 19^{III}, 21^{III} geleitet, die aufgrund ihrer Massen besonders gut zur Absorption der (Unfall-)Energie geeignet sind.

Die in Figur 11 gezeigte Anordnung des Antriebsblocks 1^{VII} ist eine im Vergleich zur Figur 8 um ca. 45 Grad verdrehte Anordnung, die einen guten Kompromiss zwischen Aufprallschutz und Kühlung bietet.

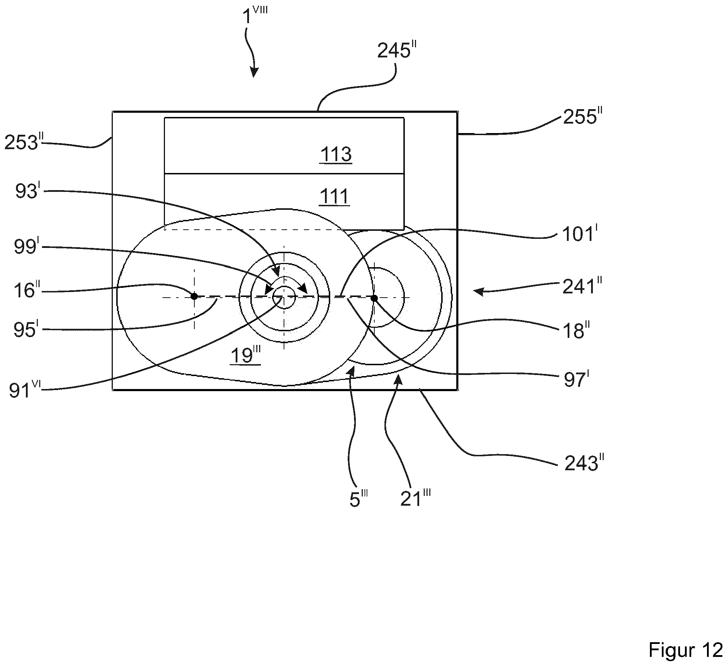

Der in Figur 12 gezeigte Antriebsblock 1^{VIII} ist besonders gut geeignet, wenn ein Abstand zwischen einer unteren Bauraumgrenze 243^{II} und einer oberen Bauraumgrenze 245^{II} kleiner bemessen ist als ein Abstand zwischen einer vorderen Bauraumgrenze 253^{II} und einer hinteren Bauraumgrenze 255". Diese in Bezug auf eine Dimension (in x-Erstreckung) äußerst raumeffiziente Anordnung wird dadurch ermöglicht, dass der Winkel 99^{I} zwischen den Schenkeln 95^{I}, 97^{I} der V-Anordnung 93^{I} nur wenig kleiner als 180 Grad, z. B. im Bereich von 179 Grad, gewählt wird. Somit liegt die Abtriebswelle 91^{VI} nahe bei der durch die Rotationswellen 16^{II}, 18^{II} aufgespannten konstruktiven Ebene 101^{I}. Die Bauraumgrenze 241^{II} fasst einen schmalen, länglichen Bereich ein, der in seiner Höhe (besonders) niedrig ist (breiterer als höherer Bauraum).

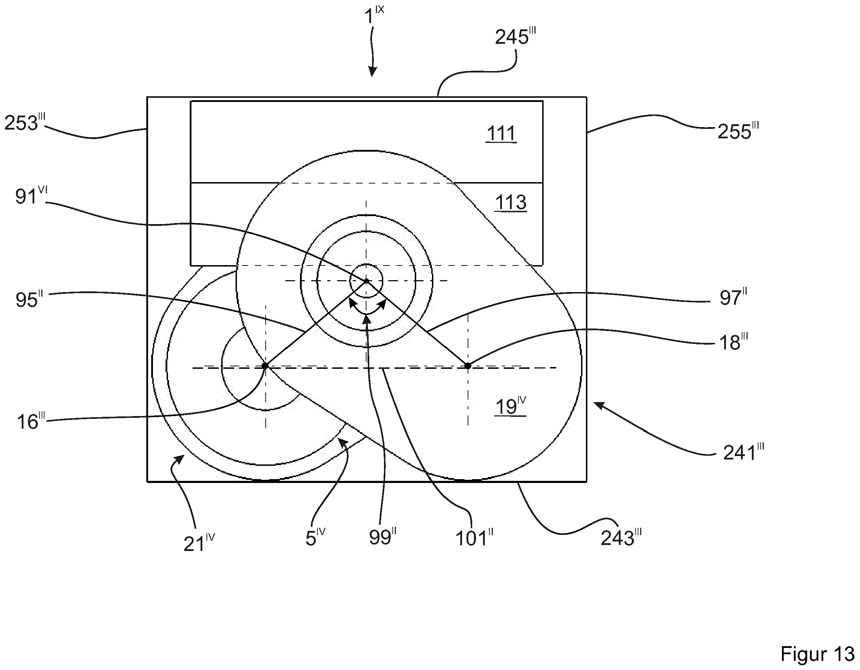

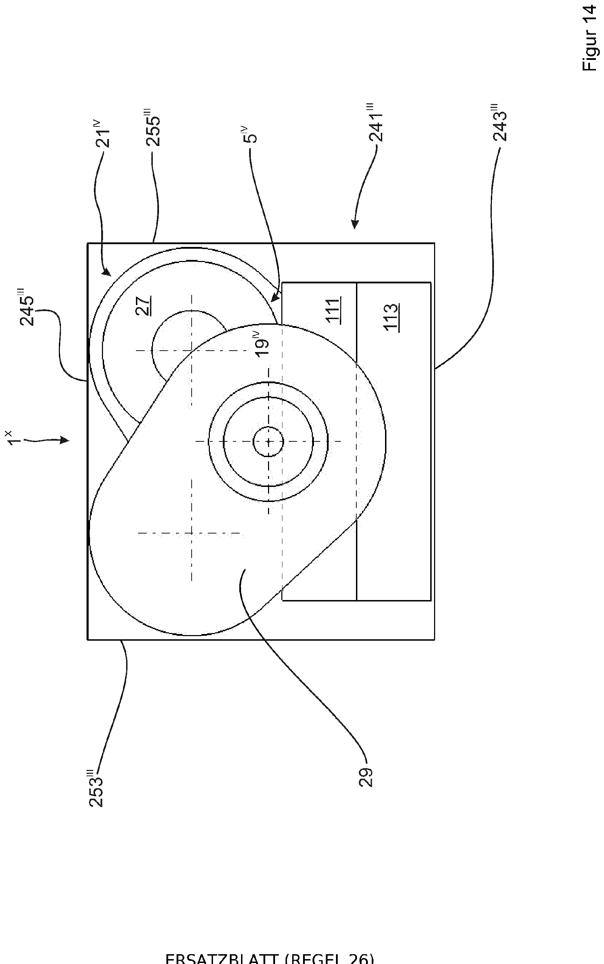

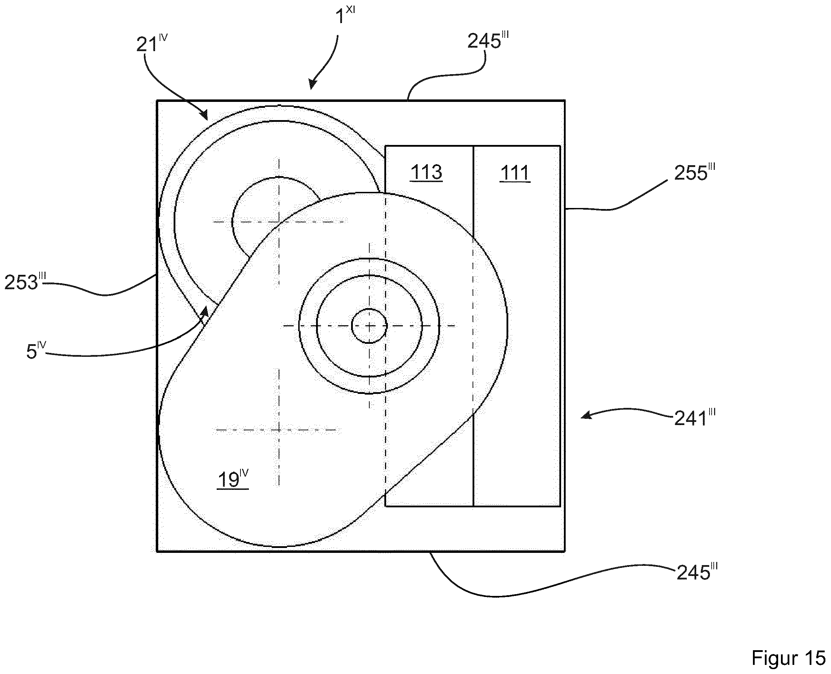

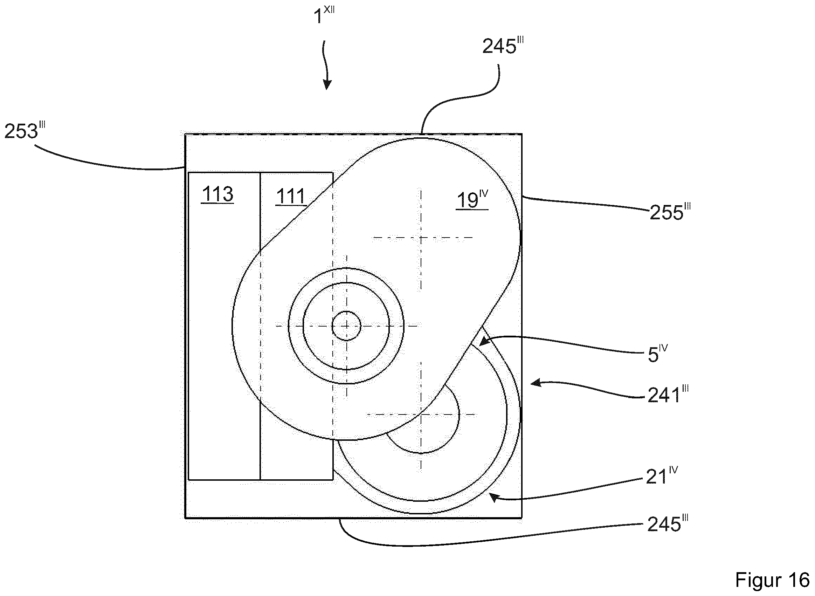

Bei denen in den Figuren Figur 13, Figur 14, Figur 15 und Figur 16 gezeigten Anordnungen der Antriebsblöcke 1^{IX}, 1^{X}, 1^{XI}, 1^{XII} öffnet sich der Winkel der jeweiligen V-Anordnung von den Invertern 111, 113 weg (vgl. Figur 13 mit dem eingezeichneten Winkel 99^{II} der V-Anordnung 93", die sich von den Invertern 111, 113 weg orientiert). Auf diese Weise ist die Abtriebswelle 91^{VI} im Vergleich zu den Rotationswellen 16^{III}, 18^{III} näher bei den Invertern 111, 113 angeordnet. Es kann auch von einer hochliegenden Ausgangswellenanordnung gesprochen werden. Bei einem Arrangement gem. der Darstellung des Antriebsblocks 1^{IX} (siehe Figur 13) erstrecken sich die Inverter 111, 113 unmittelbar benachbart zu und entlang der oberen Bauraumgrenze 245^{III}. Bei dem Arrangement gem. der Darstellung des Antriebsblocks 1^{X} (nach Figur 14) erstrecken sich die Inverter 111, 113 parallel und nahe zu der unteren Bauraumgrenze 243^{III}. Für den Antriebsblock 1^{XI} (siehe Figur 15) sind Bauraumgrenzen 241^{III} vorgegeben, bei denen die obere Bauraumgrenze 245^{III} weiter von der unteren Bauraumgrenze 243^{III} entfernt ist, als die vordere Bauraumgrenze 253^{III} von der hinteren Bauraumgrenze 255^{III}. Die Inverter 111, 113 erstrecken sich parallel und nahe zur hinteren Bauraumgrenze 255^{III}. In Figur 16 erstrecken sich die Inverter 111, 113 nahe zur vorderen Bauraumgrenze 253^{III}.

Wie zusätzlich der Figur 8 zu entnehmen ist, ist auf der der Abtriebsseite abgewandten Seite der zweiten Elektromaschine 5^{III} ein Ringradgehäuse 342 vorhanden, das Teil der Parksperre des Antriebsblocks 1^{IV} ist.

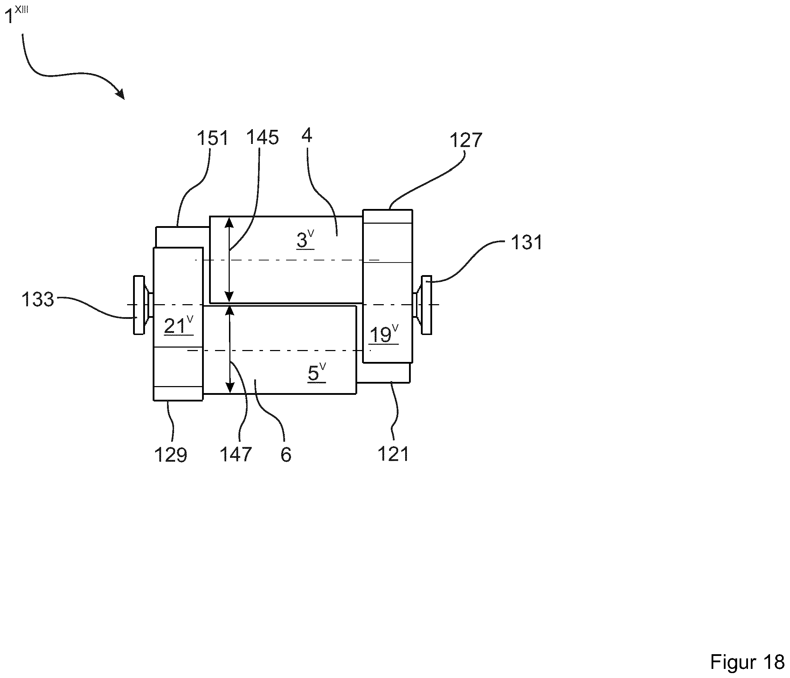

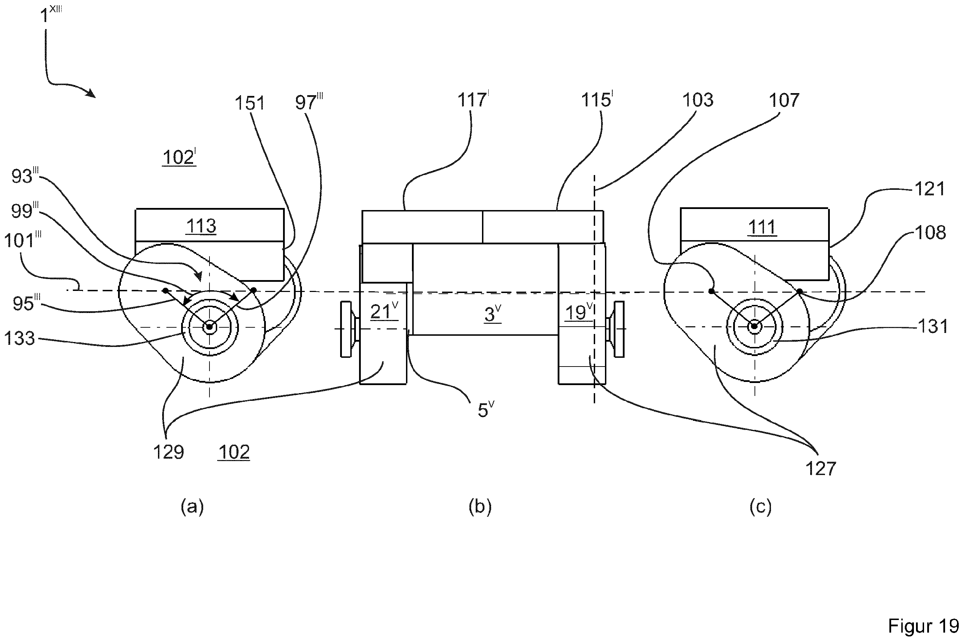

In den Figuren Figur 17, Figur 18 und Figur 19 sind Ansichten eines Antriebsblocks 1^{XIII} bzw. einer blockartig ausgebildeten Antriebsanordnung gezeigt, wobei in Figur 17 eine perspektivische Ansicht wiedergegeben ist. Figur 18 zeigt schematisch den Antriebsblock 1^{XIII} bzw. dessen Motor-Getriebe-Inverter-Anordnung nach Figur 17 von einer Seite, die in Einbaulage einem Boden zugewandt ist. In Figur 19 sind an einer konstruktiven Ebene 101^{III} nebeneinander gezeichnet drei Seitenansichten des Antriebsblocks 1^{XIII} dargestellt, die mithilfe der Buchstaben (a), (b) und (c) als Figur 19(a), Figur 19(b) und Figur 19(c) unterschieden sind. Die Figuren 17 bis 19 werden im Folgenden gemeinsam vorgestellt.

Der Antriebsblock 1^{XIII} weist einen Inverterblock 109 mit einem ersten Inverter 111 und einem zweiten Inverter 113 auf. Ein Invertergehäuse 115^{I} des ersten Inverters 111 und ein Invertergehäuse 117^{I} des zweiten Inverters 113 grenzen an einer Schmalseite aneinander. Die Invertergehäuse 115^{I}, 117^{I} können auch als Inverter-Teilgehäuse des Antriebsblocks 1^{XIII} bezeichnet werden. Die Inverter 111, 113 sind elektrisch und elektronisch voneinander getrennt. Die Invertergehäuse 115^{I}, 117^{I} befinden sich über den Getriebegehäusen, nämlich einem ersten Getriebegehäuse 127 und einem zweiten Getriebegehäuse 129, die jeweils auch als Getriebe-Teilgehäuse des Antriebsblocks 1^{XIII} bezeichnet werden können. Zwischen den Getriebegehäusen 127, 129 und ebenfalls unter den Invertern 111, 113 sind zwei Elektromaschinen, eine erste Elektromaschine 3^{V} und eine zweite Elektromaschine 5^{V}, in den Elektromaschinengehäusen 4, 6 eingehaust (von denen in der Ansicht von Figur 17 nur der das erste Elektromaschinengehäuse 4 der ersten Elektromaschine 3^{V} zu sehen ist). Unter dem ersten Invertergehäuse 115^{I} sitzt außerdem in einem dafür vorgesehenen Gehäusebereich 121, der zu dem Getriebegehäuse 127 gehört, eine Parksperrenvorrichtung. Unter dem zweiten Invertergehäuse 117^{I} befindet sich ein Gehäusebereich 151, der zu dem zweiten Getriebegehäuse 129 gehört. In dem Gehäusebereich 151 ist eine Vorrichtung für eine Antriebs- bzw. Achsumschaltung untergebracht. Die Antriebsumschaltung erlaubt es, ein Drehmoment entweder von der ersten Elektromaschine 3^{V} oder der zweiten Elektromaschine 5^{V} oder von beiden Elektromaschinen 3^{V}, 5^{V} gemeinsam - je nach Schaltzustand - auf die Abtriebswellen, wie die erste Abtriebswelle 131, genauer über deren Flansch, auszuleiten. Die Antriebsumschaltung ermöglicht außerdem einen weitgehend schleppmomentenfreien Leerlauf. In Figur 18 ist besonders gut zu sehen, wie bei dem Antriebsblock 1^{XIII} die Konfiguration aus erster Elektromaschine 3^{V} mit deren erster Elektromaschinenbreite 145 und dem ersten Getriebe 19^{V}, wobei sich das Getriebe 19^{V} in dem ersten Teilgehäuse 127 befindet, und aus zweiter Elektromaschine 5^{V} mit deren zweiter Elektromaschinenbreite 147 und dem zweiten Getriebe 21^{V}, das sich in dem zweiten Teilgehäuse 129 befindet, die Form von zwei "L"-förmigen Baugruppen haben und so gut zueinander passen. Die jeweilige Gruppe aus Elektromaschine 3^{V} bzw. 5^{V} und Getriebe 19^{V} bzw. 21^{V} bildet eine Antriebskombination für die erste Abtriebswelle 131 bzw. die zweite Abtriebswelle 133. Aus der Ansicht von unten gemäß Figur 18 geht auch hervor, dass sich die Aufnahmebereiche 121, 151 des Gehäuses an einer bodenabgewandten Seite des Antriebsblocks 1^{XIII} und in einem Bereich zwischen den Invertern 111, 113 und den Abtriebswellen 131, 133 befinden. Die Inverter 111, 113 sind in der Ansicht, die in Figur 18 gezeigt wird, verdeckt.

Die perspektivische Ansicht, die in Figur 17 zu sehen ist, lässt sich noch besser mithilfe der gemeinsamen Betrachtung mit den drei Seitenansichten Figur 19 (a), (b) und (c) einsortieren. In der gewählten Darstellung von Figur 19 sind alle drei Ansichten (a), (b) und (c) an einer gemeinsamen konstruktiven Ebene 101^{III} ausgerichtet. Die konstruktive Ebene 101^{III} separiert einen Bereich unterhalb der Ebene 102 von einem Bereich 102^{I} oberhalb der Ebene. Oberhalb der konstruktiven Ebene 101^{III} sind die beiden Inverter 111, 113 in deren jeweiligen Gehäusen 115^{I}, 117^{I} nebeneinander angeordnet. Die erste elektrische Maschine 3^{V} und die zweite elektrische Maschine 5^{V} sind beidseitig der konstruktiven Ebene 101^{III}. Es sei erneut in Erinnerung gerufen, dass für die Lage der konstruktiven Ebene 101^{III} die Lage der Rotorwellen der elektrischen Maschinen 3^{V}, 5^{V} die Bezugsachsen sind (vgl. Figur 8). Die erste Ausgangswelle 131, die aus dem ersten Getriebegehäuseteil 127 des ersten Getriebes 19^{V} herausführt (siehe Draufsicht in Figur 19, Ansicht (c)), erstreckt sich ebenso wie die zweite Abtriebswelle 133, die zu dem zweiten Getriebe 21^{V} gehört (siehe die Draufsicht Figur 19, Ansicht (a)), unterhalb der konstruktiven Ebene 101^{III}. Von den jeweiligen Rotationszentren der Abtriebswellen 131, 133 ist zu den Zentren der jeweiligen Rotationswellen der Elektromaschinen 3^{V}, 5^{V} eine V-Anordnung 93^{III} bildende konstruktive Hilfslinie als ein erster Arm 95^{III} und ein zweiter Arm 97^{III} gezogen (siehe Figur 19, Ansicht (a) und Ansicht (c)) (räumlich betrachtet sind die Arme 95^{III}, 97^{III} also Schnitte durch entsprechende Teilebenen). Die Arme 95^{III}, 97^{III} schließen zueinander einen Winkel 99^{III} ein. Somit liegt die aus dem ersten Getriebe 127 herausführende erste Abtriebswelle 131 genau gegenüber der aus dem zweiten Getriebegehäuse 129 herausführenden zweiten Abtriebswelle 133. Die beiden Abtriebswellen 131, 133 sind jedoch nicht dauerhaft drehfest miteinander verbunden. Eine Ebene 103 parallel zu den Getrieben 19^{V}, 21^{V} schneidet die konstruktive Ebene 101^{III} rechtwinklig. Wie aus Figur 19 auch ersichtlich ist, nehmen die Rotorwellen in Figur 19, Ansicht (a) und Figur 19, Ansicht (c) jeweils die gleichen Positionen 107, 108 ein; sie sind somit parallel zueinander. In dem oberen Bereich 102^{I} über der konstruktiven Ebene 101^{III} sind auch die Gehäuseteile 121, 151 für die Parksperrenvorrichtung, insbesondere deren Steuerung, und für die Antriebs- bzw. Achsumschaltung angesiedelt.

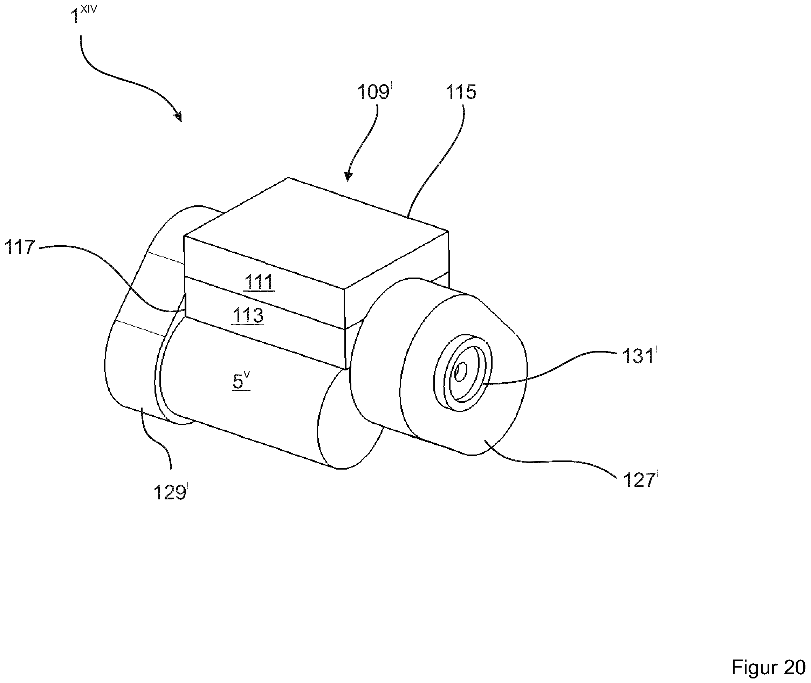

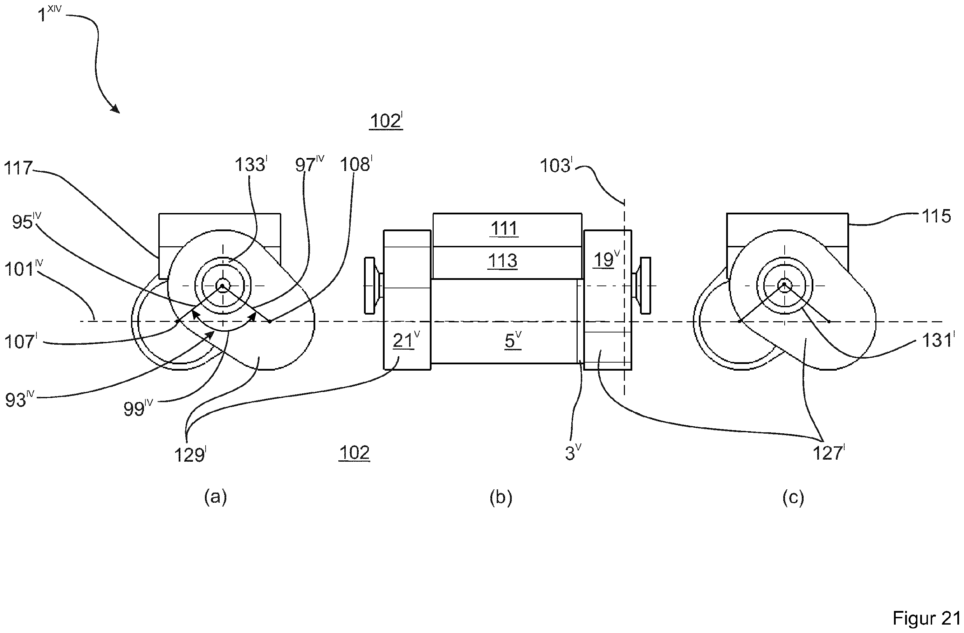

In Figur 20 ist ein weiteres Ausführungsbeispiel eines Antriebsblocks 1^{XIV} gezeigt. Der in Figur 20 und in Figur 21 gezeigte Antriebsblock 1^{XIV} weicht von der Darstellung der Figur 17, die eine unten liegende Abtriebswelle 131, 133 zeigt, in Bezug auf die Abtriebswelle 131^{I}, 133^{I} ab, weil in den Figuren 20 und 21 eine oben liegende Abtriebswelle 131^{I}, 133^{I}, genauer ein Flansch zum Anschluss, vorhanden ist. Ein Unterschied der Abtriebswellenanordnung der beiden Ausführungsbeispiele Antriebsblock 1^{XIII} (Figuren 17 bis 19) und Antriebsblock 1^{XIV} (Figuren 19 und 20) in Bezug auf eine konstruktive Ebene 101^{III} (in Figur 19) bzw. 101^{IV} (in Figur 21) ist besonders gut zu sehen, wenn die seitlichen Ansichten von Figur 19 (a), (b) und (c) und von Figur 21 (a), (b) und (c) nebeneinander betrachtet werden.

In den Figuren Figur 20 und Figur 21 sind jeweils unterschiedliche Ansichten eines Antriebsblocks 1^{XIV} gezeigt, wobei der erste Inverter 111 und der zweite Inverter 113 als Stapel über den beiden Elektromaschinen 3^{V}, 5^{V} angeordnet sind. Die beiden Inverter 111, 113 bilden durch ihre gestapelte Anordnung den Inverterblock 109^{I}.

Dem Verständnis zuträglich ist es, dass Figur 20 und Figur 21 gemeinsam erörtert werden.

Der erste Inverter 111 sitzt in einem ersten Invertergehäuse 115. Der zweite Inverter 113 sitzt in einem zweiten Invertergehäuse 117. Die von den Elektromaschinen 3^{V}, 5^{V} angetriebenen Getriebe 19^{V}, 21^{V} sind in den Getriebegehäusen 127^{I}, 129^{I} untergebracht. Die zweite elektrische Maschine 5^{V} treibt das zweite Getriebe 21^{V} an, das, wie aus Figur 21 hervorgeht, mit der aus dem zweiten Getriebegehäuse 129^{I} herausführenden zweiten Abtriebswelle 133^{I} verbunden ist. Der Antriebsblock 1^{XIV} ist in Figur 21 zusammen mit einer konstruktiven Ebene 101^{IV} in den Ansichten (a), (b) und (c) dargestellt, wobei die Lage der konstruktiven Ebene 101^{IV} durch die Rotorwellen der Elektromaschinen 3^{V}, 5^{V} festgelegt ist. Eine V-Anordnung 93^{IV} ist derart gewählt, dass ausgehend von den Positionen 107', 108^{I} der Rotorwellen der Elektromaschinen 3^{V}, 5^{V} von deren jeweiligen Zentren sich Arme 95^{IV}, 97^{IV} jeweils zur Abtriebswelle 131^{I}, 133^{I} erstrecken (siehe Figur 21, Ansicht (a) und Ansicht (c)). Die Abtriebswellen 131^{I}, 133^{I} sind in dem Bereich 102^{I}, also oberhalb der konstruktiven Ebene 101^{IV} angeordnet. Auch die beiden Invertergehäuse 115, 117 befinden sich in dem oberen Bereich.

Ein Winkel 99^{IV} zwischen den Armen 95^{IV}, 97^{IV} öffnet sich somit von den Invertern 111, 113 weg; er ist nach unten gerichtet. Die Getriebegehäuse 127^{I}, 129^{I} ragen in den unteren Bereich 102. Somit erlaubt der Antriebsblock 1^{XIV} einen Einbau in ein Kraftfahrzeug, selbst wenn in diesem nur ein (mit anderen Ausführungsbeispielen vergleichsweisen) geringer Bauraum oberhalb der Antriebswellen 131^{I}, 133^{I} zur Verfügung steht. Den Getrieben 19^{V}, 21^{V} ist als weitere Konstruktionshilfe eine sich parallel zu den Getrieben 19^{V}, 21^{V} erstreckende Ebene 103^{I} zugeordnet, die insbesondere die Abtriebswellen 131^{I}, 133^{I} rechtwinklig schneidet.

In einer weiteren Ausführungsform, basierend auf dem Antriebsblock 1^{XIV} nach den Figuren 20 und 21, bei dem aber die Invertergehäuse 115, 117 nur an einer Schmalseite aneinander grenzen, kann ein Antriebsblock geschaffen werden, der eine noch geringere Bauraumhöhe in einer vertikalen Richtung in Anspruch nimmt.

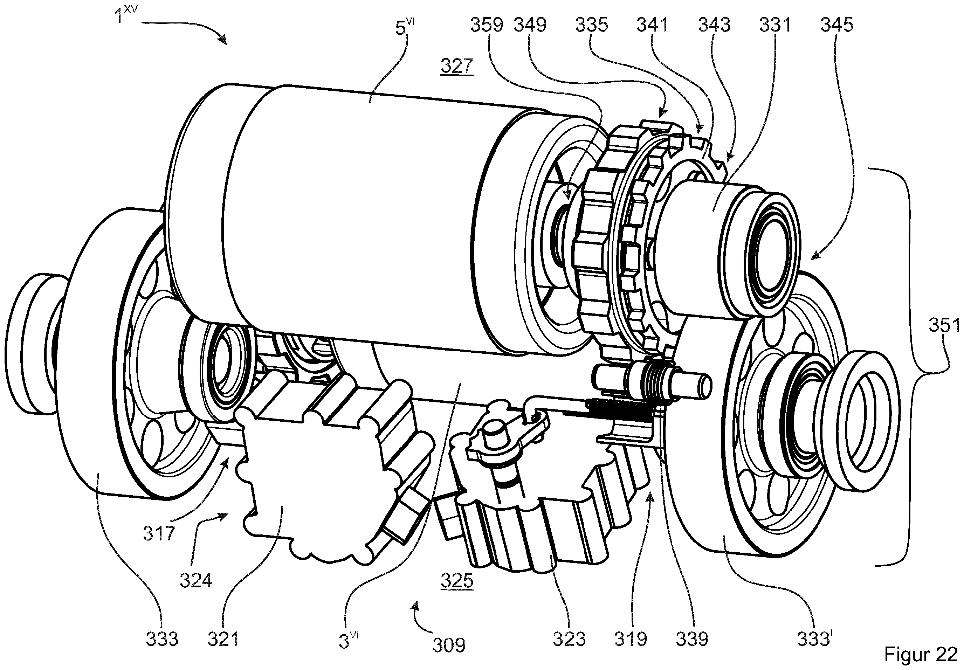

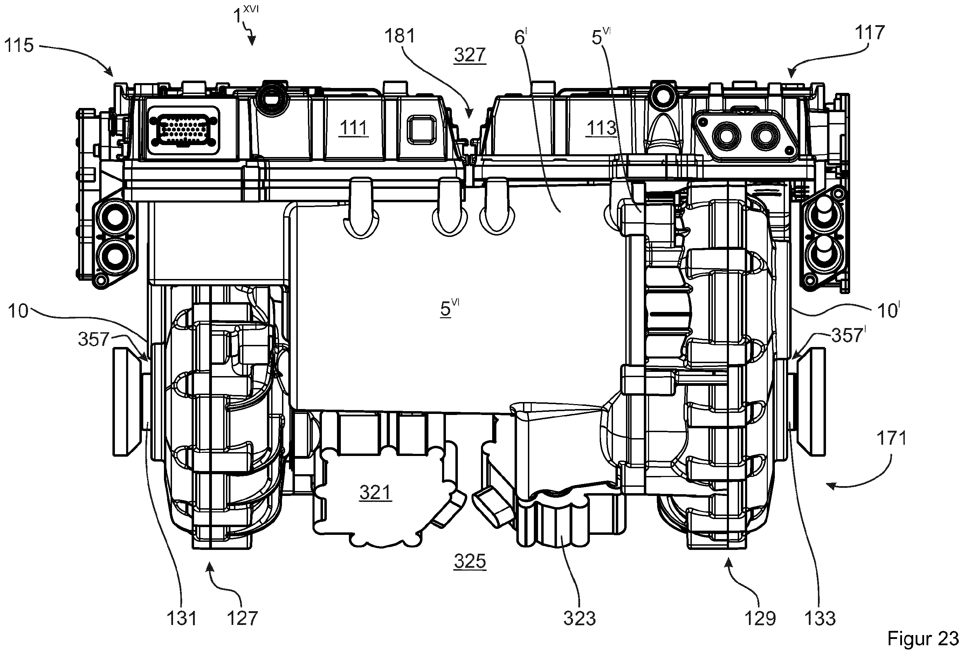

Figur 22 zeigt einen Antriebsblock 1^{XV}, bei dem der Abtrieb ein größeres Ritzel 333, 333^{I} hat, das, wie anhand des Ritzels 331 zu sehen ist, von einem kleineren Ritzel, dem Ritzel 331 angetrieben wird. Die beiden Ritzel 331, 333^{I} bilden die Übertragungsstufe 345. Kleines Ritzel 331 und großes Ritzel 333' sind zu einer Zahnradgetriebestufe 351 zusammengefasst (vereinfacht dargestellt, d. h. ohne Zähne gezeichnet). Eine weitere Übertragungsstufe wird durch eine Planetengetriebestufe 349 gebildet, von der eine Außenverzahnung eines Hohlrades zum Festsetzen im Getriebegehäuse 129 (siehe z. B. Figur 23) zu sehen ist. Das Hohlrad (nicht dargestellt) der Planetengetriebestufe 349 steht somit im (zweiten) Getriebegehäuse 129. Zwischen Planetengetriebestufe 349 und Zahnradgetriebestufe 351 gibt es eine Klinkensperre 335 mit einem Ringrad 341, an dem ein Außenzahnkranz 343 vorhanden ist. Durch einen Federenergiespeicher 339 wird die Parksperre 319 im geöffneten Zustand gehalten; dies ist so lange der Fall, so lange der zweite Parksperrenaktuator 323 die Parksperre 319 noch nicht betätigt hat. Zwischen Rotorwelle der Elektromaschine 3^{VI}, 5^{VI} und der Planetengetriebestufe, wie der Planetengetriebestufe 349, ist eine Steckverzahnung zwischen den beiden Wellen ausgebildet (nicht sichtbar). Der Planetenträger der Planetengetriebestufe 349 ist auf das Ritzel 331 geführt, das als Eingangsritzel der Zahnradgetriebestufe 351 arbeitet.

Zum Bewegen eines Fahrzeugs leitet z. B. die Elektromaschine 5^{VI} ein Drehmoment über eine Eingangswelle 359 auf das eine Ritzel 331 bzw. weiter über die Zahnradgetriebestufe 351 auf ein Straßenrad einer Achse (vgl. Straßenrad und Achse 209 in Figur 1), wenn die Parksperre 319 sich in einem geöffneten Zustand befindet. In einer Parksperren-Sperrstellung, d. h., wenn die Parksperre 319 sich in einem geschlossenen bzw. einem eingelegten Zustand befindet, wird eine Drehmomentenübertragung u. a. durch ein Sperrsignal, das an einen elektronischen Parksperreninterlockeingang an der Elektromaschine 5^{VI} bzw. an einem Invertersteuergerät (nicht eingezeichnet) - nach Art einer Rückkopplungsschleife - anliegen kann, verhindert.

Die beiden Parksperrenaktuatoren 321, 323 sind Teil einer Parksperrenaktuatorik 324, die einem ersten Typ einer Parksperrenvorrichtung 309 zugerechnet wird. Der erste Typ Parksperrenaktuatorik 324 erlaubt eine Einzelbetätigung einer jeweils dem Parksperrenaktuator 321, 323 zugeordneten Parksperre, wie der Parksperre 319 und der Parksperre 317. Eine von einem der Parksperrenaktuatoren 321, 323 ausgeübte Betätigungskraft erfährt in der Parksperrenaktuatorik 324 eine Umlenkung. Über ein Betätigungsgestänge (nicht dargestellt) wird eine aktuatorische Betätigungskraft gehebelt und somit verstärkt.

Wie anhand des Antriebsblocks 1^{XVI} der Figur 23 zu sehen ist, überdecken die beiden Elektromaschinen, wie die Elektromaschine 5^{VI}, die im bodennahen Bereich 325 platzierten Parksperraktuatoren 321, 323, d. h., die Elektromaschinen 5^{VI} begrenzen den Bauraum für die Parksperrenaktuatoren 321, 323 nach oben hin. Gemäß Figur 23 sind beide Elektromaschinen gleich hoch angesiedelt, weshalb die zweite Elektromaschine 5^{VI} eine vorhandene erste Elektromaschine überdeckt. Wird neben Figur 23 die Figur 22 betrachtet, so ist bei dem Antriebsblock 1^{XV} die zweite Elektromaschine 5^{VI} höher angesiedelt als die erste Elektromaschine 3^{VI}. Die zweite Elektromaschine 5^{VI} befindet sich somit näher zu einem bodenferneren Bereich, also näher am bodenfernen Bereich 327 im Vergleich zur ersten Elektromaschine 3^{VI} (vgl. die Anordnung von Antriebsblock 1^{VII} gemäß Figur 11). Auch in Figur 22 ist gezeigt, dass die Parksperrenaktuatoren 321, 323 im bodennahen Bereich 325 angesiedelt sind.

Figur 23 zeigt, mit anderen Worten den Antriebsblock 1^{XVI} aus einer Perspektive, aus der ein erster Parksperrenaktuator 321 und ein zweiter Parksperrenaktuator 323, die im bodennahen Bereich 325 angesiedelt sind, zu sehen ist. Zwischen den beiden Getriebegehäusen 127, 129, aus denen Abtriebswellen 131, 133 herausstehen, sind die Parksperrenaktuatoren 321, 323 angesiedelt. Die Parksperrenaktuatoren 321, 323 befinden sich zwischen den Getrieben bzw. den Getriebegehäusen 127, 129. In den Getriebegehäusen 127, 129 befinden sich jeweils ein in der gewählten Darstellung nicht zu sehendes Ausgangszahnrad 357, 357', das eine Stirnzahnradstufe der in dem Getriebegehäusen 127, 129 jeweils befindlichen Getriebe (nicht zu sehen, vgl. Getriebe 19, 21 in Figur 5) mit den Abtriebswellen 131, 133 verbindet. Die Parksperrenaktuatoren 321, 323 können jeweils eines der Ausgangszahnräder 357, 357^{I} mit einer zugehörigen Parksperre (in der Darstellung nicht zu sehen) festsetzen. In einem festgesetzten Zustand sind die Abtriebswellen 131, 133 örtlich festgestellt; sie können nicht mehr rotieren. Ein durch die Parksperrenaktuatoren 321, 323 festgesetztes Kraftfahrzeug (vgl. Kraftfahrzeug 201 in Figur 1) ist gegen ein Wegrollen zweifach gesichert.

Im bodenfernen Bereich 327 sind die Inverter 111, 113 platziert.

Wie aus Figur 23 auch ersichtlich ist, gehören zu dem Antriebsblock 1^{XVI} ein erstes und zweites Getriebegehäuse 127, 129, ein erstes und zweites kastenartiges Gehäuse 115, 117, in denen ein erster bzw. zweiter Inverter 111, 113 angeordnet ist und eine erste und zweite Abtriebswelle 131, 133. Zwischen den Getriebegehäusen 127, 129 und unter den kastenartigen Invertergehäusen 115, 117 befinden sich die Elektromaschinengehäuse, wie das Elektromaschinengehäuse 6^{I}. In einem bodennäheren Bereich 325 als die durch das Elektromaschinengehäuse 6^{I} schmiermitteldicht eingeschlossene Elektromaschine sitzen an dem Antriebsblock 1^{XVI} die Parksperrenaktuatoren 321, 323, und zwar angeordnet zwischen den Getriebegehäusen 127, 129. In einem bodenferneren Bereich 327 erstrecken sich die kastenartigen Invertergehäuse 115, 117 des Antriebsblocks 1^{XVI} nebeneinander und voneinander separiert durch eine Trennfuge 181. Mittels Abtriebswellen 131, 133^{I}, die jeweils mit einer Anschlussmuffe ausgestattet sind, wird Drehmoment aus den Getriebegehäusen 127, 129 herausgeführt. Die Abtriebswellen 131, 133^{I} befinden sich in einem bodennäheren Bereich 325 im Vergleich zur Elektromaschine im Elektromaschinengehäuse 6^{I}. Der Antriebsblock 1^{XVI} nach Figur 23 wird in seiner Einbaulage 171 dargestellt, also so, wie der Antriebsblock 1^{XVI} in einem Kraftfahrzeug (vgl. Figur 4) einzubauen ist, nämlich mit den Invertern 111, 113 im bodenfernen Bereich 327.

Weitere Typen von Parksperren können in erfindungsgemäßen Ausführungsbeispielen vorgesehen sein, bei denen die Parksperrenaktuatorik in dem Antriebsblock sowohl für das Festsetzen einer ersten Abtriebswelle, die einer ersten Elektromaschine zur Übertragung von Antriebsleistung zugeordnet ist, als auch für das Festsetzen einer zweiten Abtriebswelle, die einer zweiten Elektromaschine zur Übertragung von Antriebsleistung zugeordnet ist, gestaltet ist. So kann ein Parksperrenaktuator eine komplette Achse 209 (vgl. Figur 1) festhalten. Eine von dem Parksperrenaktuator ausgeübte Betätigungskraft bzw. Betätigungsbewegung wird über die Parksperrenaktuatorik verzweigt bzw. aufgeteilt. Eine Teilbetätigungskraft bzw. Bewegung innerhalb der Parksperrenvorrichtung wird zu einer ersten und einer zweiten Parksperre (ohne Bezugszeichen) umgelenkt, wobei insbesondere eine Kraftumsetzung von einer aktuatorischen Drehbewegung in eine Schub-Bewegung zur Erzeugung eines Parksperren-Sperrzustands erfolgt.

In einer Ausführungsvariante ist der Parksperren-Sperrzustand durch eine Zug-Bewegung einnehmbar.

Das in Figur 1 bzw. in Figur 4 (schematisch) gezeigte Fahrzeug 201 bzw. 201^{I} ist durch eine solche Parksperrenvorrichtung, wie die Parksperrenvorrichtung 309 in Figur 22, "tot"- setzbar bzw. kann nicht mehr durch rotierende Räder an einer Achse 209 bzw. 209^{II} bewegt werden. Von zwei Achsen 209, 209^{I} bzw. 209", 209^{III} kann so zumindest eine der beiden Achsen festgesetzt werden.

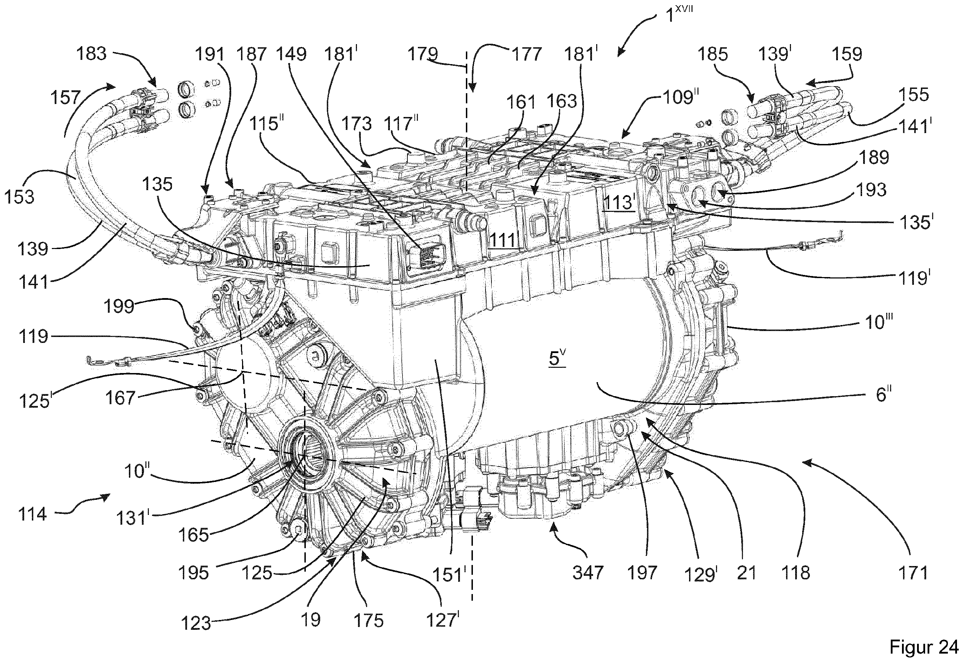

Figur 24 zeigt eine weitere Ausführungsform eines Antriebsblocks 1^{XVII}. An einer Oberseite 177 befindet sich ein Inverterblock 109". Der Inverterblock 109^{II} umfasst einen ersten Inverter 111^{I} und einen zweiten Inverter 113^{I} jeweils abgedeckt durch ein kastenartiges Gehäuse 115^{II}, 117". Zur Kühlung der Inverter 111^{I}, 113^{I} befinden sich an kastenartigen Gehäusedeckeln 115^{II}, 117^{II} jeweils separat für jeden Inverter 111^{I}, 113^{I} ein erster Kühlkreislaufeingang 187, ein erster Kühlkreislaufausgang 191 bzw. ein zweiter Kühlkreislaufeingang 189 und ein zweiter Kühlkreislaufausgang 193. Zur Unterstützung der Kühlung weisen die Invertergehäuse 115^{II}, 117^{II} jeweils Kühlrippen, wie eine erste Kühlrippe 161 und eine zweite Kühlrippe 163 auf. An beiden Gehäusen 115", 117^{II} befinden sich Steuerungsstecker, wie der Steuerungsstecker 149, sowie jeweils ein erstes Versorgungskabel 139, 139^{I} und ein zweites Versorgungskabel 141, 141^{I} zur Durchleitung elektrischer Energie von oder zu einem elektrischen Energiespeicher (vgl. Energiespeicher 143 in Figur 4). Die Versorgungskabel 139, 141 zu dem ersten Inverter 111^{I} haben über ihre Leitungsführung 157 eine größere Strompfadlänge 153 als die Leitungen 139^{I}, 141^{I} mit deren zweiter Strompfadlänge 155 über eine zweite Leitungsführung 159 hinweg. Damit lassen sich asynchrone Antriebe durch Laufzeitunterschiede abschwächen. Eine elektronische Trennung und Abschirmung der Inverter 111^{I}, 113^{I} wird dadurch verbessert, dass jeder Inverter 111^{I}, 113^{I} einen eigenen Erdungsanschluss an ein Fahrzeugchassis über ein jeweiliges Erdungskabel 119, 119^{I} aufweist. Die Anschlüsse 149, 119, 119^{I} für die Kabel 139, 139^{I}, 141, 141^{I} befinden sich an Schmalseiten 135, 135^{I} der Invertergehäuse 115", 117". Die Verbindung mit dem elektrischen Energiespeicher (vgl. Energiespeicher 143 in Figur 4) erfolgt mithilfe von Elektroanschlüssen 183, 185. Unter den Invertergehäusen 115", 117" sind in den Antriebsblock 1^{XVII} in eigenen Gehäusebereichen 151^{I} eine Parksperrensteuerung und in einem zweiten Elektromaschinengehäuse 6^{II} eine zweite Elektromaschine 5^{V} angeordnet. Eine erste elektrische Maschine ist in der in Figur 24 gezeigten Ansicht verdeckt. Der Antriebsblock 1^{XVII} umfasst einen Parksperrenaktuator eines zweiten Typs einer Parksperrenaktuatorik 347 unterhalb des zweiten Elektromaschinengehäuses 6^{II}, der durch ein Gestänge im Gehäuseinneren die beidseitig in den Getriebegehäusen 127^{I}, 129^{I} angeordneten Getriebe festsetzen kann. Die Teilgehäuse 151', 6^{II} gehören zu einem Kerngehäuse 118, das zusammen mit den Außengehäusewänden 10", 10^{III} der Getriebegehäuse 127^{I}, 129^{I} und den Invertergehäusen 115", 117" ein Gesamtgehäuse 114 des Antriebsblocks 1^{XVII} bildet. Die Außengehäusewand 10^{II} schließt ein erstes Getriebe 19 in dem Getriebegehäuse 127^{I} ein und eine zweite Außengehäusewand 10^{III} schließt ein zweites Getriebe 21 in einem zweiten Getriebegehäuse 129^{I} ein. Entlang einer Gehäusehochachse 179 weist der Antriebsblock 1^{XVII} eine Höchststelle 173 und eine tiefste Stelle 175 auf, die in einen vorgegebenen Bauraum (vgl. Bauräume 239, 239^{I} in Figur 1) passen müssen. Der Antriebsblock 1^{XVII} ist an Befestigungsstellen, wie den Befestigungsstellen 195, 197, 199 montierbar. Die Außengehäusewände 10", 10^{III} haben bogenartige Endbereiche, wie den Endbereich 123 und sind mit einer Mehrzahl von Versteifungsstegen, wie den Versteifungsstegen 125, 125^{I}, ausgestattet, um Widerlager für in den Getrieben 19, 21 auftretende Kräfte zu bieten. Eine erste Gruppe von Versteifungsstegen, wie der Versteifungssteg 125 führt sternförmig auf einen ersten Brennpunkt 165 hin, der, wie an der ersten Außengehäusewand 10^{II} eingezeichnet ist, eine Position der ersten Abtriebswelle 131^{I} zugeordnet ist. Eine zweite Gruppe von Stabilisierungsstegen, wie der Stabilisierungssteg 125^{I} führt auf einen zweiten Brennpunkt 167 hin, der einer nicht einsehbaren Rotorwelle einer ersten Elektromaschine zugeordnet ist. An der zweiten Außengehäusewand 10^{III} sind entsprechend angeordnete Brennpunkte vorhanden wie an der ersten Außengehäusewand 10". Damit ergibt sich ein sehr kompakter Aufbau des Antriebsblocks 1^{XVII}, der außerdem mit zahlreichen Sicherheitsmerkmalen ausgestattet ist.

Der Antriebsblock 1^{XVII} ist in seiner bevorzugten Einbaulage 171 mit den Invertern 111^{I}, 113^{I} oben ausgerichtet.

In Figur 24 sind besonders gut die Kühlrippen 161, 163 an den kastenartigen Gehäusen 115^{II}, 117^{II} der Inverter 111^{I}, 113^{I} des Antriebsblocks 1^{XVII} zu sehen.

In Figur 24 ist auch gut zu erkennen, dass jeder Inverter 111^{I}, 113^{I} seinen eigenen Elektroanschluss 183, 185, seinen eigenen Kühlkreislaufeingang 187, 189, seinen eigenen Kühlkreislaufausgang 191, 193 und seine Befestigungspunkte hat.

Die (zweite) Strompfadlänge 155 der (zweiten) Leitungsführung 159 wird durch den Abstand des elektrischen Energiespeichers (siehe Energiespeicher 143 in Figur 4) zu dem Antriebsblock 1^{XVII} (vgl. Antriebsblock 1 in Figur 4) bestimmt.

Die beiden kastenartigen Gehäuse 115", 117" der Inverter 111^{I}, 113^{I} sind ein wenig beabstandet, sodass eine Trennfuge 181^{I} zwischen beiden ausgebildet ist.

Die Inverter 111^{I}, 113^{I} können baugleich ausgeführt sein. Allein durch ein Drehen um eine Gehäusehochachse 179 ist es möglich, zwei zueinander identische Inverter 111^{I}, 113^{I} zu verwenden, die beide Teile Oberseite 177 des Antriebsblocks 1^{XVII} sind.

Die in den einzelnen Figuren gezeigten Ausgestaltungsmöglichkeiten lassen sich auch untereinander in beliebiger Form verbinden.

Die zentral angeordnete Batterie, wie der elektrische Energiespeicher 143 (siehe Figur 4), kann auch an mehreren Stellen verteilt im Fahrzeug platziert sein. Dadurch ergeben sich noch größere Unterschiede in den Kabellängen der Versorgungskabel 139, 139', 141, 141^{I}.

### Bezugszeichenliste

1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII} Antriebsblock
2, 2' Einzelradantrieb
3, 3', 3^{II}, 3^{V}, 3^{VI} erste Elektromaschine
4 erstes Elektromaschinengehäuse
5, 5^{I}, 5^{II}, 5^{III}, 5^{IV}, 5^{V}, 5^{VI} zweite Elektromaschine
6, 6', 6^{II} zweites Elektromaschinengehäuse
7, 7^{I} erste Abtriebsseite, insbesondere erste Stirnseite
8, 8^{I} Stirnseite der Elektromaschine
9, 9^{I} zweite Abtriebsseite, insbesondere zweite Stirnseite
10, 10', 10", 10^{III} Außengehäusewand, insbesondere in Axialrichtung angeordnete Schale des Getriebe-Teil-Gehäuses
11 erster elektrischer Bereich, insbesondere erster Wicklungsbereich
13 zweiter elektrischer Bereich, insbesondere zweiter Wicklungsbereich
14, 14', 14", Getriebegehäuse, insbesondere Teilgehäuses zur Unterbringung eines
14^{III}, 14^{IV} Getriebes
15, 15^{I}, 15" erste Antriebsachse
16, 16', 16", 16^{III} erste Antriebswelle, insbesondere von der Elektromaschine angetriebene Welle, wie eine erste Rotationswelle mit Rotationszentrum
17, 17', 17^{II} zweite Antriebsachse
18, 18', 18", 18^{III} zweite Antriebswelle, insbesondere von der Elektromaschine angetriebene Welle, wie eine zweite Rotationswelle mit Rotationszentrum
19, 19', 19^{II}, 19^{III}, 19^{IV}, 19^{V} erstes Getriebe
20 erste Wälzlageranordnung
20^{I} erstes Wälzlager
21, 21^{I}, 21", 21^{III}, 21^{IV}, 21^{V} zweites Getriebe
22 zweite Wälzlageranordnung
22^{I} erstes Wälzlager
23', 23" Abstand, insbesondere der Antriebsachsen
25, 25^{I} Deckungsbereich bzw. Überlappungsbereich, insbesondere der Elektromaschinen
26 Koaxiallager
27, 27^{I} Abtriebswelle, insbesondere Radantriebswelle
27^{II} erstes Abtriebswellensegment
27^{III} zweites Abtriebswellensegment
27^{IV} drittes Abtriebswellensegment
28, 28', 28", 28^{III} Abtriebswellenwälzlageranordnung
29, 29^{I} erstes Straßenrad, insbesondere Antriebsrad
30, 30^{I} Abtriebsachse, insbesondere gleiche Achse
31, 31^{I} zweites Straßenrad, insbesondere Antriebsrad
32 Steckverbindung, insbesondere drehfeste Wellenverbindung
33, 33^{I} erstes Gelenk
35, 35^{I} zweites Gelenk
37, 37^{I} drittes Gelenk
39, 39^{I} viertes Gelenk
41, 41^{I} erste Seitenwelle
43, 43^{I} zweite Seitenwelle
45, 45^{I} erste Einzelradaufhängung
47, 47^{I} zweite Einzelradaufhängung
49, 49', 49" erste randständige Versteifung, insbesondere linker Holm
51, 51^{I}, 51^{II} zweite randständige Versteifung, insbesondere rechter Holm
54 Bodenplatte, insbesondere Spritzschutz
61 erste Fahrtrichtung
63 zweite Fahrtrichtung
65, 65^{I} erster Statorradius
67, 67' zweiter Statorradius
70, 70', 70" Zahnradpaarung, insbesondere als Antrieb des Differentials
71, 71', 71" erstes Planetengetriebe, insbesondere erste Planetengetriebestufe
72, 72', 72" erste Ausgangszahnradstufe, insbesondere Zahnradpaarung
73, 73', 73" zweites Planetengetriebe, insbesondere zweite Planetengetriebestufe
74, 74', 74"zweite Ausgangszahnradstufe, insbesondere Zahnradpaarung
75, 75', 75" erstes Antriebssonnenrad
77, 77', 77" zweites Antriebssonnenrad
79, 79', 79" erster Steg
80, 80', 80" zweiter Steg
81, 81', 81" erstes Ringrad, insbesondere Hohlrad
82, 82', 82^{II} zweites Ringrad, insbesondere Hohlrad
83, 83', 83" erste Zwischenwelle
84, 84', 84" zweite Zwischenwelle
87 Differential, insbesondere Kegeldifferential
91, 91^{I}, 91^{II}, 91^{III}, 91^{IV}, 91^{V} 91^{VI} erste Abtriebswelle, insbesondere Getriebeabtrieb, wie eine Radantriebswelle
93, 93', 93", 93^{III}, 93^{IV} V-Anordnung
95, 95^{I}, 95", 95^{III}, 95^{IV} erster Arm der V-Anordnung
97, 97', 97", 97^{III}, 97^{IV} zweiter Arm der V-Anordnung
99, 99^{I}, 99^{II}, 99^{III}, 99^{IV} Winkel der V-Anordnung
101, 101^{I}, 101", 101^{III}, 101^{IV} konstruktive Ebene
102 erste Seite, insbesondere Bereich unterhalb
102^{I} zweite Seite, insbesondere Bereich oberhalb
103, 103^{I} Ebene parallel zum Getriebe
107, 107^{I} erste Position, insbesondere Position der ersten Rotorwelle
108, 108^{I} zweite Position, insbesondere Position der zweiten Rotorwelle
109, 109^{I}, 109^{II} Inverterblock
111, 111^{I} erster Inverter
113, 113' zweiter Inverter
114 Gesamtgehäuse des Antriebsblocks
115, 115', 115" erstes kastenartiges Gehäuse, insbesondere kapselndes Gehäuse des ersten Inverters, wie ein Teil-Gehäuse des Inverters
117, 117', 117" zweites kastenartiges Gehäuse, insbesondere kapselndes Gehäuse des zweiten Inverters, wie ein Teilgehäuse des Inverters
118 Kerngehäuse
119, 119^{I} Erdungskabel
121 Gehäusebereich für die Abdeckung einer Parksperrenvorrichtung, insbesondere Bereich zur Aufnahme einer Parksperrensteuerung
123 kreisbogenartiger Endbereich
125, 125^{I} Versteifungssteg
127, 127^{I} erstes Getriebegehäuse, insbesondere Teilgehäuse des ersten Getriebes
129, 129^{I} zweites Getriebegehäuse, insbesondere Teilgehäuse des zweiten Getriebes
131, 131^{I} erste Abtriebswelle
133, 133^{I} zweite Abtriebswelle
135, 135^{I} Inverter-Schmalseite
139, 139^{I} erstes Versorgungskabel
141, 141^{I} zweites Versorgungskabel
143 elektrischer Energiespeicher
145 erste Breite der ersten Elektromaschine
147 zweite Breite der zweiten Elektromaschine
149 Steuerungsstecker
151, 151^{I} Gehäusebereich Antriebsumschaltung, insbesondere Teilgehäuse
153 erste Strompfadlänge
155 zweite Strompfadlänge
157 erste Leitungsführung
159 zweite Leitungsführung
161 erste Kühlrippe
163 zweite Kühlrippe
165 erster Brennpunkt
167 zweiter Brennpunkt
171 Einbaulage
173 höchste Stelle
175 tiefste Stelle
177 Oberseite des Antriebsblocks
179 Gehäusehochachse
181, 181' Trennfuge
183 erster Elektroanschluss
185 zweiter Elektroanschluss
187 erster Kühlkreislaufeingang
189 zweiter Kühlkreislaufeingang
191 erster Kühlkreislaufausgang
193 zweiter Kühlkreislaufausgang
195 erster Befestigungspunkt
197 zweiter Befestigungspunkt
199 dritter Befestigungspunkt
201, 201^{I} Kraftfahrzeug
203, 203^{I} Kfz-Antrieb
205 erster Einzelradantrieb
207 zweiter Einzelradantrieb
209 Achse
209^{I} Achse
209^{II} Achse, insbesondere Kfz-Achse, die mit zwei Einzelradantrieben realisiert ist
209^{III} Achse, insbesondere Kfz-Achse, an der ein Lenkgestänge zu finden ist
211 Längsfahrzeugrichtung
213 Kraftfahrzeugquerrichtung
221, 221^{I} Lenkrad
223, 223^{I} Fahrgastzelle
225, 225^{I} Lenkgestänge
231, 231^{I} Längsträger
233, 233^{I}, 233^{II} 233^{III} Querträger
234 Dreiecks-Querlenker, insbesondere ein vorderer Dreiecks-Querlenker
235, 235^{I} Vorderrad
236 Dreiecks-Querlenker, insbesondere ein hinterer Dreiecks-Querlenker
237,237' Hinterrad
239, 239^{I} Bauraum
241, 241^{I}, 241^{II}, 241^{III}, 241^{IV} Bauraumgrenze, insbesondere Frontbauraumgrenze
243, 243', 243", 243^{III} untere Bauraumgrenze, insbesondere Grenzfläche des Bauraums
244 seitliche Grenzfläche
245, 245', 245", 245^{III} obere Bauraumgrenze, insbesondere Grenzfläche des Bauraums
246 seitliche Grenzfläche
247 Motorhaube bzw. Frontklappe
249 Heckklappe bzw. Kofferraumdeckel
251 Bauraumgrenze, insbesondere Heckbauraumgrenze
253, 253', 253", 253^{III} vordere Grenzfläche
255, 255^{I}, 255", 255^{III} hintere Grenzfläche
261 Kühler, insbesondere an einem Rahmen zur Unfallenergieaufnahme
263 Begrenzung der Fahrgastzelle, insbesondere Trennwand zwischen Bauraum und Fahrgastzelle
309 Parksperrenvorrichtung
317 erste Parksperre
319 zweite Parksperre
321 erster Parksperrenaktuator, insbesondere eines ersten Typs einer Parksperrenaktuatorik
323 zweiter Parksperrenaktuator, insbesondere eines ersten Typs einer Parksperrenaktuatorik
324 erster Typ von Parksperrenaktuatorik
325 bodennaher Bereich, insbesondere erste Seite einer konstruktiven Ebene
327 bodenferner Bereich, insbesondere zweite Seite einer konstruktiven Ebene
331 kleineres Ritzel
333, 333^{I} größeres Ritzel
335 Klinkensperre
339 Federenergiespeicher
341 Ringrad, insbesondere Parksperrenringrad
342 Ringradgehäuse
343 Außenzahnkranz, insbesondere des Ringrads
345 Übertragungsstufe
347 Parksperrenaktuator eines zweiten Typs von Parksperrenaktuatorik
348 zweiter Typ von Parksperrenaktuatorik
349 Planetengetriebestufe
351 Zahnradgetriebestufe, insbesondere Stirnzahnradgetriebestufe
357, 357^{I} Ausgangszahnrad, insbesondere einer Stirnzahnradstufe
359 Eingangswelle

## Patentansprüche

1. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) eines elektromotorischen Kfz-Antriebs
mit einer ersten Elektromaschine (3, 3^{I}, 3^{II}, 3^{V}, 3^{VI}) und einem stirnseitig der ersten Elektromaschine (3, 3^{I}, 3^{II}, 3^{V}, 3^{VI}) angeordneten ersten Getriebe (19, 19^{I}, 19^{II}, 19^{III}, 19^{IV}, 19^{V}) und
mit einer zweiten Elektromaschine (5, 5^{I}, 5^{II}, 5^{III}, 5^{IV}, 5^{V}, 5^{VI}) und einem stirnseitig der zweiten Elektromaschine (5, 5^{I}, 5^{II}, 5^{III}, 5^{IV}, 5^{V}, 5^{VI}) angeordneten zweiten Getriebe (21, 21^{I}, 21^{II}, 21^{III}, 21^{IV}, 21^{V}),
die zumindest teilweise in einer Längsfahrzeugrichtung (211) deckend zueinander angeordnet sind,
wobei Rotationszentren (16, 16^{I}, 16^{II}, 16^{III}, 18, 18^{I}, 18^{II}, 18^{III}) der Elektromaschinen (3, 3', 3^{II}, 3^{V}, 3^{VI}, 5, 5^{I}, 5^{II}, 5^{III}, 5^{IV}, 5^{V}, 5^{VI}) durch ihre Rotationswellen (16, 16^{I}, 16^{II}, 16^{III}, 18, 18^{I}, 18^{II}, 18^{III}) eine konstruktive Ebene (101, 101^{I}, 101^{II}, 101^{III}, 101^{IV}) bestimmen,
zu der versetzt ein Getriebeabtrieb (27, 27^{I}, 91, 91^{I}, 91^{II}, 91^{III}, 91^{IV}, 91^{V}, 91^{VI}, 131, 131^{I}, 133, 133^{I}) angeordnet ist,
sodass sich aus einer ersten Position (107, 107^{I}) der ersten Rotationswelle (16, 16^{I}, 16^{II}, 16^{III}), aus einer zweiten Position (108, 108^{I}) der zweiten Rotationswelle (18, 18^{I}, 18^{II}, 18^{III}) und des Getriebeabtriebs (27, 27^{I}, 91, 91^{I}, 91^{II}, 91^{III}, 91^{IV}, 91^{V}, 91^{VI}, 131, 131^{I}, 133, 133^{I}) eines der Getriebe (19, 19^{I}, 19^{II}, 19^{III}, 19^{IV}, 19^{V}, 21, 21^{I}, 21^{II}, 21^{III}, 21^{IV}, 21^{V}) auf einer Ebene (103, 103^{I}) parallel zu dem Getriebe (19, 19', 19", 19^{III}, 19^{IV}, 19^{V}, 21, 21', 21^{II}, 21^{III}, 21^{IV}, 21^{V}) eine V-Anordnung (93, 93^{I}, 93^{II}, 93^{III}, 93^{IV}) mit einem Winkel (99, 99^{I}, 99^{II}, 99^{III}, 99^{IV}) zwischen Armen (95, 95^{I}, 95^{II}, 95^{III}, 95^{IV}, 97, 97^{I}, 97^{II}, 97^{III}, 97^{IV}) des Vs kleiner als 180° ausbildet,
**dadurch gekennzeichnet, dass**
jedes Getriebe (19, 19', 19", 19^{III}, 19^{IV}, 19^{V}, 21, 21', 21", 21^{III}, 21^{IV}, 21^{V}) eine erste Stufe und eine zweite Stufe hat,
wobei je eine Stufe der Getriebe (19, 19', 19^{II}, 19^{III}, 19^{IV}, 19^{V}, 21, 21^{I}, 21^{II}, 21^{III}, 21^{IV}, 21^{V}) als Planetengetriebe (71, 71^{I}, 71^{II}, 73, 73^{I}, 73^{II}, 349) und die andere der Stufen der Getriebe (19, 19^{I}, 19^{II}, 19^{III}, 19^{IV}, 19^{V}, 21, 21', 21", 21^{III}, 21^{IV}, 21^{V}) als Stirnradgetriebestufe (72, 72^{II}, 72^{I}, 74, 74^{I}, 74", 351) realisiert sind, und
es einen Inverterblock (109, 109^{I}, 109^{II})
und/oder eine Parksperrenvorrichtung (309) gibt,
wobei sich zumindest ein Teil des Inverterblocks (109, 109^{I}, 109^{II}) und/oder die Parksperrenvorrichtung (309) seitlich einer Elektromaschine (3, 3^{I}, 3^{II}, 3^{V}, 3^{VI}, 5, 5^{I}, 5^{II}, 5^{III}, 5^{IV}, 5^{V}, 5^{VI}) und
zwischen den mittels Gehäuse (14, 14^{I}, 14^{II}, 14^{III}, 14^{IV}, 127, 127^{I}, 129, 129^{I}) eingehausten Getrieben (19, 19^{I}, 19^{II}, 19^{III}, 19^{IV}, 19^{V}, 21, 21^{I}, 21^{II}, 21^{III}, 21^{IV}, 21^{V}), befindet,
wobei jedes der Gehäuse (14, 14^{I}, 14^{II}, 14^{III}, 14^{IV}, 127, 127^{I}, 129, 129^{I}) mit zwei Brennpunkten (165, 167) einer Ellipse ähnlich ist, wobei die Brennpunkte (165, 167) als Konstruktionspunkte dienen, um die herum bogenartige Endbereiche (123) des Gehäuses (14, 14', 14^{II}, 14^{III}, 14^{IV}, 127, 127^{I}, 129, 129^{I}) konstruierbar sind,
wobei in einem Bereich eines Brennpunkts (167) eines Gehäuses (14, 14^{I}, 14^{II}, 14^{III}, 14^{IV}, 127, 127^{I}, 129, 129^{I}) eine der Rotationswellen (16, 16^{I}, 16", 16^{III}, 18, 18', 18^{II}, 18^{III}) ausläuft und in einem Bereich des anderen Brennpunkts (165) sich einer der Getriebeabtriebe (27, 27^{I}, 91, 91^{I}, 91^{II}, 91^{III}, 91^{IV}, 91^{V}, 91^{VI}, 131, 131', 133, 133^{I}) befindet.

2. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach Anspruch 1,
**dadurch gekennzeichnet, dass**
das Gehäuse (14, 14', 14", 14^{III}, 14^{IV}, 127, 127', 129, 129^{I}) eines der Getriebe (19, 19^{I}, 19^{II}, 19^{III}, 19^{IV}, 19^{V}, 21, 21^{I}, 21", 21^{III}, 21^{IV}, 21^{V}) motorstirnseitig über eine Motorstirnseite (7, 8, 8^{I}, 9) seitlich hinaussteht.

3. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
zumindest eines der Gehäuse (14, 14', 14^{II}, 14^{III}, 14^{IV}, 127, 127', 129, 129^{I}) ein flaches, mit einer Außengehäusewand (10, 10', 10", 10^{III}) ausgestattetes Gehäuse (14, 14^{I}, 14", 14^{III}, 14^{IV}, 127, 127', 129, 129^{I}) mit zwei kreisbogenartigen Endbereichen (123) ist und/oder sich zumindest ein Teil des Inverterblocks (109, 109^{I}, 109^{II}) und/oder die Parksperrenvorrichtung (309) zwischen den in einer Achsrichtung vorhandenen jeweiligen Außengehäusewänden (10, 10^{I}, 10^{II}, 10^{III}) der Getriebe (19, 19^{I}, 19", 19^{III}, 19^{IV}, 19^{V}, 21, 21^{I}, 21^{II}, 21^{III}, 21^{IV}, 21^{V}) bodenabgewandt, somit oberhalb der konstruktiven Ebene (101, 101^{I}, 101^{II}, 101^{III}, 101^{IV}) befindet.

4. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
das Gehäuse (14, 14^{I}, 14", 14^{III}, 14^{IV}, 127, 127^{I}, 129, 129^{I}) durch einen der Brennpunkte (165) einen breiteren Durchmesser hat als ein Durchmesser durch den anderen Brennpunkt (167).

5. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
in Abtriebsrichtung vorgeordnet die Planetengetriebestufe (71, 71^{I}, 71^{II}, 73, 73', 73", 349) vor der Stirnradgetriebestufe (72, 72", 72^{I}, 74, 74^{I}, 74^{II}, 351) angeordnet ist.

6. Antriebsblock (1, 1^{I}, 1^{II}, 1^{III}, 1^{IV}, 1^{V}, 1^{VI}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
für einen Einbau in einem quaderförmigen Kraftfahrzeugbauraum (239, 239^{I}, 241, 241^{I}, 241^{II}, 241^{III}, 241^{IV}, 251),
der durch zueinander im rechten Winkel stehende Grenzflächen (243, 243^{I}, 243^{II}, 243^{III}, 244, 245, 245^{I}, 245^{II}, 245^{III}, 246, 253, 253^{I}, 253^{II}, 253^{III}, 255, 255^{I}, 255^{II}, 255^{III} begrenzt ist,
der Inverterblock (109, 109', 109") parallel zu einer Grenzfläche (243, 243^{I}, 243^{II}, 243^{III}, 244, 245, 245^{I}, 245^{II}, 245^{III}, 246, 253, 253^{I}, 253", 253^{III}, 255, 255^{I}, 255^{II}, 255^{III}) ausgerichtet ist.

7. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
die konstruktive Ebene (101, 101^{I}, 101^{II}, 101^{III}, 101^{IV}) einen Bereich (102, 325) unterhalb und einen Bereich (102^{I}, 327) oberhalb der konstruktiven Ebene (101, 101^{I}, 101^{II}, 101^{III}, 101^{IV}) trennt,
wobei der Inverterblock (109, 109^{II}) in dem Bereich (102^{I}, 327) oberhalb der konstruktiven Ebene (101, 101', 101", 101^{III}, 101^{IV}) angeordnet ist.

8. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
sich der Inverterblock (109, 109', 109^{II}) auf einer ersten Seite (102, 102^{I}, 325, 327) der konstruktiven Ebene (101, 101^{I}, 101^{II}, 101^{III}, 101^{IV}) befindet.

9. Antriebsblock (1^{XIII}, 1^{XIV}, 1^{XV}, 1^{XVI}, 1^{XVII}) nach Anspruch 8,
**dadurch gekennzeichnet, dass**
sich eine Parksperre (317, 319) für wenigstens eine Rotationshemmung auf einer zweiten Seite (327, 325, 102^{I}, 102) der konstruktiven Ebene (101, 101', 101^{II}, 101^{III}, 101^{IV}) befindet und
sich auf einer bodenfernen Seite (102^{I}, 327) der konstruktiven Ebene (101, 101^{I}, 101") zumindest einer der Inverter (111, 111^{I}, 113, 113^{I}) erstreckt.

10. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
die erste Elektromaschine (3, 3^{I}, 3^{II}, 3^{V}, 3^{VI}) eine erste Elektromaschinenbreite (145), insbesondere einen Elektromaschinenradius (65, 65^{I}), und
die zweite Elektromaschine (5, 5^{I}, 5^{II}, 5^{III}, 5^{IV}, 5^{V}, 5^{VI}) eine zweite Elektromaschinenbreite (147), insbesondere einen zweiten Elektromaschinenradius (67, 67^{I}), aufweist,
wobei zumindest ein Gehäuse (14, 14^{I}, 14^{II}, 14^{III}, 14^{IV}, 127, 127', 129, 129^{I}) eines der Getriebe (19, 19^{I}, 19^{II}, 19^{III}, 19^{IV}, 19^{V}, 21, 21', 21", 21^{III}, 21^{IV}, 21^{V}), vorzugsweise beide Gehäuse (14, 14^{I}, 14^{II}, 14^{III}, 14^{IV}, 127, 127^{I}, 129, 129^{I}) für beide Getriebe (19, 19^{I}, 19^{II}, 19^{III}, 19^{IV}, 19^{V}, 21, 21^{I}21^{II}, 21^{III}, 21^{IV}, 21^{V}), in zumindest einer Richtung über die Elektromaschinenbreite (145, 147) ihrer Elektromaschine (3, 3^{I}, 3^{II}, 3^{V}, 3^{VI}, 5, 5^{I}, 5^{II}, 5^{III}, 5^{IV}, 5^{V}, 5^{VI}) hinausragt.

11. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
mindestens ein inverter (111, 111^{I}, 113, 113^{I}) in einem kapselnden Gehäuse (115, 115^{I}, 115^{II}, 117, 117^{I}, 117^{II}), insbesondere blockartig abgesetzt von den Elektromaschinen (3, 3^{I}, 3^{II}, 3^{V}, 3^{VI}, 5, 5^{I}, 5^{II}, 5^{III}, 5^{IV}, 5^{V}, 5^{VI}), angeordnet ist.

12. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
mindestens ein Inverter (111, 111^{I}, 113, 113^{I}) mit einer Schmalseite (135) quer zu den Rotationswellen (16, 16^{I}, 16", 16^{III}, 18, 18', 18^{II}, 18^{III}) steht,
insbesondere die Schmalseite (135) eine Stirnseite ist, auf die eine Kraftfahrzeugquerrichtung (213) weist.

13. Antriebsblock (1^{XIII}, 1^{XIV}, 1^{XV}, 1^{XVI}, 1^{XVII}) nach einem der vorhergehenden Ansprüche,
**dadurch gekennzeichnet, dass**
mindestens eine Parksperre (317, 319) seitlich den Antriebsblock (1^{XIII}, 1^{XIV}, 1^{XV}, 1^{XVI}, 1^{XVII}) beschließt.

14. Antriebsblock (1^{VII}, 1^{XV}) nach einem der vorhergehenden Ansprüche,
**dadurch gekennzeichnet, dass**
eine der Elektromaschinen (3^{VI}, 5^{III}, 5^{VI}) in einer Einbaulage des Antriebsblocks (1^{VII}, 1^{XV}) höher positioniert ist als die andere der Elektromaschinen (3^{VI}), sodass beide Rotationszentren in Bezug auf die Längsfahrzeugrichtung an unterschiedlichen Stellen angeordnet sind.

15. Antriebsblock (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) nach einem der vorhergehenden Ansprüche,
**dadurch gekennzeichnet, dass**
der Inverterblock (109, 109', 109") sich aus zwei Invertern (111, 111^{I}, 113, 113^{I}) bildet, von denen je ein Inverter (111, 111^{I}, 113, 113^{I}) für eine elektrische Versorgung einer der beiden Elektromaschinen (3, 3^{I}, 3^{II}, 3^{V}, 3^{VI}, 5, 5^{I}, 5^{II}, 5^{III}, 5^{IV}, 5^{V}, 5^{VI}) gestaltet ist.

## Claims

1. A drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) of an electric motor-driven motor vehicle drive,
comprising a first electric machine (3, 3^{I}, 3^{II}, 3^{V}, 3^{VI}) and a first transmission (19, 19^{I}, 19^{II}, 19^{III}, 19^{IV}, 19^{V}) arranged on an end face of the first electric machine (3, 3^{I}, 3^{II}, 3^{V}, 3^{VI}), and
comprising a second electric machine (5, 5^{I}, 5^{II}, 5^{III}, 5^{IV}, 5^{V}, 5^{VI}) and a second transmission (21, 21^{I}, 21^{II}, 21^{III}, 21^{IV}, 21^{V}) arranged on an end face of the second electric machine (5, 5^{I}, 5^{II}, 5^{III}, 5^{IV}, 5^{V}, 5^{VI}),
which are arranged at least partially congruent with each other in a longitudinal vehicle direction (211),
wherein centers of rotation (16, 16^{I}, 16^{II}, 16^{III}, 18, 18^{I}, 18^{II}, 18^{III}) of the electric machines (3, 3^{I}, 3^{II}, 3^{V}, 3^{VI}, 5, 5^{I}, 5^{II}, 5^{III}, 5^{IV}, 5^{V}, 5^{VI}) define a datum plane (101, 101^{I}, 101^{II}, 101^{III}, 101^{IV}) through the rotary shafts (16, 16^{I}, 16^{II}, 16^{III}, 18, 18^{I}, 18^{II}, 18^{III}) thereof,
in relation to which datum plane a transmission output (27, 27^{I}, 91, 91^{I}, 91^{II}, 91^{III}, 91^{IV}, 91^{V}, 91^{VI}, 131, 131^{I}, 133, 133^{I}) is offset,
so that a V-shaped arrangement (93, 93^{I}, 93^{II}, 93^{III}, 93^{IV}) having an angle (99, 99^{I}, 99^{II}, 99^{III}, 99^{IV}) smaller than 180° between arms (95, 95^{I}, 95^{II}, 95^{III}, 95^{IV}, 97, 97^{I}, 97^{II}, 97^{III}, 97^{IV}) of the V on a plane (103, 103^{I}) parallel to the transmission (19, 19^{I}, 19^{II}, 19^{III}, 19^{IV}, 19^{V}, 21, 21^{I}, 21", 21^{III}, 21^{IV}, 21^{V}) is formed from a first position (107, 107^{I}) of the first rotary shaft (16, 16^{I}, 16^{II}, 16^{III}), from a second position (108, 108^{I}) of the second rotary shaft (18, 18^{I}, 18^{II}, 18^{III}) and from the transmission output (27, 27^{I}, 91, 91^{I}, 91^{II}, 91^{III}, 91^{IV}, 91^{V}, 91^{VI}, 131, 131^{I}, 133, 133^{I}) of one of the transmissions (19, 19^{I}, 19^{II}, 19^{III}, 19^{IV}, 19^{V}, 21, 21', 21", 21^{III}, 21^{IV}, 21^{V}),
**characterized in that**
each transmission (19, 19^{I}, 19", 19^{III}, 19^{IV}, 19^{V}, 21, 21^{I}, 21", 21^{III}, 21^{IV}, 21^{V}) has a first stage and a second stage,
wherein in each case one stage of the transmission (19, 19^{I}, 19", 19^{III}, 19^{IV}, 19^{V}, 21, 21^{I}, 21^{II}, 21^{III}, 21^{IV}, 21^{V}) is embodied as a planetary transmission (71, 71^{I}, 71^{II}, 73, 73^{I}, 73^{II}, 349) and the other stage of the transmission (19, 19^{I}, 19^{II}, 19^{III}, 19^{IV}, 19^{V}, 21, 21^{I}, 21^{II}, 21^{III}, 21^{IV}, 21^{V}) is embodied as a spur gear transmission stage (72, 72", 72', 74, 74^{I}, 74", 351), and
the drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) comprises an inverter block (109, 109', 109^{II})
and/or a parking lock device (309),
wherein at least part of the inverter block (109, 109^{II}) and/or the parking lock device (309) is located to the side of an electric machine (3, 3^{I}, 3^{II}, 3^{V}, 3^{VI}, 5, 5^{I}, 5^{II}, 5^{III}, 5^{IV}, 5^{V}, 5^{VI}) and
between the transmissions (19, 19^{I}, 19^{II}, 19^{III}, 19^{IV}, 19^{V}, 21, 21^{I}, 21", 21^{III}, 21^{IV}, 21^{V}), which are housed by housings (14, 14^{I}, 14^{II}, 14^{III}, 14^{IV}, 127, 127^{I}, 129, 129^{I}),
wherein each of the housings (14, 14^{I}, 14^{II}, 14^{III}, 14^{IV}, 127, 127', 129, 129^{I}) is similar to an ellipse and has two foci (165, 167), wherein the foci (165, 167) serve as construction points, around which arc-shaped end regions (123) of the housing (14, 14^{I}, 14^{II}, 14^{III}, 14^{IV}, 127, 127^{I}, 129, 129^{I}) can be constructed,
wherein one of the rotary shafts (16, 16^{I}, 16^{II}, 16^{III}, 18, 18^{I}, 18^{II}, 18^{III}) ends in an area of one focus (167) of a housing (14, 14^{I}, 14^{II}, 14^{III}, 14^{IV}, 127, 127', 129, 129^{I}) and one of the transmission outputs (27, 27¹, 91, 91^{I}, 91^{II}, 91^{III}, 91^{IV}, 91^{V}, 91^{VI}, 131, 131^{I}, 133, 133^{I}) is situated in an area of the other focus (165).

2. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to claim 1,
**characterized in that**
the housing (14, 14^{I}, 14^{II}, 14^{III}, 14^{IV}, 127, 127^{I}, 129, 129^{I}) of one of the transmissions (19, 19^{I}, 19^{II}, 19^{III}, 19^{IV}, 19^{V}, 21, 21^{I}, 21^{II}, 21^{III}, 21^{IV}, 21^{V}) projects laterally beyond a motor end face (7, 8, 8^{I}, 9) at an end of the motor.

3. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
at least one of the housings (14, 14^{I}, 14^{II}, 14^{III}, 14^{IV}, 127, 127^{I}, 129, 129^{I}) is a shallow housing (14, 14^{I}, 14^{II}, 14^{III}, 14^{IV}, 127, 127', 129, 129^{I}) which is equipped with an outer housing wall (10, 10^{I}, 10^{II}, 10^{III}) and has two circular arc-shaped end regions (123), and/or at least part of the inverter block (109, 109^{II}) and/or the parking lock device (309) is located remote from the ground and thus above the datum plane (101, 101', 101^{II}, 101^{III}, 101^{IV}) and between the respective outer housing walls (10, 10^{I}, 10^{II}, 10^{III}) of the transmission (19, 19^{I}, 19^{II}, 19^{III}, 19^{IV}, 19^{V}, 21, 21^{I}, 21^{II}, 21^{III}, 21^{IV}, 21^{V}), said outer walls (10, 10^{I}, 10^{II}, 10^{III}) being arranged in an axial direction.

4. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
the housing (14, 14^{I}, 14", 14^{III}, 14^{IV}, 127, 127', 129, 129^{I}) has a diameter through one of the foci (165) that is wider than a diameter through the other focus (167).

5. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
the planetary transmission stage (71, 71^{I}, 71^{II}, 73, 73^{I}, 73^{II}, 349) is arranged in respect of an output direction upstream of the spur gear transmission stage (72, 72^{II}, 72^{I}, 74, 74^{I}, 74", 351).

6. The drive block (1, 1^{I}, 1^{II}, 1^{III}, 1^{IV}, 1^{V}, 1^{VI}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
for installation in a cuboidal motor vehicle installation space (239, 239', 241, 241^{I}, 241^{II}, 241^{III}, 241^{IV}, 251),
which is bounded by boundary surfaces (243, 243^{I}, 243^{II}, 243^{III}, 244, 245, 245^{I}, 245^{II}, 245^{III}, 246, 253, 253^{I}, 253^{II}, 253^{III}, 255, 255^{I}, 255^{II}, 255^{III}) arranged at right angles to each other,
the inverter block (109, 109") is oriented parallel to one boundary surface (243, 243^{I}, 243^{II}, 243^{III}, 244, 245, 245^{I}, 245^{II}, 245^{III}, 246, 253, 253^{I}, 253^{II}, 253^{III}, 255, 255^{I}, 255^{II}, 255^{III}).

7. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
the datum plane (101, 101^{I}, 101^{II}, 101^{III}, 101^{IV}) separates an area (102, 325) below and an area (102^{I}, 327) above the datum plane (101, 101^{I}, 101^{II}, 101^{III}, 101^{IV}),
wherein the inverter block (109, 109^{II}) is arranged in the area (102^{I}, 327) above the datum plane (101, 101^{I}, 101^{II}, 101^{III}, 101^{IV}).

8. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
the inverter block (109, 109") is located on a first side (102, 102^{I}, 325, 327) of the datum plane (101, 101^{I}, 101^{II}, 101^{III}, 101^{IV}).

9. The drive block (1^{XIII}, 1^{XIV}, 1^{XV}, 1^{XVI}, 1^{XV**I**I}) according to claim 8,
**characterized in that**
a parking lock (317, 319) for inhibition of at least one rotation is located on a second side (327, 325, 102^{I}, 102) of the datum plane (101, 101', 101", 101^{III}, 101^{IV}), and
at least one of the inverters (111, 111^{I}, 113, 113^{I}) extends on a side (102^{I}, 327) of the datum plane (101, 101^{I}, 101^{II}) remote from the ground.

10. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
the first electric machine (3, 3^{I}, 3", 3^{V}, 3^{VI}) has a first electric machine width (145), in particular an electric machine radius (65, 65^{I}), and
the second electric machine (5, 5^{I}, 5", 5^{III}, 5^{IV}, 5^{V}, 5^{VI}) has a second electric machine width (147), in particular a second electric machine radius (67, 67'),
wherein at least one housing (14, 14^{I}, 14^{II}, 14^{III}, 14^{IV}, 127, 127', 129, 129^{I}) of one of the transmissions (19, 19^{I}, 19", 19^{III}, 19^{IV}, 19^{V}, 21, 21^{I}, 21", 21^{III}, 211^{IV}, 21^{V}), preferably both housings (14, 14^{I}, 14^{II}, 14^{III}, 14^{IV}, 127, 127^{I}, 129, 129^{I}) for both transmissions (19, 19^{I}, 19^{II}, 19^{III}, 19^{IV}, 19^{V}, 21, 21', 21", 21^{III}, 21^{IV}, 21^{V}), protrudes beyond the electric machine width (145, 147) of its electric machine (3, 3^{I}, 3", 3^{V}, 3^{VI}, 5, 5^{I}, 5^{II}, 5^{III}, 5^{IV}, 5^{V}, 5^{VI}) in at least one direction.

11. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
at least one inverter (111, 111^{I}, 113, 113^{I}) is arranged in an encapsulating housing (115, 115^{I}, 115", 117, 117^{I}, 117"), in particular in a block-like manner separate from the electric machines (3, 3^{I}, 3", 3^{V}, 3^{VI}, 5, 5^{I}, 5^{II}, 5^{III}, 5^{IV}, 5^{V}, 5^{VI}).

12. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
at least one inverter (111, 111^{I}, 113, 113^{I}) is situated with a narrow side (135) transverse to the rotary shafts (16, 16', 16", 16^{III}, 18, 18^{I}, 18^{II}, 18^{III}),
wherein in particular the narrow side (135) is an end side pointing in a motor vehicle transverse direction (213).

13. The drive block (1^{XIII}, 1^{XIV}, 1^{XV}, 1^{XVI}, 1^{XVII}) according to any one of the preceding claims,
**characterized in that**
at least one parking lock (317, 319) laterally terminates the drive block (1^{XIII}, 1^{XIV}, 1^{XV}, 1^{XVI}, 1^{XVII}).

14. The drive block (1^{VII}, 1^{XV}) according to any one of the preceding claims,
**characterized in that,**
in an installation position of the drive block (1^{VII}, 1^{XVI}), one of the electric machines (3^{VI}, 5^{III}, 5^{VI}) is positioned higher than the other of the electric machines (3^{VI}), so that the two centers of rotation are arranged at different points in relation to the longitudinal vehicle direction.

15. The drive block (1, 1^{I}, 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) according to any one of the preceding claims,
**characterized in that**
the inverter block (109, 109^{I}, 109") is formed of two inverters (111, 111', 113, 113^{I}),
of which one respective inverter (111, 111^{I}, 113, 113') is designed to supply electrical energy to one of the two electric machines (3, 3^{I}, 3^{II}, 3^{V}, 3^{VI}, 5, 5^{I}, 5^{II}, 5^{III}, 5^{IV}, 5^{V}, 5^{VI}).

## Revendications

1. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) d'un entraînement de véhicule automobile électromoteur
avec une première machine électrique (3, 3', 3", 3^{V}, 3^{VI}) et une première transmission (19, 19^{I}, 19", 19^{III}, 19^{IV}, 19^{V}) agencée sur le côté frontal de la première machine électrique (3, 3', 3", 3^{V}, 3^{VI}) et
avec une seconde machine électrique (5, 5^{I}, 5^{II}, 5^{III}, 5^{IV}, 5^{V}, 5^{VI}) et une seconde transmission (21, 21^{I}, 21^{II}, 21^{III}, 211^{IV}, 21^{V}) agencée sur le côté frontal de la seconde machine électrique (5, 5^{I}, 5^{II}, 5^{III}, 5^{IV}, 5^{V}, 5^{VI}),
qui sont agencées au moins partiellement de façon à se recouvrir mutuellement dans une direction de véhicule longitudinale (211),
dans lequel des centres de rotation (16, 16^{I}, 16", 16^{III}, 18, 18', 18^{II}, 18^{III}) des machines électriques (3, 3', 3^{II}, 3^{V}, 3^{VI}, 5, 5^{I}, 5^{II}, 5^{III}, 5^{IV}, 5^{V}, 5^{VI}) déterminent via leurs arbres de rotation (16, 16', 16", 16^{III}, 18, 18', 18^{II}, 18^{III}) un plan constructif (101, 101', 101^{II}, 101^{III}, 101^{IV}),
par rapport auquel une sortie de transmission (27, 27', 91, 91^{I}, 91", 91^{III}, 91^{IV}, 91^{V}, 91^{VI}, 131, 131', 133, 133') est agencée de façon décalée,
de sorte qu'à partir d'une première position (107, 107^{I}) du premier arbre de rotation (16, 16^{I}, 16^{II}, 16^{III}), à partir d'une seconde position (108, 108^{I}) du second arbre de rotation (18, 18', 18", 18^{III}) et de la sortie de transmission (27, 27', 91, 91^{I}, 91", 91^{III}, 91^{IV}, 91^{V}, 91^{VI}, 131, 131', 133, 133') de l'une des transmissions (19, 19^{I}, 19^{II}, 19^{III}, 19^{IV}, 19^{V}, 21, 21^{I}, 21", 21^{III}, 211^{IV}, 21^{V}) soit formé un agencement en V (93, 93', 93^{II}, 93^{III}, 93^{IV}) sur un plan (103, 103^{I}) parallèle à la transmission (19, 19^{I}, 19^{II}, 19^{III}, 19^{IV}, 19^{V}, 21, 21', 21", 21^{III}, 211^{IV}, 21^{V}) avec un angle (99, 99', 99^{II}, 99^{III}, 99^{IV}) entre les bras (95, 95^{I}, 95", 95^{III}, 95^{IV}, 97, 97', 97", 97^{III}, 97^{IV}) du V inférieur à 180°,
**caractérisé en ce que**
chaque transmission (19, 19^{I}, 19", 19^{III}, 19^{IV}, 19^{V}, 21, 21^{I}, 21^{II}, 21^{III}, 21^{IV}, 21^{V}) a un premier étage et un second étage,
dans lequel respectivement un étage des transmissions (19, 19', 19", 19^{III}, 19^{IV}, 19^{V}, 21, 21^{I}, 21", 21^{III}, 211^{IV}, 21^{V}) est réalisé en tant que transmission planétaire (71, 71^{I}, 71^{II}, 73, 73^{I}, 73", 349) et l'autre des étages des transmissions (19, 19^{I}, 19", 19^{III}, 19^{IV}, 19^{V}, 21, 21^{I}, 21", 21^{III}, 211^{IV}, 21^{V}) est réalisé en tant qu'étage de transmission à denture droite (72, 72", 72^{I}, 74, 74^{I}, 74", 351), et
il y a un bloc d'onduleurs (109, 109', 109^{II})
et/ou un dispositif de frein de stationnement (309),
dans lequel se trouve au moins une partie du bloc d'onduleurs (109, 109', 109^{II}) et/ou le dispositif de frein de stationnement (309) sur le côté d'une machine électrique (3, 3', 3^{II}, 3^{V}, 3^{VI}, 5, 5^{I}, 5^{II}, 5^{III}, 5^{IV}, 5^{V}, 5^{VI}) et
entre les transmissions (19, 19', 19^{II}, 19^{III}, 19^{IV}, 19^{V}, 21, 21^{I}, 21", 21^{III}, 211^{IV}, 21^{V}) logées au moyen de logements (14, 14', 14", 14^{III}, 14^{IV}, 127, 127', 129, 129'),
dans lequel chacun des logements (14, 14^{I}, 14", 14^{III}, 14^{IV}, 127, 127^{I}, 129, 129^{I}) est semblable à deux foyers (165, 167) d'une ellipse, dans lequel les foyers (165, 167) servent de points de construction autours desquels peuvent être construites des zones d'extrémité (123) en forme d'arc du logement (14, 14', 14^{II}, 14^{III}, 14^{IV}, 127, 127', 129, 129'),
dans lequel se déroule dans une zone d'un foyer (167) d'un logement (14, 14', 14^{II}, 14^{III}, 14^{IV}, 127, 127', 129, 129') l'un des arbres de rotation (16, 16', 16", 16^{III}, 18, 18', 18^{II}, 18^{III}) et dans une zone de l'autre foyer (165) se trouve l'une des sortie de transmission (27, 27', 91, 91', 91^{II}, 91^{III}, 91^{IV}, 91^{V}, 91^{VI}, 131, 131^{I}, 133, 133').

2. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon la revendication 1,
**caractérisé en ce que**
le logement (14, 14', 14", 14^{III}, 14^{IV}, 127, 127', 129, 129^{I}) de l'une des transmissions (19, 19^{I}, 19^{II}, 19^{III}, 19^{IV}, 19^{V}, 21, 21^{I}, 21^{II}, 21^{III}, 211^{IV}, 21^{V}) dépasse latéralement sur le côté frontal de moteur par-dessus un côté frontal de moteur (7, 8, 8', 9).

3. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
au moins l'un des logements (14, 14^{I}, 14^{II}, 14^{III}, 14^{IV}, 127, 127', 129, 129^{I}) est un logement (14, 14^{I}, 14^{II}, 14^{III}, 14^{IV}, 127, 127', 129, 129^{I}) plat et aménagé avec une paroi de logement extérieure (10, 10', 10", 10^{III}) avec deux zones d'extrémité (123) en forme d'arc de cercle
et/ou au moins une partie du bloc d'onduleurs (109, 109', 109^{II}) et/ou le dispositif de frein de stationnement (309) se trouve entre les parois de logement extérieure (10, 10', 10", 10^{III}) respectives, présentes dans une direction axiale, des transmissions (19, 19^{I}, 19^{II}, 19^{III}, 19^{IV}, 19^{V}, 21, 21^{I}, 21", 21^{III}, 211^{IV}, 21^{V}), détourné(e) du sol et ainsi au-dessus du plan constructif (101, 101', 101", 101^{III}, 101^{IV}).

4. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
le logement (14, 14', 14^{II}, 14^{III}, 14^{IV}, 127, 127', 129, 129') a un diamètre plus large à travers l'un des foyers (165) qu'un diamètre à travers l'autre foyer (167).

5. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
en amont dans la direction de sortie l'étage de transmission planétaire (71, 71', 71^{II}, 73, 73', 73", 349) est agencé avant l'étage de transmission à denture droite (72, 72", 72', 74, 74^{I}, 74", 351).

6. Bloc d'entraînement (1, 1', 1^{II}, 1^{III}, 1^{IV}, 1^{V}, 1^{VI}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
pour un montage dans un encombrement de véhicule automobile (239, 239^{I}, 241, 241', 241", 241^{III}, 241^{IV}, 251) parallélépipédique,
qui est délimité par des surfaces limites (243, 243^{I}, 243^{II}, 243^{III}, 244, 245, 245^{I}, 245", 245^{III}, 246, 253, 253', 253", 253^{III}, 255, 255', 255", 255^{III}) se situant à angle droit l'une par rapport à l'autre,
le bloc d'onduleurs (109, 109', 109^{II}) est orienté parallèlement à une surface limite (243, 243^{I}, 243^{II}, 243^{III}, 244, 245, 245^{I}, 245^{II}, 245^{III}, 246, 253, 253^{I}, 253^{II}, 253^{III}, 255, 255^{I}, 255", 255^{III}).

7. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
le plan constructif (101, 101^{I}, 101", 101^{III}, 101^{IV}) sépare une zone (102, 325) en-dessous et une zone (102^{I}, 327) au-dessus du plan constructif (101, 101^{I}, 101^{II}, 101^{III}, 101^{IV}), dans lequel le bloc d'onduleurs (109, 109^{I}, 109^{II}) est agencé dans la zone (102^{I}, 327) au-dessus du plan constructif (101, 101^{I}, 101^{II}, 101^{III}, 101^{IV}).

8. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
le bloc d'onduleurs (109, 109', 109") se trouve sur un premier côté (102, 102^{I}, 325, 327) du plan constructif (101, 101', 101", 101^{III}, 101^{IV}).

9. Bloc d'entraînement (1^{XIII}, 1^{XIV}, 1^{XV}, 1^{XVI}, 1^{XVII}) selon la revendication 8,
**caractérisé en ce que**
un frein de stationnement (317, 319) se trouve sur un second côté (327, 325, 102', 102) du plan constructif (101, 101^{I}, 101^{II}, 101^{III}, 101^{IV}) pour au moins un blocage de rotation et au moins l'un des onduleurs (111, 111', 113, 113') s'étend sur un côté éloigné du sol (102^{I}, 327) du plan constructif (101, 101^{I}, 101^{II}).

10. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
la première machine électrique (3, 3', 3", 3^{V}, 3^{VI}) présente une première largeur de machine électrique (145), en particulier un rayon de machine électrique (65, 65^{I}), et
la seconde machine électrique (5, 5^{I}, 5", 5^{III}, 5^{IV}, 5^{V}, 5^{VI}) présente une seconde largeur de machine électrique (147), en particulier un second rayon de machine électrique (67, 67^{I}),
dans lequel au moins un logement (14, 14', 14", 14^{III}, 14^{IV}, 127, 127', 129, 129^{I}) de l'une des transmissions (19, 19', 19", 19^{III}, 19^{IV}, 19^{V}, 21, 21^{I}, 21^{II}, 21^{III}, 21^{IV}, 21^{V}), de préférence les deux logements (14, 14^{I}, 14", 14^{III}, 14^{IV}, 127, 127^{I}, 129, 129^{I}) pour les deux transmissions (19, 19^{I}, 19", 19^{III}, 19^{IV}, 19^{V}, 21, 21', 21", 21^{III}, 211^{IV}, 21^{V}), fait saillie dans au moins une direction par-dessus la largeur de machine électrique (145, 147) de sa machine électrique (3, 3', 3", 3^{V}, 3^{VI}, 5, 5^{I}, 5^{II}, 5^{III}, 5^{IV}, 5^{V}, 5^{VI}).

11. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
au moins un onduleur (111, 111^{I}, 113, 113') est agencé dans un logement encapsulant (115, 115^{I}, 115", 117, 117', 117"), en particulier sous la forme d'un bloc décalé par rapport aux machines électriques (3, 3', 3^{II}, 3^{V}, 3^{VI}, 5, 5^{I}, 5^{II}, 5^{III}, 5^{IV}, 5^{V}, 5^{VI}).

12. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
au moins un onduleur (111, 111', 113, 113') se situe avec un petit côté (135) transversalement aux arbres de rotation (16, 16', 16^{II}, 16^{III}, 18, 18', 18^{II}, 18^{III}),
en particulier le petit côté (135) est un côté frontal vers lequel pointe une direction transversale de véhicule automobile (213).

13. Bloc d'entraînement (1^{XIII}, 1^{XIV}, 1^{XV}, 1^{XVI}, 1^{XVII}) selon l'une des revendications précédentes,
**caractérisé en ce que**
au moins un frein de stationnement (317, 319) clôture latéralement le bloc d'entraînement (1^{XIII}, 1^{XIV}, 1^{XV}, 1^{XVI}, 1^{XVII}).

14. Bloc d'entraînement (1^{VII}, 1^{XV}) selon l'une des revendications précédentes,
**caractérisé en ce que**
l'une des machines électriques (3^{VI}, 5^{III}, 5^{VI}) dans une situation de montage du bloc d'entraînement (1^{VII}, 1^{XV}) est positionnée plus haut que l'autre des machines électriques (3^{VI}), de sorte que les deux centres de rotation soient agencés en des emplacements différents par rapport à la direction de véhicule longitudinale.

15. Bloc d'entraînement (1, 1', 1^{II}, 1^{III}, 1^{IV}, 1^{V}, 1^{VI}, 1^{VII}, 1^{VIII}, 1^{IX}, 1^{X}, 1^{XI}, 1^{XII}, 1^{XIII}, 1^{XIV}, 1^{XV}, 1^{XVI}, 1^{XVII}) selon l'une des revendications précédentes,
**caractérisé en ce que**
le bloc d'onduleurs (109, 109^{I}, 109^{II}) est constitué de deux onduleurs (111, 111^{I}, 113, 113'),
dont respectivement un onduleur (111, 111', 113, 113^{I}) est conçu pour une alimentation électrique de l'une des deux machines électriques (3, 3', 3^{II}, 3^{V}, 3^{VI}, 5, 5^{I}, 5^{II}, 5^{III}, 5^{IV}, 5^{V}, 5^{VI}).
